# EUROPEAN PATENT APPLICATION

(11) **EP 4 697 734 A1**
(43) Date of publication of application: **18.02.2026**
(21) Application number: 24867274.3
(22) Date of filing: 30.08.2024
(51) Int. Cl.: H04N 23/50

(54) **CAMERA MODULE AND ELECTRONIC DEVICE**

(30) Priority: 18.09.2023 CN 202311203807
(71) Applicant: Huawei Technologies Co., Ltd., Shenzhen, Guangdong 518129 (CN)
(72) Inventor: HOU, Qing, Shenzhen, Guangdong 518129 (CN); LIU, Bin, Shenzhen, Guangdong 518129 (CN); LI, Dengfeng, Shenzhen, Guangdong 518129 (CN); ZHANG, Bailiang, Shenzhen, Guangdong 518129 (CN); WAN, Yulin, Shenzhen, Guangdong 518129 (CN)
(74) Representative: Pfenning, Meinig & Partner mbB
(86) International application number: PCT/CN2024/116098
(87) International publication number: WO 2025/060862

(57) **Abstract**

This application provides a camera module and an electronic device. The camera module includes a voice coil motor, a lens, a module circuit board, and an image sensor, where the voice coil motor includes a base, a driving mechanism, and a housing, the lens is mounted in the driving mechanism, the driving mechanism is connected to the base, both the base and the image sensor are disposed on the module circuit board, the image sensor is located on a light exit side of the lens, and the housing is fastened to the base and covers at least a part of the driving mechanism; the base includes a plastic piece and a metal piece, and the metal piece is fastened to the plastic piece; and the housing includes a metal portion, the metal portion is fastened to the metal piece, and the metal piece is electrically connected to a ground pin of the module circuit board. In one aspect, the housing in this application can no longer be entirely nickel-plated, and the housing no longer causes magnetic interference to a magnetic piece of the voice coil motor. In another aspect, the metal portion of the housing in this application can be grounded via the metal piece, and this can avoid radio frequency interference and electrostatic interference caused by another component of the electronic device to the camera module.

## Description

This application claims priority to Chinese Patent Application No.202311203807.0, filed with the China National Intellectual Property Administration on September 18, 2023, and entitled "CAMERA MODULE AND ELECTRONIC DEVICE", which is incorporated herein by reference in its entirety.

### TECHNICAL FIELD

This application relates to the field of camera technologies, and in particular, to a camera module and an electronic device.

### BACKGROUND

As a photographing function of a camera (camera) of a smartphone becomes increasingly powerful, major vendors impose a stricter requirement on imaging quality of a camera module. A conventional camera module includes a housing, a voice coil motor, and a module circuit board. The voice coil motor is disposed on the module circuit board and is configured to carry a lens. The housing is soldered to the module circuit board through tin soldering and covers the voice coil motor. However, to ensure that the housing can be tinned in a soldering process, a surface of the housing needs to be nickel-electroplated. Due to high costs of local nickel-plating of the housing, the entire surface of the housing is nickel-plated. As a result, due to a weak magnetic property of a nickel layer, the nickel layer and a magnet inside the voice coil motor attract each other, resulting in magnetic interference.

### SUMMARY

An objective of embodiments of this application is to provide a camera module and an electronic device, so that a housing of the camera module does not easily cause magnetic interference to a magnetic piece of a voice coil motor, and the camera module can obtain better photographing experience.

According to a first aspect, this application provides a camera module. The camera module includes a voice coil motor, a lens, a module circuit board, and an image sensor, where
the voice coil motor includes a base, a driving mechanism, and a housing, the lens is mounted in the driving mechanism, the driving mechanism is connected to the base, both the base and the image sensor are disposed on the module circuit board, the image sensor is located on a light exit side of the lens, and the housing is fastened to the base and covers at least a part of the driving mechanism;
the base includes a plastic piece and a metal piece, and the metal piece is fastened to the plastic piece; and the housing includes a metal portion, the metal portion is fastened to the metal piece, and the metal piece is electrically connected to a ground pin of the module circuit board.

It may be understood that the metal piece can be used to improve strength of the plastic piece by fastening the metal piece to the plastic piece. In this case, the base formed by the plastic piece and the metal piece has high overall strength.

In an implementation, the housing may be directly fastened to the module circuit board through tin soldering. In a tin soldering technique, a surface of the housing needs to be nickel-plated, to ensure that the housing can be tinned in the soldering process, and therefore ensure reliability of a connecting the housing to the module circuit board. Due to high costs of nickel-plating of a local region of the housing, the entire housing is generally directly nickel-plated, to reduce the costs. However, after the housing is nickel-plated, nickel causes magnetic interference to a magnetic piece of a voice coil motor. This affects operation of the voice coil motor. However, in this implementation, the metal piece is fastened to the plastic piece, and the metal piece is fastened to the metal portion of the housing. In this case, the housing may not be entirely nickel-plated. The housing no longer causes magnetic interference to the magnetic piece of the voice coil motor, and does not increase costs due to nickel plating.

In an implementation, the housing may be directly fastened to the module circuit board through tin soldering. It may be understood that it is difficult to assemble the housing and the module circuit board due to a small area of a pin terminal of the module circuit board. However, in this implementation, the metal piece is fastened to the plastic piece, and the metal piece is fastened to the metal portion of the housing. In this case, a size of the metal piece may be set to be large enough based on a requirement, to ensure that the housing can be conveniently fastened to the metal piece, and resolve a problem that the housing is not easily fastened due to the small area of the pin terminal of the module circuit board.

It may be understood that the metal piece is electrically connected to the ground pin of the module circuit board. In this case, the metal portion of the housing is fastened to the metal piece. In this way, the metal portion of the housing may be connected to the ground pin of the module circuit board via the metal piece. In this case, the metal portion of the housing is grounded. In this way, when the camera module is used in an electronic device, the housing being grounded can avoid radio frequency interference and electrostatic interference caused by another component of the electronic device to the camera module.

It may be understood that the metal piece of the base in this implementation is "multifunctional". In one aspect, the metal piece can be used to improve the overall strength of the base and avoid damage to the base. In another aspect, the metal piece can be fastened to the metal portion of the housing, to replace a solution in which the housing is directly fastened to the module circuit board through tin soldering. In this case, the housing may not be entirely nickel-plated. The housing no longer causes magnetic interference to the magnetic piece of the voice coil motor, and does not increase costs due to nickel plating. In still another aspect, the metal piece can be used as a transition mechanical part of the metal portion of the housing to connect to the ground pin of the module circuit board.

In some possible implementations, the metal portion is fastened to the metal piece through laser welding.

It may be understood that in an implementation, the housing may be directly fastened to the module circuit board through tin soldering. In a tin soldering technique, a surface of the housing needs to be nickel-plated, to ensure that the housing can be tinned in a soldering process, and therefore ensure reliability of connecting the housing to the module circuit board. Due to high costs of nickel-plating of a local region of the housing, the entire housing is generally directly nickel-plated, to reduce the costs. However, after the housing is nickel-plated, nickel causes magnetic interference to a magnetic piece of a voice coil motor. This affects operation of the voice coil motor. However, in this implementation, the metal piece is fastened to the plastic piece, and the metal piece is fastened to the metal portion of the housing. In this case, the housing may not be entirely nickel-plated. The housing no longer causes magnetic interference to the magnetic piece of the voice coil motor, and does not increase costs due to nickel plating.

In some possible implementations, the housing includes a top plate and a side frame, and the side frame is connected to a periphery of the top plate; and a surface, away from the top plate, of the side frame is protrusively provided with a bump, and the bump forms at least a part of the metal portion.

In some possible implementations, the metal piece includes a fastening region and a first connection region, and the first connection region is connected to a periphery of the fastening region; and the fastening region is fastened to the plastic piece, the first connection region extends out relative to a side surface of the plastic piece, and the first connection region is fastened to the bump through laser welding.

It may be understood that the first connection region is disposed to extend out relative to the side surface of the plastic piece, so that the first connection region can be conveniently fastened to the bump, that is, reduce difficulty of assembling the first connection region and the bump.

In some possible implementations, the metal piece further includes a second connection region, the second connection region is connected to the periphery of the fastening region and is spaced apart from the first connection region, and the second connection region is exposed relative to the side surface of the plastic piece; and the second connection region is fastened to the ground pin of the module circuit board through tin soldering.

It may be understood that the second connection region is exposed relative to the side surface of the plastic piece, so that the second connection region is conveniently fastened to the ground pin of the module circuit board, that is, reduce difficulty of assembling the second connection region and the ground pin of the module circuit board.

In some possible implementations, the second connection region bends in a direction away from the module circuit board, and is fastened to the side surface of the plastic piece. In this way, an area exposed by the second connection region relative to the side surface of the plastic piece is larger. This facilitates the second connection region of the metal piece to be fastened to the ground pin of the module circuit board, that is, the connection is more stable and more secure.

In some possible implementations, the voice coil motor further includes a damper, and a material of the damper is an insulation material; and the damper is connected to an inner surface of the housing, and the damper is disposed opposite to the driving mechanism.

It may be understood that in an implementation, black paint is coated on the inner surface of the housing, to avoid a short circuit caused by contact between a wiring of the voice coil motor and the housing. In addition, the damper is attached to the driving mechanism of the voice coil motor, to avoid damage caused by impact, on the housing, of the driving mechanism during movement. It may be understood that a solution of coating the black paint and attaching the damper may improve costs of the camera module to a large extent. However, in this implementation, the damper is fastened to the inner surface of the housing, and the material of the damper is the insulation material. In this way, the damper on the housing can not only be used to avoid the short circuit caused by contact between the wiring of the voice coil motor and the housing, but also be used to avoid the damage caused by the impact, on the housing, of the driving mechanism during movement. The housing is "multifunctional". In addition, this implementation can also be used to substantially reduce costs of coating the black paint, and therefore reduce costs of the camera module to a large extent.

In some possible implementations, the damper and the housing form an integrated structure by using an injection molding technique. In this way, the damper and the housing are connected more stably and reliably.

In some possible implementations, the camera module includes an electronic component, and the electronic component is fastened to the module circuit board and is electrically connected to the module circuit board; and at least a part of the metal piece is exposed relative to a bottom surface of the plastic piece and is fastened to the module circuit board, and a part of the metal piece surrounds the electronic component.

It may be understood that the part of the metal piece of the base is disposed to surround the electronic component, so that, when the camera module swings or is impacted, deformation of a position that is in the module circuit board and that is fastened to the electronic component can be avoided. This can avoid a risk of a solder joint fracture between the module circuit board and the base, and improve reliability of the camera module. Therefore, the metal piece of the base in this implementation not only has a plurality of functions mentioned above, but also has a function of improving reliability of the camera module. In addition, the electronic component and the metal piece of the base have an overlapping region in an optical axis direction of the camera module. This can reduce the height of the camera module.

In some possible implementations, the electronic component includes a drive chip, the drive chip is electrically connected to the voice coil motor via the module circuit board, and the drive chip is configured to perform an operation on image stabilization data and/or focusing data of the voice coil motor, and/or control a current condition.

In some possible implementations, the plastic piece is provided with an accommodating groove, an opening of the accommodating groove is located on the bottom surface of the plastic piece, and at least a part of the electronic component is located in the accommodating groove. It may be understood that in the optical axis direction of the camera module, the electronic component and the plastic piece of the base have an overlapping region. This can further reduce the height of the camera module.

In some possible implementations, the driving mechanism includes an image stabilization bracket, a first image stabilization coil, a first image stabilization magnetic piece, a second image stabilization coil, and a second image stabilization magnetic piece;
the first image stabilization magnetic piece and the second image stabilization magnetic piece are spaced apart and fastened to the image stabilization bracket;
the image stabilization bracket is movably connected to the plastic piece, the first image stabilization coil and the second image stabilization coil are spaced apart and fastened to the plastic piece, the first image stabilization coil is disposed facing the first image stabilization magnetic piece and configured to drive the image stabilization bracket to move relative to the base in a first direction, the second image stabilization coil is disposed facing the second image stabilization magnetic piece and configured to drive the image stabilization bracket to move relative to the base in a second direction, and the second direction intersects the first direction; and
the driving mechanism further includes a focusing bracket, a focusing magnetic piece, and a focusing coil, the focusing bracket is located in an inner side of the image stabilization bracket, the focusing magnetic piece is fastened to the focusing bracket, the focusing coil is fastened to the image stabilization bracket, is disposed facing the focusing magnetic piece, and is configured to drive the focusing bracket to move relative to the image stabilization bracket in a third direction, and the third direction intersects both the second direction and the first direction.

It may be understood that in a process in which the image stabilization bracket moves relative to the base in the first direction Y, a movement direction of the image stabilization bracket is perpendicular to a magnetic gap between the first image stabilization magnetic piece and the first image stabilization coil, and the magnetic gap is not affected by a movement action of the image stabilization bracket. Therefore, a problem that a driving force rapidly decreases due to an increase in the magnetic gap can be avoided, to ensure that the voice coil motor has a large and stable image stabilization driving force. This facilitates a large-stroke design for an optical image stabilization function of the voice coil motor.

It may be understood that in a process in which the image stabilization bracket moves relative to the base in the second direction X, a movement direction of the image stabilization bracket is perpendicular to a magnetic gap between the second image stabilization magnetic piece and the second image stabilization coil, and the magnetic gap is not affected by a movement action of the image stabilization bracket. Therefore, a problem that a driving force rapidly decreases due to an increase in the magnetic gap can be avoided, to ensure that the voice coil motor has a large and stable image stabilization driving force. This facilitates a large-stroke design for an optical image stabilization function of the voice coil motor.

It may be understood that in some solutions, the image stabilization bracket is located in the inner side of the focusing bracket. In this case, when the camera module needs to focus, the focusing bracket needs to drive the image stabilization bracket and the lens to move in the third direction. In this way, a rotor formed by the focusing bracket, the image stabilization bracket, and the lens has a heavy weight. Consequently, a focusing drive assembly needs to increase a driving force by increasing a volume. Therefore, such a setting is not conducive to a light-weight and miniaturized design of the voice coil motor. However, in this embodiment, the focusing bracket is disposed in the inner side of the image stabilization bracket. In this case, when the camera module needs to focus, the focusing bracket needs to drive the lens to move in the third direction Z. In this way, in this implementation, the image stabilization bracket can be omitted from a rotor in a focusing process, that is, a rotor formed by the focusing bracket and the lens has a light weight. This facilitates a miniaturized setting of the focusing drive assembly. The voice coil motor in this implementation can implement a light-weight and miniaturized setting.

It may be understood that in the solution in which the image stabilization bracket is located in the inner side of the focusing bracket, at least two image stabilization driving assemblies in the image stabilization bracket need to be used to push the image stabilization bracket to move on an X-Y plane. In this way, at least two sets of wires need to be arranged in the voice coil motor to provide a signal and supply power for the image stabilization driving assemblies, and the at least two sets of wires need to pass through the focusing bracket. Therefore, a power-on configuration in this solution is complex, and difficulty in disposing the voice coil motor is increased. However, in this embodiment, the focusing bracket is disposed in the inner side of the image stabilization bracket. Because one set of focusing driving assemblies needs to be used in the focusing bracket to push the focusing bracket to move in the third direction Z, one set of wires needs to be used in the voice coil motor to provide a signal and supply power for the focusing drive assembly, that is, one set of wires needs to pass through the image stabilization bracket. Therefore, a power-on solution in the solution in this implementation is easy, and difficulty in disposing the voice coil motor can be reduced to a large extent.

In some possible implementations, a plane (namely, a winding plane) wound by a conducting wire of the focusing coil may be parallel to the third direction Z. In this case, the focusing coil is arranged vertically, so that the focusing coil can occupy a small area on the X-Y plane. This facilitates a miniaturized setting of the voice coil motor. The focusing magnetic piece may include two opposite polarity directions, and the two polarity directions are perpendicular to the third direction Z. In this case, the focusing magnetic piece may be arranged vertically, to reduce a space occupied by the focusing magnetic piece on the X-Y plane. This facilitates the miniaturized design of the voice coil motor.

It may be understood that both the focusing drive assembly and the image stabilization driving assembly of the voice coil motor are of a moving-magnet design, and driving of the voice coil motor in the first direction Y, the second direction X, and the third direction Z is separately controlled by a group of driving pieces (including a coil and a magnetic piece). In a process in which the focusing bracket of the voice coil motor moves relative to the image stabilization bracket in the third direction Z to perform autofocus, relative positions between the image stabilization bracket and the base are not affected, and a magnetic gap width of the image stabilization driving assembly does not easily change. Similarly, in a process in which the image stabilization bracket moves relative to the base in the first direction Y and/or the second direction X to perform optical image stabilization, the focusing bracket moves with the image stabilization bracket, relative positions between the focusing bracket and the image stabilization bracket are not affected, and a magnetic gap width of the focusing drive assembly does not easily change. Therefore, the focusing drive assembly and the image stabilization driving assembly of the voice coil motor are decoupled, and do not interfere with each other during movement. This helps ensure driving precision of the voice coil motor.

In some possible implementations, all of the first image stabilization coil, the first image stabilization magnetic piece, the second image stabilization coil, and the second image stabilization magnetic piece of the voice coil motor may be approximately arranged on the X-Y plane, and a movement stroke of the image stabilization bracket in the first direction Y and/or a movement stroke of the image stabilization bracket in the second direction X may be increased by increasing the widths of magnetic pieces (namely, a size of the first image stabilization magnetic piece in the first direction Y and a size of the second image stabilization magnetic piece in the second direction X). This helps implement the large-stroke design for optical image stabilization without increasing the height of the voice coil motor. In addition, resistance to movement of the voice coil motor during optical image stabilization is mainly sliding friction between a support piece and a fitted mechanical part, and is irrelevant to the movement stroke. Therefore, the resistance does not significantly increase during large-stroke optical image stabilization, so that the large-stroke design for optical image stabilization can be implemented without greatly increasing the driving force.

In some possible implementations, the driving mechanism further includes a guide bracket, and the guide bracket is L-shaped;
the guide bracket includes a first support portion, a first connection portion, a second support portion, a second connection portion, and a third support portion that are sequentially connected, the first support portion, the second support portion, and the third support portion are connected to the plastic piece via a plurality of first support pieces and are connected to the image stabilization bracket via a plurality of second support pieces, so that a direction of relative movement between the image stabilization bracket and the guide bracket is different from a direction of relative movement between the guide bracket and the base; and materials of the first connection portion and the second connection portion are metal materials.

It may be understood that compared with that in a solution in which a plastic is formed on a metal frame through plastic injection as a whole, and a part of the metal frame and the plastic on the metal frame form the first connection portion and the second connection portion, the first connection portion and the second connection portion in this implementation include only a metal frame, that is, do not include a plastic formed through plastic injection. In this case, the first connection portion and the second connection portion do not have a problem that the metal frame is pulled and deformed due to cooling and shrinking of the plastic. This further avoids a problem that dimension precision is reduced due to deformation of the guide bracket.

It may be understood that compared with a guide bracket of a frame structure, the L-shaped guide bracket has an obviously smaller volume, and can save spaces on both sides. This facilitates miniaturization of the voice coil motor and the camera module. In addition, the three support portions (namely, the first support portion, the second support portion, and the third support portion) of the guide bracket are disposed corresponding to three corner portions of the image stabilization bracket, the first image stabilization magnetic piece and the first image stabilization coil are located between the first support portion and the second support portion, and the second image stabilization magnetic piece and the second image stabilization coil are located between the second support portion and the third support portion. Therefore, the guide bracket can be used to ensure, when the volume is reduced, reliability of connecting the image stabilization bracket to the base, and implement stable supporting and accurate guiding, to ensure stability of relative positions between the first image stabilization magnetic piece and the first image stabilization coil and stability of relative positions between the second image stabilization magnetic piece and the second image stabilization coil. In this way, optical image stabilization movement of the voice coil motor is stable and reliable.

In some possible implementations, the guide bracket includes the metal frame, a first plastic block, a second plastic block, and a third plastic block; the metal frame is L-shaped, the metal frame includes a first long strip segment and a second long strip segment, and a second end portion of the first long strip segment is connected to a first end portion of the second long strip segment; the first plastic block wraps a first end portion of the first long strip segment, the second plastic block wraps the second end portion of the first long strip segment and the first end portion of the second long strip segment, and the third plastic block wraps a second end portion of the second long strip segment; and
the first end portion of the first long strip segment of the metal frame and the first plastic block form the first support portion of the guide bracket, the second end portion of the first long strip segment and the first end portion of the second long strip segment of the metal frame, and the second plastic block form the second support portion of the guide bracket, the second end portion of the second long strip segment of the metal frame and the third plastic block form the third support portion of the guide bracket, a middle portion of the first long strip segment of the metal frame forms the first connection portion of the guide bracket, and a middle portion of the second long strip segment of the metal frame forms the second connection portion of the guide bracket.

It may be understood that a structure of the guide bracket in this implementation is simple.

In some possible implementations, the image stabilization bracket includes an insulation body and a metal insert, and the metal insert is embedded in the insulation body; and the metal insert is grounded.

It may be understood that in one aspect, the metal insert is embedded in the insulation body. In this way, the metal insert can improve strength of the insulation body. In this case, overall strength of the image stabilization bracket formed by the insulation body and the metal insert is improved. In another aspect, the metal insert is grounded, so that the metal insert does not easily cause interference to a radio frequency signal of the camera module.

In some possible implementations, the driving mechanism includes a focusing circuit board and a focusing drive chip, the focusing coil and the focusing drive chip are fastened to the focusing circuit board, and the focusing circuit board is fastened to the image stabilization bracket;
the image stabilization bracket includes a first conductive member, the first conductive member is embedded in the insulation body, and the first conductive member is electrically connected to a negative electrode of a power supply of the focusing drive chip via the focusing circuit board; and the metal insert is electrically connected to the first conductive member.

It may be understood that the metal insert may be directly grounded via the first conductive member of the image stabilization bracket. The metal insert may be grounded by reusing the first conductive member of the image stabilization bracket, that is, the metal insert may be grounded without adding of an additional component. A manner of grounding the metal insert in this implementation is simple, and a component usage is high, that is, the first conductive member of the image stabilization bracket is "multifunctional".

In some possible implementations, a surface of the metal insert is protrusively provided with a protrusion block, the first conductive member is provided with a recess region, and the protrusion block is located in the recess region and contacts a wall surface of the recess region. It may be understood that a manner of electrical connection between the metal insert and the first conductive member in this implementation is simple.

In some possible implementations, the protrusion block is riveted in the recess region. In this way, the metal insert is connected to the first conductive member more reliable and secure. In this case, the manner of the electrical connection between the metal insert and the first conductive member is more reliable.

In some possible implementations, the image stabilization bracket further includes a second conductive member, the second conductive member is embedded in the insulation body, and the second conductive member is electrically connected to a positive electrode of the power supply of the focusing drive chip via the focusing circuit board; the image stabilization bracket is provided with a first communication hole, the first communication hole communicates with the interior and the exterior of the image stabilization bracket, and a first end portion of the first conductive member and a first end portion of the second conductive member extend into the first communication hole; and
a hole wall of the first communication hole is provided with a first isolation groove, and the first isolation groove is located between the first end portion of the first conductive member and the first end portion of the second conductive member.

It may be understood that the first isolation groove is disposed between the first end portion of the first conductive member and the first end portion of the second conductive member, and the first isolation groove may be configured to avoid, when the image stabilization bracket is carbonized at a high temperature, a micro short circuit caused by a short distance that is set between the first end portion of the first conductive member and the first end portion of the second conductive member. Therefore, in this implementation, the distance between the first end portion of the first conductive member and the first end portion of the second conductive member can be set to be short. In this way, a size of the first communication hole can be set to be small. The first communication hole occupies a small space of the image stabilization bracket, that is, the image stabilization bracket can release more spaces to arrange another component of the voice coil motor.

In some possible implementations, the image stabilization bracket further includes a third conductive member and a fourth conductive member, both the third conductive member and the fourth conductive member are embedded in the insulation body, and the third conductive member is electrically connected to an SDA end of an I2C signal of the focusing drive chip via the focusing circuit board; the fourth conductive member is electrically connected to an SCL end of the I2C signal of the focusing drive chip via the focusing circuit board, the image stabilization bracket is provided with a second communication hole, the second communication hole communicates with the interior and the exterior of the image stabilization bracket, and is spaced apart from the first communication hole, and a first end portion of the third conductive member and a first end portion of the fourth conductive member extend into the second communication hole; and
a hole wall of the second communication hole is provided with a second isolation groove, and the second isolation groove is located between the first end portion of the third conductive member and the first end portion of the fourth conductive member.

It may be understood that the second isolation groove is disposed between the first end portion of the third conductive member and the first end portion of the fourth conductive member, and the second isolation groove may be configured to avoid, when the image stabilization bracket is carbonized at a high temperature, a micro short circuit caused by a short distance that is set between the first end portion of the third conductive member and the first end portion of the fourth conductive member. Therefore, in this implementation, the distance between the first end portion of the third conductive member and the first end portion of the fourth conductive member can be set to be short. In this way, a size of the second communication hole can be set to be small. The second communication hole occupies a small space of the image stabilization bracket, that is, the image stabilization bracket can release more spaces to arrange another component of the voice coil motor.

In some possible implementations, the metal insert is made of a magnetic conductive material, and both the first image stabilization magnetic piece and the second image stabilization magnetic piece are disposed opposite to the metal insert.

It may be understood that the metal insert may be configured to increase magnetic field strength of the first image stabilization magnetic piece and the second image stabilization magnetic piece. In addition, the metal insert may attract the first image stabilization magnetic piece and the second image stabilization magnetic piece, to prevent the first image stabilization magnetic piece and the second image stabilization magnetic piece from being detached from the image stabilization bracket.

In some possible implementations, the image stabilization bracket is connected to the focusing bracket via a plurality of third support pieces; and
the third support piece includes a shaft body and a protrusion, the protrusion is protrusively disposed on a first end face of the shaft body, a part of a circumferential side surface of the shaft body is fastened to the image stabilization bracket, and the protrusion is inserted into a fastening hole of the image stabilization bracket.

It may be understood that the protrusion of the third support piece is inserted into the fastening hole of the image stabilization bracket, so that the third support piece and the image stabilization bracket are connected more stably, that is, the third support piece is prevented, to a large extent, from tilting relative to the image stabilization bracket.

In some possible implementations, the module circuit board is provided with a first avoidance space, and an opening of the first avoidance space is located on a surface, facing the base, of the module circuit board;
the image stabilization bracket includes a fastening portion, and the fastening hole is located on the fastening portion; and
the metal piece includes a sinking portion, the sinking portion is disposed opposite to the fastening portion, the sinking portion sinks towards the first avoidance space and is located in the first avoidance space, the sinking portion encloses a second avoidance space, and at least a part of the fastening portion is located in the second avoidance space.

It may be understood that in this implementation, the module circuit board is provided with the first avoidance space, so that the sinking portion can sink towards the first avoidance space and is located in the first avoidance space, and the sinking portion can enclose the second avoidance space. In this case, the fastening portion that is of the image stabilization bracket and that is fastened to one end of the third support piece is disposed in the second avoidance space, so that a space can be reserved between the module circuit board and the third support piece. The reserved space can be used to increase a length of the third support piece. In this way, in this implementation, overall strength of the base can be improved via the metal piece, and the length of the third support piece can be increased to a large extent without occupying the space between the module circuit board and the third support piece, so that stability of the focusing bracket can be improved to a large extent via the third support piece with a long length, that is, the focusing bracket is not easily tipped over.

In some possible implementations, the camera module includes a first sub-spring and a second sub-spring, and both the first sub-spring and the second sub-spring connect the image stabilization bracket to the focusing bracket;
the first sub-spring and the second sub-spring are located on a same side of the focusing bracket and are disposed adjacently; and
a part of the first sub-spring is recessed in a direction away from the second sub-spring, to form a first recess region, a part of the second sub-spring is recessed in a direction away from the first sub-spring, to form a second recess region, and the first recess region and the second recess region enclose a first adhesive dispensing space, and the first adhesive dispensing space is provided with a first adhesive material.

It may be understood that the first sub-spring and the second sub-spring are connected via the first adhesive material, so that the first sub-spring and the second sub-spring do not easily shake. This improves stability of connecting the first sub-spring and the second sub-spring. In addition, compared with the adhesive dispensing space enclosed by the first sub-spring and the second sub-spring in parallel, the adhesive dispensing space in this implementation has a larger volume. In this way, in an adhesive dispensing process, an adhesive does not easily overflow to a side, away from the second sub-spring, of the first sub-spring. In this case, in a focusing process of the focusing bracket, the first adhesive material is not prone to delamination due to impact with the focusing bracket. In this implementation, stability and reliability of connecting the first sub-spring and the second sub-spring are better. Certainly, in the adhesive dispensing process, the adhesive does not easily overflow to a side, away from the first sub-spring, of the second sub-spring. In this case, in an image stabilization process of the image stabilization bracket, the first adhesive material is not prone to delamination due to impact with the image stabilization bracket. In this implementation, stability and reliability of connecting the first sub-spring and the second sub-spring are better.

In some possible implementations, the voice coil motor further includes a stopper bracket, the stopper bracket includes a top plate member and a side frame, the side frame is connected to a periphery of the top plate member, the top plate member is fastened to the top surface of the image stabilization bracket, the side frame is fastened to a side surface of the image stabilization bracket, and the image stabilization bracket fits with the top plate member of the stopper bracket, to limit a movement stroke of the focusing bracket in the third direction;
the side frame includes a first side edge portion and a second side edge portion, the second side edge portion is connected to the first side edge portion, and the first side edge portion and the second side edge portion are respectively fastened on side surfaces of two adjacent side portions of the image stabilization bracket;
the top plate member is provided with a positioning hole, the first side edge portion is provided with a first mounting hole, and the second side edge portion is provided with a second mounting hole;
the side surfaces of the two adjacent side portions of the image stabilization bracket are respectively protrusively provided with a first mounting block and a second mounting block, the top surface of the image stabilization bracket is protrusively provided with a positioning block, the first mounting block is located in the first mounting hole, the second mounting block is located in the second mounting hole, and the positioning block is inserted into the positioning hole;
in the second direction, a size of the first mounting hole is greater than a size of the first mounting block and a size of the second mounting block, and in the third direction, a size of the first mounting hole is greater than a size of the first mounting block and a size of the positioning block; and
in the third direction, a size of the second mounting hole is greater than a size of the second mounting block and a size of the positioning block.

It may be understood that in an implementation, the first mounting block of the image stabilization bracket is disposed to tightly fit with the first mounting hole of the stopper bracket, and the second mounting block of the image stabilization bracket is disposed to tightly fit with the second mounting hole of the stopper bracket, so that the stopper bracket is stably connected to the image stabilization bracket. In this implementation, in an assembling process of the stopper bracket and the image stabilization bracket, to ensure that the first mounting block of the image stabilization bracket can be tightly fitted with the first mounting hole of the stopper bracket, and the second mounting block of the image stabilization bracket can be tightly fitted with the second mounting hole of the stopper bracket, the stopper bracket needs to be assembled to the image stabilization bracket from the top of the image stabilization bracket in the third direction Z. In this case, in the assembling process, the first side edge portion of the stopper bracket easily pushes against the first mounting block of the image stabilization bracket, and the second side edge portion of the stopper bracket easily pushes against the second mounting block of the image stabilization bracket. In one aspect, difficulty in assembling the stopper bracket and the image stabilization bracket is increased, and in another aspect, the stopper bracket is easily deformed due to extrusion, and there is a risk that the stopper bracket cannot be restored after being deformed. Even if the stopper bracket is assembled on the image stabilization bracket, it is difficult to position the stopper bracket, and this is not conducive to a subsequent welding operation. In this implementation, in the second direction, a size of the first mounting hole is set to be greater than the size of the first mounting block and the size of the second mounting block, in the third direction, the size of the first mounting hole is greater than the size of the first mounting block and the size of the positioning block, and in the third direction, the size of the second mounting hole is greater than the size of the second mounting block and the size of the positioning block. Therefore, in the assembling process of the stopper bracket and the image stabilization bracket, the stopper bracket may be first moved relative to the image stabilization bracket in the second direction X, so that the first mounting block is assembled into the first mounting hole. Then, the stopper bracket is moved relative to the image stabilization bracket in the first direction Y, so that the second mounting block is assembled into the second mounting hole. Then, the stopper bracket is moved relative to the image stabilization bracket in the third direction Z, so that the positioning block is inserted into the positioning hole. Finally, the first mounting hole and the second mounting hole may be filled with adhesives, so that the first mounting block is connected to the hole walls of the first mounting hole through adhesive bonding, and the second mounting block is connected to the hole walls of the second mounting hole through adhesive bonding. Therefore, the stopper bracket can be stably connected to the image stabilization bracket. It may be understood that in the assembling process of the stopper bracket and the image stabilization bracket in this implementation, the stopper bracket is prevented from deforming due to extrusion.

In some possible implementations, the camera module further includes a variable aperture, and the variable aperture is located on a side of the lens. The variable aperture has an aperture hole, and a size of the aperture hole is automatically adjustable. Light may enter the lens through the aperture hole of the variable aperture. The variable aperture is configured to adjust an amount of entering light, so that the camera module can maintain constant image shooting quality under a plurality of luminance conditions.

According to a second aspect, an implementation of this application further provides an electronic device, including a device housing and the camera module according to any one of the foregoing implementations. The camera module is disposed in the device housing. The electronic device has better photographing experience.

### BRIEF DESCRIPTION OF DRAWINGS

To describe the technical solutions in embodiments of this application or in the background more clearly, the following describes the accompanying drawings for describing embodiments of this application or the background.
FIG. 1 is a diagram of a structure of an electronic device according to an embodiment of this application;
FIG. 2 is a diagram of a partial cross section of the electronic device shown in FIG. 1 that is cut along A-A according to some embodiments;
FIG. 3 is a diagram of a structure of a camera module shown in FIG. 1 according to some embodiments;
FIG. 4 is a partial exploded diagram of the camera module shown in FIG. 3 according to some embodiments;
FIG. 5 is diagram of a partial cross section of the camera module shown in FIG. 3 that is cut along B-B in some embodiments;
FIG. 6 is a partial exploded diagram of a voice coil motor shown in FIG. 4 in some embodiments;
FIG. 7 is a partial exploded diagram of a base shown in FIG. 6 in some embodiments;
FIG. 8 is a diagram of a structure of the base shown in FIG. 6 at another angle;
FIG. 9 is a diagram of a structure of the camera module shown in FIG. 3 according to some embodiments;
FIG. 10 is a diagram of a structure of a housing shown in FIG. 6 at another angle;
FIG. 11 is a diagram of the structure of the housing shown in FIG. 6 at another angle;
FIG. 12 is a diagram of a partial structure of the camera module shown in FIG. 3 in some embodiments;
FIG. 13 is diagram of a partial cross section of the camera module shown in FIG. 3 that is cut along C-C in some embodiments;
FIG. 14 is a diagram of a structure of the base shown in FIG. 6 in an implementation;
FIG. 15 is a partial exploded diagram of a driving mechanism shown in FIG. 6 in some embodiments;
FIG. 16 is a diagram 1 of a partial structure of the voice coil motor shown in FIG. 6 in an implementation;
FIG. 17 is a diagram of a structure of a guide bracket shown in FIG. 15 in an implementation;
FIG. 18 is a diagram of the structure of the guide bracket shown in FIG. 17 at another angle;
FIG. 19 is an exploded diagram of the guide bracket shown in FIG. 17 in an implementation;
FIG. 20 is a diagram 2 of a partial structure of the voice coil motor shown in FIG. 6 in an implementation;
FIG. 21 is a partial exploded diagram of an image stabilization bracket shown in FIG. 15 in an implementation;
FIG. 22 is a diagram of a structure of the image stabilization bracket shown in FIG. 15 at another angle;
FIG. 23 is a diagram of a partial structure of the image stabilization bracket shown in FIG. 15 in an implementation;
FIG. 24 is a diagram 3 of a partial structure of the voice coil motor shown in FIG. 6 in an implementation;
FIG. 25 is a diagram of a structure of a third support piece shown in FIG. 15 at another angle;
FIG. 26 is a diagram of an assembling structure of a circuit board assembly and a focusing coil shown in FIG. 15;
FIG. 27 is a diagram of a structure of a part of the voice coil motor shown in FIG. 26 at another angle;
FIG. 28 is a diagram 4 of a partial structure of the voice coil motor shown in FIG. 6 in an implementation;
FIG. 29 is a partial sectional diagram of an embodiment of a part of the voice coil motor shown in FIG. 28 at D-D;
FIG. 30 is a partial sectional diagram of an embodiment of a part of the voice coil motor shown in FIG. 28 at E-E;
FIG. 31 is a diagram of structures of a focusing bracket and a focusing magnetic conductive piece shown in FIG. 15 at another angle;
FIG. 32 is a diagram 5 of a partial structure of the voice coil motor shown in FIG. 6 in an implementation;
FIG. 33 is a diagram 6 of a partial structure of the voice coil motor shown in FIG. 6 in an implementation;
FIG. 34 is a partial sectional diagram of an embodiment of a part of the voice coil motor shown in FIG. 33 at F-F;
FIG. 35 is a partial exploded diagram of the voice coil motor shown in FIG. 6 in an implementation;
FIG. 36 is a diagram 7 of a partial structure of the voice coil motor shown in FIG. 6 in an implementation;
FIG. 37 is a partial sectional diagram of the camera module shown in FIG. 3 in an implementation;
FIG. 38 is a diagram of a partial structure of the driving mechanism shown in FIG. 6 in an implementation;
FIG. 39 is a diagram of a partial structure of a part of the driving mechanism shown in FIG. 38 at another angle;
FIG. 40 is a diagram of a partial structure of the driving mechanism shown in FIG. 39 in an implementation;
FIG. 41 is a diagram of a partial structure of a part of the driving mechanism shown in FIG. 38 at another angle;
FIG. 42 is a diagram of a partial structure of the camera module shown in FIG. 3 in some implementations; and
FIG. 43 is a diagram of a partial structure of the camera module shown in FIG. 3 in some implementations.

### DESCRIPTION OF EMBODIMENTS

The following describes embodiments of this application with reference to the accompanying drawings in embodiments of this application.

In the descriptions of embodiments of this application, it should be noted that terms "mounting" and "connection" should be understood in a broad sense unless there is a clear stipulation and limitation. For example, "connection" may be a detachable connection, a non-detachable connection, a direct connection, or an indirect connection through an intermediate medium. "Fastening" means that two parts are connected to each other and a relative position relationship remains unchanged after the two parts are connected. A "slidable connection" means that two parts are connected to each other and can slide relative to each other after the two parts are connected to each other. Direction terms mentioned in embodiments of this application, for example, "top", "bottom", "upper", "lower", "inner", and "outer" are directions with reference to the accompanying drawings. Therefore, the direction term is used to better and more clearly describe and understand embodiments of this application, and is not used to indicate or imply that an indicated apparatus or element needs to have a specific direction or be constructed and operated in a specific direction. Therefore, the direction term cannot be understood as a limitation on embodiments of this application. "A plurality of" means at least two. A and/or B include three solutions, which are specifically a solution A, a solution B, and a solution AB. An "electrical connection" means that an electrical signal may be conducted between each other. In addition, obtaining an integrated structure of two components by using an integral forming technique means that, in a process of forming one of the two components, the component is connected to the other component, and the two components do not need to be connected through reprocessing (for example, bonding, welding, clamping, or screwing).

In embodiments of this application, the terms "first", "second", "third", and "fourth" are merely intended for a purpose of description, and shall not be understood as an indication or implication of relative importance or an implicit indication of a quantity of indicated technical features. Therefore, a feature defined by "first", "second", "third", or "fourth" may explicitly or implicitly include one or more of the features.

In addition, in embodiments of this application, mathematical concepts such as parallel, perpendicular, and the like are mentioned. These limitations are all for the current technique level, but not for an absolute strict definition in the mathematical sense. A small deviation is allowed, which can be approximately parallel or perpendicular. For example, that A is parallel to B means that A is parallel or approximately parallel to B, and an included angle of 0 degrees to 10 degrees between A and B is allowed. For example, that A is perpendicular to B means that A is perpendicular or approximately perpendicular to B, and an included angle of 80 degrees to 100 degrees between A and B is allowed.

It may be understood that the specific embodiments described herein are merely used to explain a related invention, but not a limitation on the invention. In addition, it should be noted that, for ease of description, only a part related to the invention is shown in the accompanying drawings.

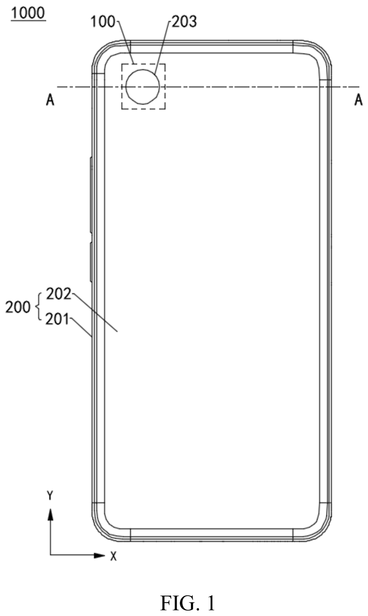

FIG. 1 is a diagram of a structure of an electronic device 1000 according to an embodiment of this application.

As shown in FIG. 1, in some embodiments, the electronic device 1000 may be a device with a camera function, for example, a mobile phone, a tablet personal computer (tablet personal computer), a laptop computer (laptop computer), a personal digital assistant (personal digital assistant, PDA), a camera, a personal computer, a notebook computer, a vehicle-mounted device, a wearable device, augmented reality (augmented reality, AR) glasses, an AR helmet, virtual reality (virtual reality, VR) glasses, or a VR helmet. Descriptions are provided by using an example in which the electronic device 1000 in the embodiment shown in FIG. 1 is a mobile phone.

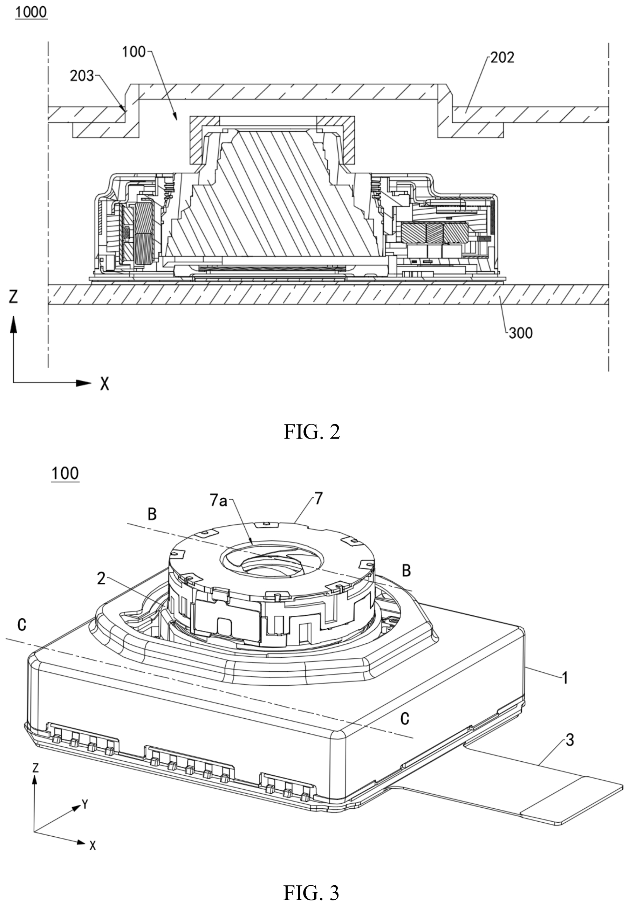

FIG. 2 is a diagram of a partial cross section of the electronic device 1000 shown in FIG. 1 that is cut along A-A according to some embodiments.

As shown in FIG. 1 and FIG. 2, in some embodiments, the electronic device 1000 may include a camera module 100, a device housing 200, and a screen 300. The camera module 100 may be a rear-facing camera module, or may be a front-facing camera module. It should be noted that FIG. 1 and the following related accompanying drawings only schematically show some components included in the electronic device 1000. Actual shapes, actual sizes, actual positions, and actual structures of these components are not limited by FIG. 1 and the following accompanying drawings. In addition, when the electronic device 1000 is a device in another form, the electronic device 1000 may not include the screen 300.

The device housing 200 may include a frame 201 and a rear cover 202. The rear cover 202 is fastened to the frame 201. For example, the rear cover 202 may be fastened to the frame 201 through adhesive bonding, clamping, or the like. The rear cover 202 and the frame 201 may alternatively be of an integrally formed structure, that is, the rear cover 202 and the frame 201 are an integral structure.

In some embodiments, the screen 300 may be located on a side that is of the frame 201 and that is away from the rear cover 202. In this case, the screen 300 and the rear cover 202 may be respectively located on two sides of the frame 201. The screen 300, the frame 201, and the rear cover 202 jointly enclose the interior of the electronic device 1000. The interior of the electronic device 1000 may be configured to place a component of the electronic device 1000, for example, a battery, a telephone receiver, or a microphone. The screen 300 may be a flat screen, or may be a curved screen.

For example, the camera module 100 may be located in the interior of the electronic device 1000. The camera module 100 may be located on a side that is of the screen 300 and that faces the rear cover 202. The rear cover 202 may be provided with a light transmission hole 203. A shape of the light transmission hole 203 is not limited to a circle shown in FIG. 1. The light transmission hole 203 communicates with the interior of the electronic device 1000 and the exterior of the electronic device 1000. Light in the exterior of the electronic device 1000 may enter the interior of the electronic device 1000 through the light transmission hole 203. The camera module 100 may capture light that enters the interior of the electronic device 1000.

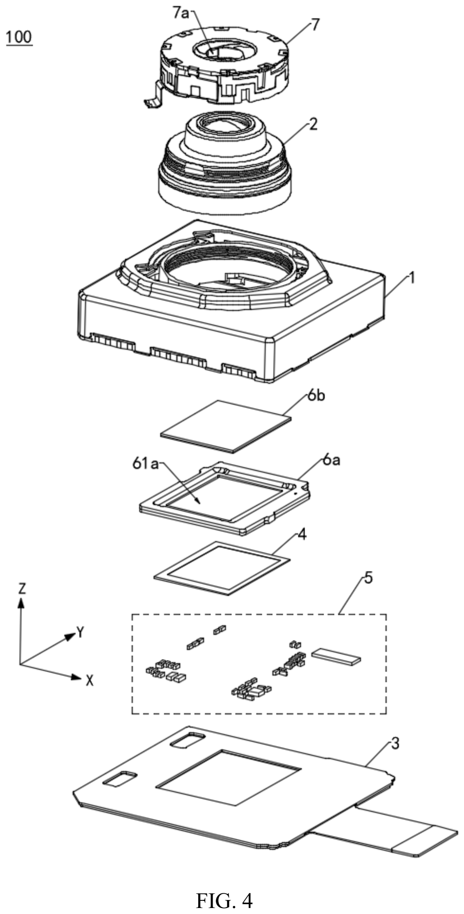

FIG. 3 is a diagram of a structure of the camera module 100 shown in FIG. 1 in some embodiments. FIG. 4 is a partial exploded diagram of the camera module 100 shown in FIG. 3 in some embodiments.

As shown in FIG. 3 and FIG. 4, the camera module 100 includes a voice coil motor 1, a lens 2, a module circuit board 3, an image sensor 4, an electronic component 5, a light filter bracket 6a, a light filter 6b, and a variable aperture 7. The image sensor 4 may also be referred to as a photosensitive chip or a photosensitive element. The image sensor 4 is configured to capture ambient light, and convert image information carried in the ambient light into an electrical signal. The electronic component 5 may be a component like a capacitor, an inductor, a resistor, or a chip. In FIG. 4, the electronic component 5 is schematically framed by using a dashed box.

It may be understood that the camera module 100 may further include fewer or more structures. For example, the camera module 100 may include fewer structures. For example, the camera module 100 may not include an electronic component 5, and/or a light filter bracket 6a, and/or a light filter 6b, and/or a variable aperture 7.

It may be understood that for ease of description, in the following descriptions, the camera module 100 is defined to have a first direction Y, a second direction X, and a third direction Z. The first direction Y may be a width direction of the camera module 100. The second direction X may be a length direction of the camera module 100, and the second direction X is perpendicular to the first direction Y. The third direction Z may be a height direction of the camera module 100, and the third direction Z is perpendicular to the first direction Y and the second direction X. In another implementation, a coordinate system of the camera module 100 may be flexibly set based on a specific actual requirement.

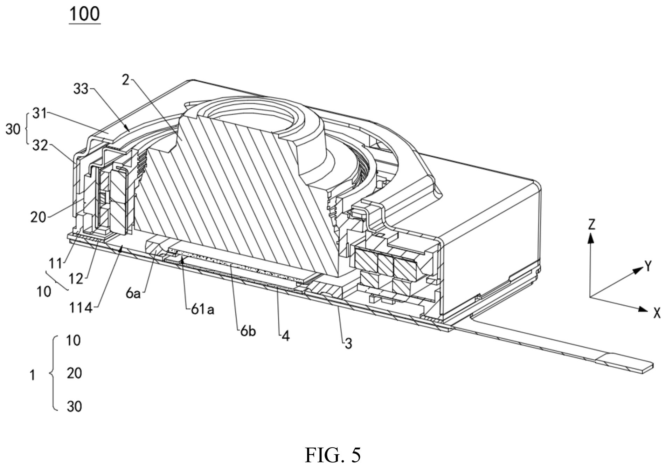

FIG. 5 is diagram of a partial cross section of the camera module 100 shown in FIG. 3 that is cut along B-B in some embodiments.

As shown in FIG. 5, the image sensor 4 may be disposed on the module circuit board 3, and is electrically connected to the module circuit board 3. In this case, the image sensor 4 and the module circuit board 3 may perform signal transmission with each other. In addition, the electronic component 5 is also fastened to the module circuit board 3, and is electrically connected to the module circuit board 3. In this case, the electronic component 5 and the module circuit board 3 may perform signal transmission with each other.

For example, the light filter bracket 6a is fastened to the module circuit board 3. The light filter bracket 6a and the image sensor 4 are located on a same side of the module circuit board 3. The light filter bracket 6a is provided with a light-through hole 61a. The light filter 6b is fastened to the light filter bracket 6a. The light filter 6b may be located in the light-through hole 61a. The light filter 6b is also disposed opposite to the image sensor 4. The light filter 6b may be configured to perform filtering on infrared light, blue light, or the like in light before the light enters the image sensor 4, to ensure that the image sensor 4 has better imaging quality.

As shown in FIG. 5, the voice coil motor 1 is fastened to the module circuit board 3. The voice coil motor 1 and the image sensor 4 are located on a same side of the module circuit board 3. The lens 2 is mounted on the voice coil motor 1. The image sensor 4 is located on a light exit side of the lens 2. It may be understood that in the third direction Z, the image sensor 4, the light filter 6b, and the lens 2 are sequentially arranged. In this case, the image sensor 4 is located on the light exit side of the lens 2. The light filter 6b is located between the lens 2 and the image sensor 4.

It may be understood that the lens 2 may be configured to capture the ambient light. An optical axis direction of the lens 2 may be parallel to the third direction Z of the camera module 100. The optical axis direction of the lens 2 and an optical axis direction of the camera module 100 are a same direction.

It may be understood that compared with a solution in which the voice coil is fastened to the light filter bracket, this embodiment in which the voice coil motor 1 is fastened to the module circuit board 3 can avoid stacking of the voice coil motor 1 and the light filter bracket 6a in the third direction Z, to be specific, enable the voice coil motor 1 to be staggered with the light filter bracket 6a on an X-Y plane, and reduce the height of the camera module 100 to a large extent.

It may be understood that the voice coil motor 1 may be a focusing voice coil motor. In this way, the voice coil motor 1 can control the lens 2 to move in the third direction Z, to implement autofocus (autofocus, AF). The voice coil motor 1 may alternatively be an image stabilization voice coil motor. In this way, the voice coil motor 1 can control the lens 2 to move on a plane (namely, the X-Y plane) perpendicular to the third direction Z. When the camera module 100 captures the ambient light, if the electronic device 1000 shakes on the X-Y plane due to an external force, the voice coil motor 1 can control movement of the lens 2 on the X-Y plane, to counteract a shake stroke produced by the lens 2 on the X-Y plane, and avoid or reduce a positional deviation, of the lens 2, caused by the shake. In other words, the camera module 100 in this application can control, via the voice coil motor 1, movement of the lens 2 on the X-Y plane, to implement optical image stabilization (optical image stabilization, OIS) for the camera module 100, and improve imaging quality of the camera module 100. The voice coil motor 1 may alternatively be a voice coil motor 1 integrating image stabilization and focusing. In this way, the voice coil motor 1 can control the lens 2 to implement autofocus, and can also control the lens 2 to implement optical image stabilization. In this implementation, descriptions are provided by using an example in which the voice coil motor 1 is the voice coil motor 1 integrating image stabilization and focusing.

It may be understood that the voice coil motor 1 may be a motor using a force generated by fitting between a coil and a magnetic piece as a driving force. The driving force of the voice coil motor 1 may be a force for driving the lens 2 to perform focusing, and/or a force for driving the lens 2 to perform image stabilization. When the voice coil motor 1 is integrated with image stabilization and focusing, the force for driving the lens 2 to perform focusing may be different from the force for driving the lens 2 to perform image stabilization. However, at least one of the force for driving the lens 2 to perform focusing and the force for driving the lens 2 to perform image stabilization is the force generated by fitting between the coil and the magnetic piece. For example, the force for driving the lens 2 to perform focusing is the force generated by fitting between the coil and the magnetic piece, and the force for driving the lens 2 to perform image stabilization may be the force generated by fitting between the coil and the magnetic piece, or may be a force generated by another mechanical part (for example, a contraction force of a shape memory alloy (SMA)).

As shown in FIG. 3 and FIG. 4, the variable aperture 7 may be located on a light entrance side of the lens 2. In the third direction Z, the image sensor 4, the light filter 6b, the lens 2, and the variable aperture 7 are sequentially arranged.

It may be understood that the variable aperture 7 has an aperture hole 7a, and a size of the aperture hole 7a may be automatically adjusted. Light may enter the lens 2 through the aperture hole 7a of the variable aperture 7. The variable aperture 7 is configured to adjust an amount of light entering the lens, so that the camera module 100 can maintain constant image shooting quality under a plurality of luminance conditions.

The foregoing briefly describes the structure of the camera module 100 with reference to related accompanying drawings. The following specifically describes a structure of the voice coil motor 1 with reference to related accompanying drawings.

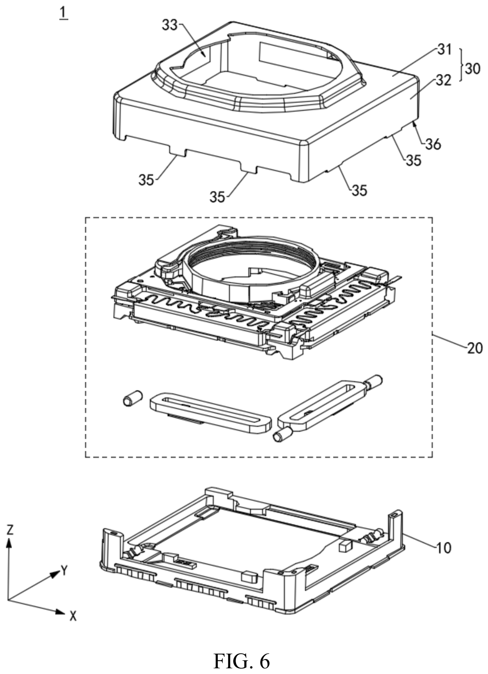

FIG. 6 is a partial exploded diagram of the voice coil motor 1 shown in FIG. 4 in some embodiments.

As shown in FIG. 6, the voice coil motor 1 includes a base 10, a driving mechanism 20, and a housing 30. The driving mechanism 20 is configured to mount the lens 2. The driving mechanism 20 is connected to the base 10. The driving mechanism 20 can control the lens 2 to move relative to the base 10, so as to implement both focusing and optical image stabilization. It may be understood that for a structure of the driving mechanism 20, the following specifically describes an implementation with reference to related accompanying drawings. Details are not described herein. In addition, the driving mechanism 20 is schematically framed in FIG. 6 by using a dashed box.

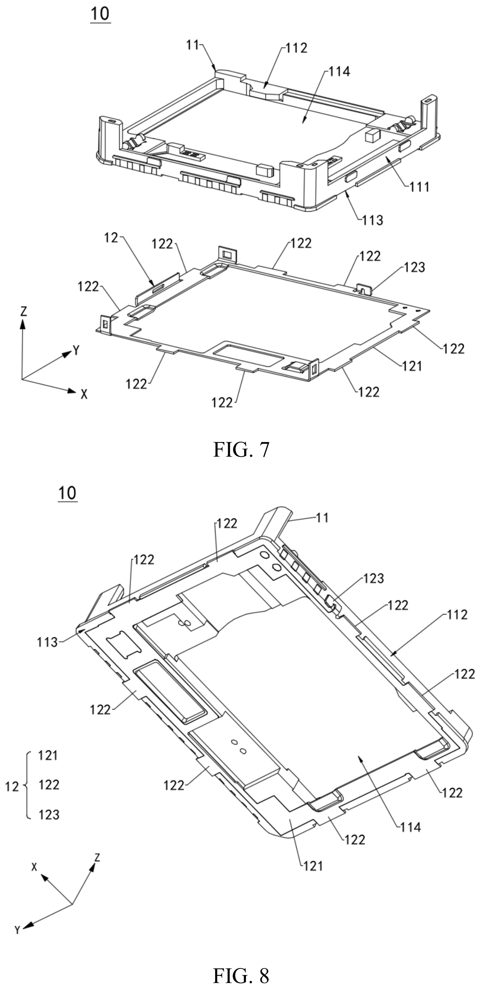

FIG. 7 is a partial exploded diagram of the base 10 shown in FIG. 6 in some embodiments.

As shown in FIG. 7, the base 10 includes a plastic piece 11 and a metal piece 12. For example, a material of the metal piece 12 may be stainless steel or the like.

As shown in FIG. 7, the plastic piece 11 includes a side surface 111, and a top surface 112 and a bottom surface 113 that are disposed back-to-back. The side surface 111 is connected between the top surface 112 and the bottom surface 113. The plastic piece 11 is provided with a first through hole 114. The first through hole 114 forms an opening on the top surface 112 and the bottom surface 113 of the plastic piece 11. In this case, the plastic piece 11 may be approximately ring-shaped.

As shown in FIG. 7, the metal piece 12 includes a fastening region 121, a first connection region 122, and a second connection region 123. The first connection region 122 and the second connection region 123 are spaced apart and connected to a periphery of the fastening region 121. It may be understood that a quantity of first connection regions 122 is not limited to 8 shown in FIG. 7. A specific quantity is not limited in this application. In addition, a quantity of second connection regions 123 is not limited to 1 shown in FIG. 7. This is not specifically limited in this application.

For example, the first connection region 122 may protrude from a side surface of the fastening region 121. In this case, the first connection region 122 may be disposed in parallel to the fastening region 121.

For example, the second connection region 123 may protrude from the top surface of the fastening region 121. In other words, the second connection region (123) bends relative to the fastening region 121 in the third direction Z. In this case, the second connection region 123 may be disposed perpendicular to the fastening region 121.

FIG. 8 is a diagram of a structure of the base 10 shown in FIG. 6 at another angle.

As shown in FIG. 8, the metal piece 12 is fastened to the plastic piece 11. The metal piece 12 may be disposed to surround the first through hole 114 of the plastic piece 11. The metal piece 12 may be used to improve overall strength of the base 10.

In an implementation, the fastening region 121 of the metal piece 12 may be fastened to the bottom surface 113 of the plastic piece 11. In this case, all of the fastening region 121, the first connection region 122, and the second connection region 123 of the metal piece 12 may be exposed relative to the plastic piece 11. In addition, the first connection region 122 of the metal piece 12 may extend out relative to the side surface 111 of the plastic piece 11. The second connection region 123 of the metal piece 12 may be exposed relative to the side surface 111 of the plastic piece 11, and is fastened to the side surface 111 of the plastic piece 11.

In an implementation, a part of the metal piece 12 is embedded in the plastic piece 11. For example, a part of the fastening region 121 of the metal piece 12 is embedded in the plastic piece 11. Both the first connection region 122 and the second connection region 123 of the metal piece 12 may be exposed relative to the plastic piece 11. In addition, the first connection region 122 of the metal piece 12 may extend out relative to the side surface 111 of the plastic piece 11. The second connection region 123 of the metal piece 12 may be exposed relative to the side surface 111 of the plastic piece 11, and is fastened to the side surface 111 of the plastic piece 11.

As shown in FIG. 5, the driving mechanism 20 is connected to the base 10. The lens 2 is mounted on the driving mechanism 20. In this way, the driving mechanism 20 can drive the lens 2 to move relative to the base 10. In addition, the base 10 is disposed on the module circuit board 3. The base 10 and the image sensor 4 may be located on a same side of the module circuit board 3. It may be understood that the lens 2 is disposed opposite to the light filter 6b via the first through hole 114 of the base 10. In this way, the light captured by the lens 2 may be projected to the light filter 6b through the first through hole 114 of the base 10, and then the light is projected to the image sensor 4 through the light filter 6b.

For example, the metal piece 12 of the base 10 may be fastened to the module circuit board 3 through adhesive bonding. The metal piece 12 of the base 10 is staggered with the image sensor 4 and the electronic component 5. In other words, the metal piece 12 of the base 10 is disposed clear of the image sensor 4 and the electronic component 5 (refer to FIG. 4).

For example, a part of the light filter bracket 6a may pass through the first through hole 114 of the plastic piece 11, and enter the interior of the voice coil motor 1. In this case, the part of the light filter bracket 6a is located in the interior of the voice coil motor 1. In this way, in the third direction Z, the light filter bracket 6a and the voice coil motor 1 have an overlapping region. This can reduce the height of the camera module 100 to a large extent.

As shown in FIG. 6, the housing 30 includes a top plate 31 and a side frame 32, and the side frame 32 is connected to a periphery of the top plate 31. For example, materials of both the side frame 32 and the top plate 31 may be metal materials. In this case, the side frame 32 and the top plate 31 form a metal portion 36 of the housing 30. In another implementation, one part of the top plate 31 is made of a metal material and/or one part of the side frame 32 is made of a metal material, and the other part of the top plate 31 is made of an insulation material and/or the other part of the side frame 32 is made of an insulation material. The part made of the metal material forms a metal portion 36 of the housing 30.

In this implementation, the side frame 32 is integrated with the top plate 31 to form a mechanical part. In another implementation, the side frame 32 may be connected to the periphery of the top plate 31 by using another technique (for example, welding, bonding, or fastening).

As shown in FIG. 6, in an implementation, a surface, away from the top plate 31, of the side frame 32 is protrusively provided with a bump 35. The bump 35 is made of a metal material. The bump 35 forms at least a part of the metal portion 36. It may be understood that when the materials of both the side frame 32 and the top plate 31 are metal materials, the bump 35, the side frame 32, and the top plate 31 jointly form the metal portion 36. When the materials of both the side frame 32 and the top plate 31 are insulation materials, the bump 35 forms the whole of the metal portion 36.

It may be understood that the bump 35 is integrated with the side frame 32 and the top plate 31 to form a mechanical part. In another implementation, the bump 35 may alternatively be protrusively disposed on the surface that is of the side frame 32 and that is away from the top plate 31 by using another technique (for example, welding, bonding, or fastening).

As shown in FIG. 5 and FIG. 6, the top plate 31 is provided with a second through hole 33. The second through hole 33 may penetrate the top surface and the bottom surface of the top plate 31. In this case, the top plate 31 may be approximately ring-shaped.

In addition, the side frame 32 of the housing 30 is fastened to the base 10, and covers at least a part of the voice coil motor 1. Apart of the lens 2 may extend out to the exterior of the housing 30 through the second through hole 33 of the top plate 31 of the housing 30. The housing 30 may be configured to protect the voice coil motor 1.

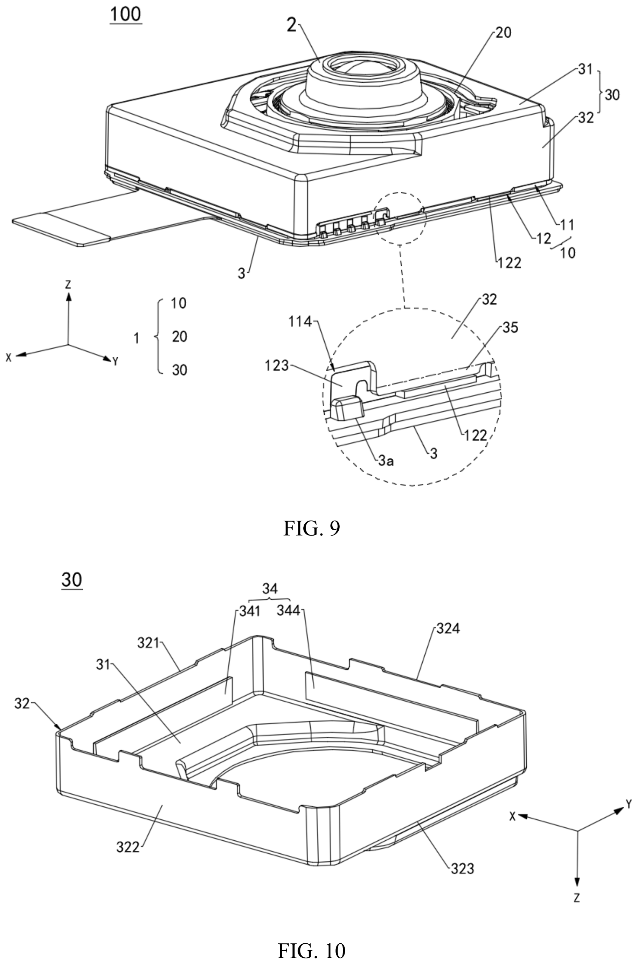

FIG. 9 is a diagram of a structure of the camera module 100 shown in FIG. 3 in some embodiments.

As shown in FIG. 8 and FIG. 9, for example, the bump 35 is fastened to the first connection region 122 of the metal piece 12 of the base 10 through laser welding. In this case, the housing 30 is fastened to the module circuit board 3 through the metal piece 12 of the base 10. In FIG. 9, the bump 35 and the side frame 32 are schematically distinguished by a dash-dot line.

In an implementation, the side frame 32 may be directly fastened to the module circuit board 3 through tin soldering. It may be understood that in a tin soldering technique, the surface of the side frame 32 needs to be nickel-plated, to ensure that the side frame 32 can be tinned in a soldering process. This ensures reliability of connecting the side frame 32 to the module circuit board 3. Due to high costs of nickel-plating of a local region of the side frame 32, the entire housing 30 is generally directly nickel-plated, to reduce the costs. However, after the side frame 32 is nickel-plated, nickel causes magnetic interference to a magnetic piece of the voice coil motor 1. This affects operation of the voice coil motor 1. However, in this implementation, the side frame 32 is fastened to the first connection region 122 of the metal piece 12 of the base 10 through laser welding. In this way, in one aspect, the housing 30 can no longer be nickel-plated, and the housing 30 does not cause magnetic interference to the voice coil motor 1, and costs of nickel-plating can be reduced.

In another implementation, the bump 35 may alternatively be fastened to the first connection region 122 of the metal piece 12 of the base 10 in another fastening manner.

In another implementation, when the surface that is of the side frame 32 and that is away from the top plate 31 is not protrusively provided with the bump 35, the side frame 32 may be directly fastened to the first connection region 122 of the metal piece 12 of the base 10 through laser welding.

For example, the second connection region 123 of the metal piece 12 of the base 10 is fastened to a ground pin 3a of the module circuit board 3. For example, the second connection region 123 of the metal piece 12 may be fastened to the ground pin 3a of the module circuit board 3 through tin soldering. It may be understood that the side frame 32 of the housing 30 is connected to the ground pin 3a of the module circuit board 3 via the metal piece 12. In this case, the top plate 31 and the side frame 32 of the housing 30 are entirely grounded. In this way, when the camera module 100 is used in the electronic device 1000, the housing 30 being grounded can avoid radio frequency interference and electrostatic interference caused by another component of the electronic device 1000 to the camera module 100. In addition, in the tin soldering process, the metal piece 12 may be nickel-plated, to improve connectivity between the metal piece 12 and the module circuit board 3. There is the plastic piece 11 between the nickel of the metal piece 12 and the voice coil motor 1, and therefore the nickel of the metal piece 12 is far away from the voice coil motor 1. Further, an area of the nickel of the metal piece 12 is small, magnetic interference of the nickel of the metal piece 12 to the voice coil motor 1 is small.

In another implementation, the second connection region 123 of the metal piece 12 of the base 10 may alternatively be fastened to the ground pin 3a of the module circuit board 3 through a conductive adhesive. Details are not described herein.

It may be understood that the second connection region 123 of the metal piece 12 in this implementation bends in a direction away from the module circuit board 3, so that an area exposed by the second connection region 123 relative to the side surface 111 of the plastic piece 11 is larger. This facilitates the second connection region 123 of the metal piece 12 to be fastened to the ground pin 3a of the module circuit board 3, that is, the connection is more stable and more secure.

It may be understood that the metal piece 12 of the base 10 in this implementation is "multifunctional". In one aspect, the metal piece 12 of the base 10 can be used to improve the overall strength of the base 10 and avoid damage to the base 10. In another aspect, the metal piece 12 can be fastened to the metal portion 36 of the housing 30, to replace a solution in which the housing 30 is directly fastened to the module circuit board 3 through tin soldering. In this case, the housing 30 no longer needs to be entirely nickel-plated. The housing 30 no longer causes magnetic interference to the magnetic piece of the voice coil motor 1, and does not increase costs due to nickel plating. In still another aspect, the metal piece 12 of the base 10 can be used as a transition mechanical part of the housing 30 to connect to the ground pin 3a of the module circuit board 3.

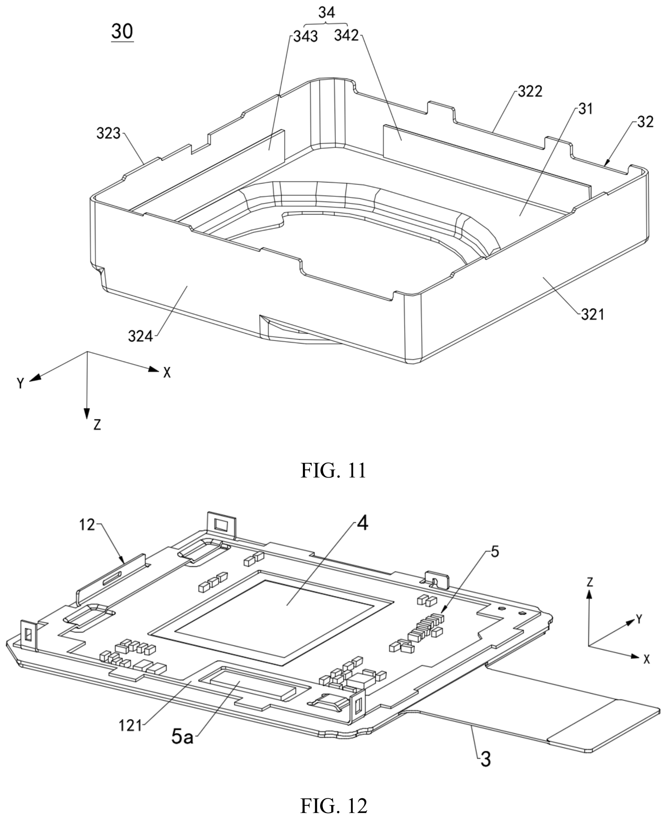

FIG. 10 is a diagram of a structure of the housing 30 shown in FIG. 6 at another angle. FIG. 11 is a diagram of the structure of the housing 30 shown in FIG. 6 at another angle.

As shown in FIG. 10 and FIG. 11, the housing 30 further includes a damper 34. For example, a material of the damper 34 is an insulation material, for example, a plastic. In another implementation, a metal sheet, for example, a steel sheet, may be embedded into the interior of the damper 34.

The damper 34 is fastened to the inner surface of the housing 30. The damper 34 is disposed opposite to the driving mechanism 20. For example, the damper 34 and the housing 30 may form an integrated structure by using an injection molding technique. In another implementation, the damper 34 may be fastened to the inner surface of the housing 30 through bonding or in another fastening manner. Details are not described herein.

As shown in FIG. 10 and FIG. 11, for example, the damper 34 includes a first sub-damper 341, a second sub-damper 342, a third sub-damper 343, and a fourth sub-damper 344. The first sub-damper 341, the second sub-damper 342, the third sub-damper 343, and the fourth sub-damper 344 may be separately disposed, or may be all connected as a whole, or may be at least two connected as a whole. This is not specifically limited in this application.

The first sub-damper 341, the second sub-damper 342, the third sub-damper 343, and the fourth sub-damper 344 are respectively connected to a first side wall 321, a second side wall 322, a third side wall 323, and a fourth side wall 324 of the side frame 32. The first side wall 321 is disposed opposite to the third side wall 323. The second side wall 322 is disposed opposite to the fourth side wall 324. The third side wall 323 and the fourth side wall 324 are connected between the first side wall 321 and the second side wall 322. In another implementation, the damper 34 may also include a fifth sub-damper (not shown in the figure). The fifth sub-damper is connected to the inner surface of the top plate 31.

In an implementation, black paint is coated on the inner surface of the housing 30, to avoid a short circuit caused by contact between a wiring of the voice coil motor 1 and the housing 30. In addition, the damper is attached to the driving mechanism 20 of the voice coil motor 1, to avoid damage caused by impact, on the housing 30, of the driving mechanism 20 during movement. It may be understood that a solution of coating the black paint and attaching the damper may improve costs of the camera module 100 to a large extent. However, in this implementation, the damper 34 is fastened to the inner surface of the housing 30, and the material of the damper 34 is the insulation material. In this way, the damper 34 on the housing 30 can not only be used to avoid the short circuit caused by contact between the wiring of the voice coil motor 1 and the housing 30, but also be used to avoid the damage caused by the impact, on the housing 30, of the driving mechanism 20 during movement. The housing 30 is "multifunctional". In addition, this implementation can also be used to substantially reduce costs of coating the black paint, and therefore reduce costs of the camera module 100 to a large extent.

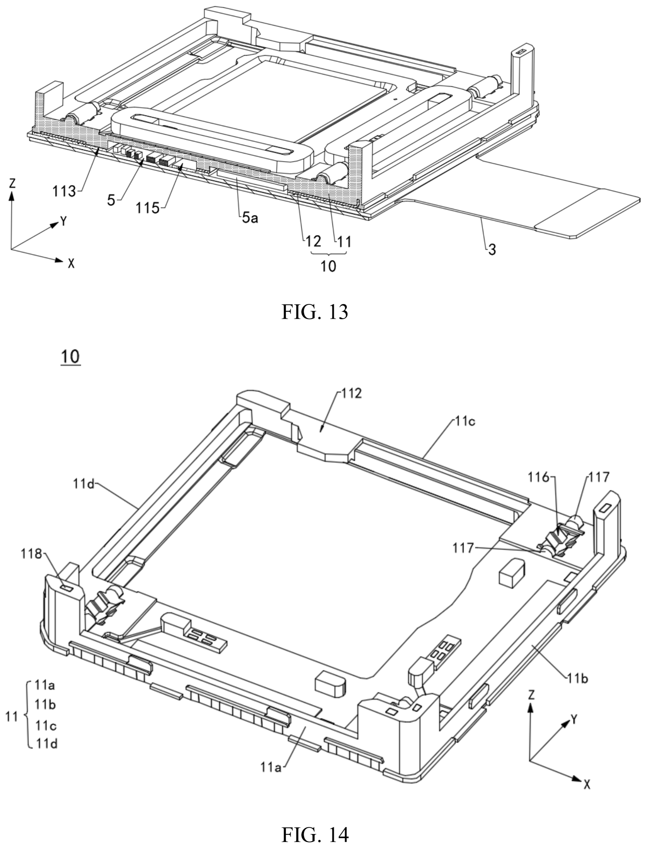

FIG. 12 is a diagram of a partial structure of the camera module 100 shown in FIG. 3 in some embodiments. FIG. 13 is a diagram of a partial cross section of the camera module 100 shown in FIG. 3 that is cut along C-C in some embodiments.

As shown in FIG. 12 and FIG. 13, in an implementation, a part of the metal piece 12 of the base 10 is disposed to surround the electronic component 5. In this way, when the camera module 100 swings or is impacted, deformation of a position that is in the module circuit board 3 and that is fastened to the electronic component 5 can be avoided. This can avoid a risk of a solder joint fracture between the module circuit board 3 and the base 10, and improve reliability of the camera module 100. Therefore, the metal piece 12 of the base 10 in this implementation not only has a plurality of functions mentioned above, but also has a function of improving reliability of the camera module 100. In addition, the electronic component 5 and the metal piece 12 of the base 10 have an overlapping region in a Z-axis direction. This can reduce the height of the camera module 100 in the Z-axis direction.

In an implementation, the electronic component 5 includes a drive chip 5a, the drive chip 5a is electrically connected to the voice coil motor 1 via the module circuit board 3, and the drive chip 5a may be configured to perform an operation on image stabilization data and/or focusing data of the voice coil motor 1, and/or control a current condition. For example, the drive chip 5a may calculate an image stabilization offset of the voice coil motor 1, and/or a focusing movement distance, and/or whether a current is connected, or a current value during powered-on, or the like. In this way, when the camera module 100 swings or is impacted, deformation of a position that is in the module circuit board 3 and that is fastened to the drive chip 5a can be avoided. This can avoid the risk of the solder joint fracture between the module circuit board 3 and the base 10, and improve reliability of the camera module 100. Therefore, the metal piece 12 in this implementation not only has the plurality of functions mentioned above, but also has the function of improving reliability of the camera module 100.

As shown in FIG. 13, in an implementation, the plastic piece 11 of the base 10 is provided with an accommodating groove 115, an opening of the accommodating groove 115 is located on the bottom surface 113 of the plastic piece 11, and at least a part of the electronic component 5 is located in the accommodating groove 115. It may be understood that in the Z-axis direction, the electronic component 5 and the plastic piece 11 of the base 10 have an overlapping region. This can further reduce the height of the camera module 100.

The following specifically describes an implementation of the voice coil motor 1 with reference to related accompanying drawings.

FIG. 14 is a diagram of a structure of the base 10 shown in FIG. 6 in an implementation.

As shown in FIG. 14, in some embodiments, the plastic piece 11 of the base 10 may include a first side portion 11a, a second side portion 11b, a third side portion 11c, and a fourth side portion 11d. The first side portion 11a is disposed opposite to the third side portion 11c. The second side portion 11b is disposed opposite to the fourth side portion 11d. The second side portion 11b and the fourth side portion 11d are connected between the first side portion 11a and the third side portion 11c.

In some embodiments, the plastic piece 11 of the base 10 may be provided with a plurality of first grooves 116. For example, there may be three first grooves 116, and the three first grooves 116 may be respectively located at a joint between the first side portion 11a and the fourth side portion 11d, a joint between the first side portion 11a and the second side portion 11b, and a joint between the second side portion 11b and the third side portion 11c. The first groove 116 may be recessed from the top surface of the plastic piece 11 to the interior of the plastic piece 11, and an extension direction of the first groove 116 is parallel to the first direction Y. The plastic piece 11 may include a plurality of first stopper groups. The plurality of first stopper groups are disposed in a one-to-one correspondence with the plurality of first grooves 116. Each first stopper group includes two first stoppers 117 that protrude from the upper surface of the plastic piece 11. The two first stoppers 117 are respectively located at two ends of a corresponding first groove 116. For example, an arrangement direction of the two first stoppers 117 may be parallel to the extension direction of the first groove 116.

In some embodiments, the base 10 further includes a plurality of conductive members 118. The plurality of conductive members 118 may be embedded in the plastic piece 11. The plurality of conductive members 118 may form a plurality of transmission channels, to implement signal transmission or current transmission. For example, the conductive members 118 may be arranged in the first side portion 11a and the second side portion 11b of the plastic piece 11. For example, some end portions of the conductive member 118 may be exposed from the outer periphery of the plastic piece 11, and some end portions of the conductive member 118 may be exposed from the upper surface of the plastic piece 11.

It may be understood that in the accompanying drawings of this implementation, for simplified illustration, when the accompanying drawings include a same structure, the structure may be numbered in some accompanying drawings and not numbered in some accompanying drawings, or the structure may be numbered in all of the accompanying drawings.

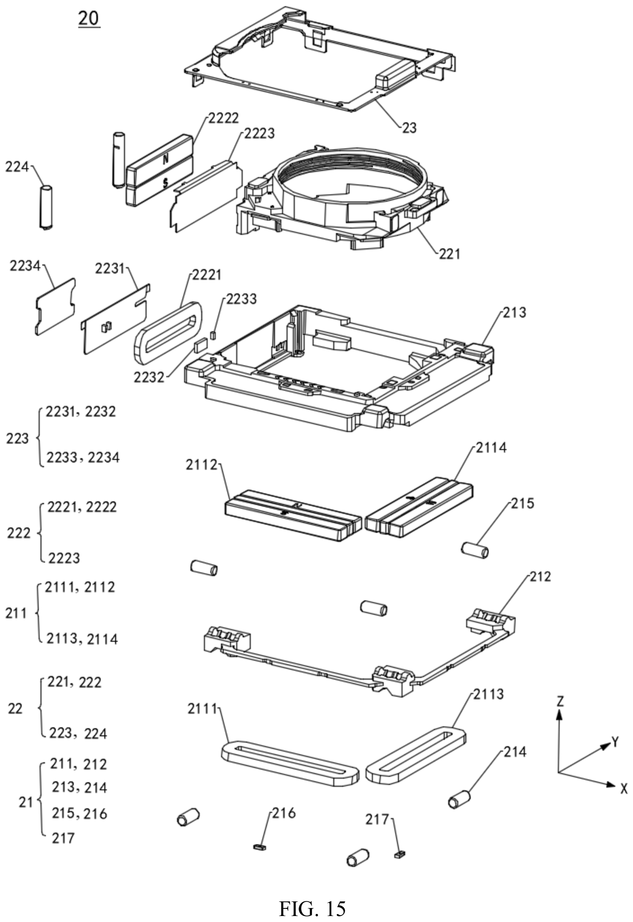

FIG. 15 is a partial exploded diagram of the driving mechanism 20 shown in FIG. 6 in some embodiments.

As shown in FIG. 15, in some embodiments, the driving mechanism 20 includes an image stabilization drive module 21 and a focusing drive module 22. The image stabilization drive module 21 drives the lens 2 to perform optical image stabilization, and the focusing drive module 22 drives the lens 2 to perform autofocus. The image stabilization drive module 21 and the focusing drive module 22 form the integrated driving mechanism 20. In this way, compared with that in the driving mechanism 20 in which the image stabilization drive module 21 and the focusing drive module 22 are disposed separately, the voice coil motor 1 in this embodiment has a smaller volume. This facilitates a miniaturized setting of the voice coil motor 1, and therefore helps save an internal space of the electronic device.

It may be understood that the driving mechanism 20 may further include more structures. For example, the driving mechanism 20 includes a stopper bracket 23. A structure of the stopper bracket 23 is specifically described below with reference to related accompanying drawings. Details are not described herein.

For example, the image stabilization drive module 21 may include an image stabilization driving assembly 211, a guide bracket 212, an image stabilization bracket 213, a first support piece 214, and a second support piece 215. There are a plurality of first support pieces 214 and a plurality of second support pieces 215. For example, in this embodiment, descriptions are provided by using an example in which there are three first support pieces 214 and three second support pieces 215.

For example, the image stabilization driving assembly 211 includes a first image stabilization coil 2111, a first image stabilization magnetic piece 2112, a second image stabilization coil 2113, and a second image stabilization magnetic piece 2114. The first image stabilization coil 2111 is disposed in correspondence with the first image stabilization magnetic piece 2112 to form a group of drive assemblies, and the second image stabilization coil 2113 is disposed in correspondence with the second image stabilization magnetic piece 2114 to form another group of drive assemblies.

It may be understood that the image stabilization drive module 21 may further include more structures. For example, the image stabilization drive module 21 may further include a first image stabilization sensor 216 and a second image stabilization sensor 217.

For example, the focusing drive module 22 may include a focusing bracket 221, a focusing drive assembly 222, a circuit board assembly 223, and a third support piece 224. There may be two third support pieces 224.

For example, the focusing drive assembly 222 may include a focusing coil 2221, a focusing magnetic piece 2222, and a focusing magnetic conductive piece 2223. The circuit board assembly 223 includes a focusing circuit board 2231, a focusing drive chip 2232, a focusing sensor 2233, and a focusing magnetic attraction piece 2234. In another implementation, the circuit board assembly 223 may not include the focusing sensor 2233 and/or the focusing magnetic attraction piece 2234.

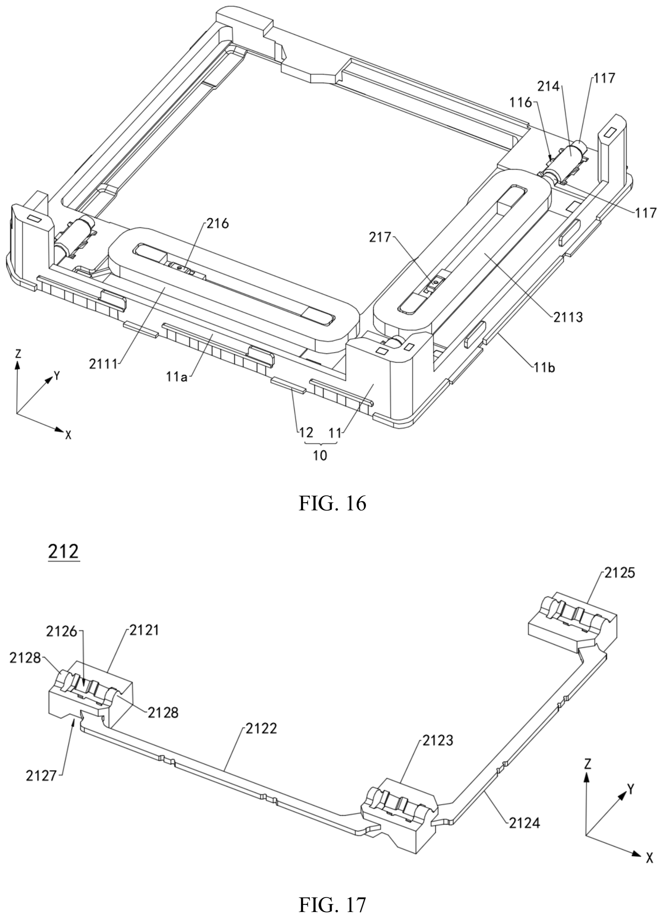

FIG. 16 is a diagram 1 of a partial structure of the voice coil motor 1 shown in FIG. 6 in an implementation.

As shown in FIG. 16, in some embodiments, the plurality of first support pieces 214 may be mounted in the plurality of first grooves 116 in a one-to-one correspondence. A part of the outer surface of the first support piece 214 protrudes relative to the top surface of the plastic piece 11. The first support piece 214 is located between two corresponding first stoppers 117, and the two first stoppers 117 are configured to limit a position of the first support piece 214, so that relative positions between the first support piece 214 and the base 10 are more stable. This prevents the first support piece 214 from being detached. In some embodiments, the first support piece 214 may alternatively be fastened to the base 10 through adhesive dispensing, welding, or the like.

For example, the first support piece 214 may be of a sliding shaft structure, for example, a rectangular structure. When the first support piece 214 is mounted in the first groove 116, an axial direction of the sliding shaft is parallel to the extension direction of the first groove 116. Alternatively, the first support piece 214 may be of a ball structure. In this case, the first support piece 214 may include a plurality of balls. When the first support piece 214 is mounted in the first groove 116, an arrangement direction of the plurality of balls is parallel to the extension direction of the first groove 116. The plurality of first support pieces 214 each may be of a sliding shaft structure or a ball structure, or of a combined structure of a sliding shaft and a ball. This is not strictly limited in embodiments of this application. In this case, the plurality of first support pieces 214 may include at least one of the sliding shaft or the ball.

In some other embodiments, the plurality of first support pieces 214 and the base 10 may alternatively form an integrated mechanical part. Details are not described herein.

In some embodiments, the first image stabilization coil 2111 is mounted on the first side portion 11a of the plastic piece 11, to be fastened to the base 10. The second image stabilization coil 2113 is mounted on the second side portion 11b of the plastic piece 11, to be fastened to the base 10.

In some embodiments, the first image stabilization sensor 216 is fastened to the first side portion 11a of the plastic piece 11, and is located in the inner side of the first image stabilization coil 2111. The first image stabilization sensor 216 is configured to implement position detection, and the first image stabilization sensor 216 may be a Hall (hall) sensor or a tunnel magneto-resistance (tunnel magneto-resistance, TMR) sensor.

In some embodiments, the second image stabilization sensor 217 is fastened to the second side portion 11b of the plastic piece 11, and is located in the inner side of the second image stabilization coil 2113. The second image stabilization sensor 217 is configured to implement position detection, and the second image stabilization sensor 217 may be a Hall (hall) sensor or a TMR sensor.

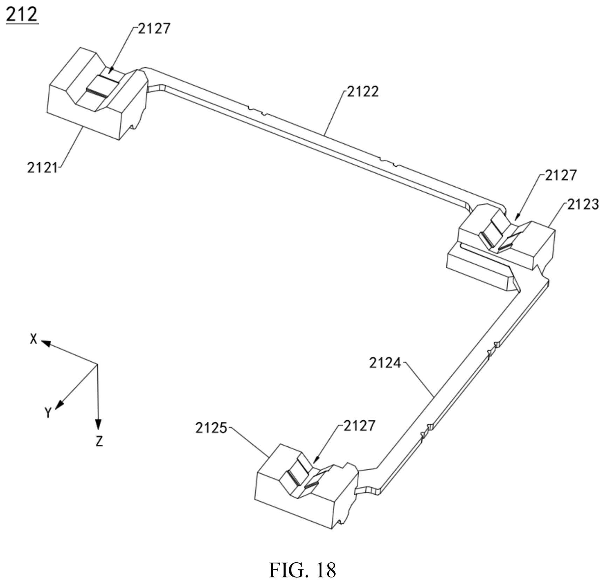

FIG. 17 is a diagram of a structure of the guide bracket 212 shown in FIG. 15 in an implementation. FIG. 18 is a diagram of the structure of the guide bracket 212 shown in FIG. 17 at another angle.

As shown in FIG. 17 and FIG. 18, in some embodiments, the guide bracket 212 may be approximately L-shaped. The guide bracket 212 may include a first support portion 2121, a first connection portion 2122, a second support portion 2123, a second connection portion 2124, and a third support portion 2125 that are sequentially connected. The first support portion 2121, the second support portion 2123, and the third support portion 2125 are spaced apart from each other. The first connection portion 2122 connects the first support portion 2121 to the second support portion 2123. The second connection portion 2124 connects the second support portion 2123 to the third support portion 2125. The first connection portion 2122 and the second connection portion 2124 may be disposed at an included angle. For example, the first connection portion 2122 and the second connection portion 2124 may be disposed perpendicular to each other or approximately perpendicular to each other.

As shown in FIG. 17 and FIG. 18, for example, the guide bracket 212 may be provided with a plurality of second grooves 2126. The plurality of second grooves 2126 are disposed facing a same side of the guide bracket 212. There may be three second grooves 2126. The three second grooves 2126 are located in the first support portion 2121, the second support portion 2123, and the third support portion 2125 respectively. An extension direction of the second groove 2126 may be parallel to the second direction X. The second groove 2126 may be recessed from a side surface of a corresponding support portion to the interior of the support portion. The guide bracket 212 may further include a plurality of second stopper groups. The plurality of second stopper groups are disposed in a one-to-one correspondence with the plurality of second grooves 2126. Each second stopper group includes two second stoppers 2128 that are protrusively provided. The two second stoppers 2128 are respectively located at two ends of a corresponding second groove 2126. For example, an arrangement direction of the two second stoppers 2128 may be parallel to the extension direction of the second groove 2126.

As shown in FIG. 17 and FIG. 18, for example, the guide bracket 212 may also be provided with a plurality of first sliding slots 2127, and the plurality of first sliding slots 2127 are disposed backward to the plurality of second grooves 2126. There may be three first sliding slots 2127. The three first sliding slots 2127 are located on the first support portion 2121, the second support portion 2123, and the third support portion 2125 respectively. An extension direction of the first sliding slot 2127 may be parallel to the first direction Y. The first sliding slot 2127 may be recessed from another side surface of a corresponding support portion to the interior of the support portion. The first sliding slot 2127 may penetrate the corresponding support portion in the extension direction of the first sliding slot, to form a through slot.

As shown in FIG. 17 and FIG. 18, for example, the first support portion 2121 and the second support portion 2123 may be located on one side of the first connection portion 2122 in the first direction Y, that is, the first connection portion 2122 is disposed clear of a facing space between the first support portion 2121 and the second support portion 2123, and the first support portion 2121, the first connection portion 2122, and the second support portion 2123 may be approximately "U"-shaped. The second support portion 2123 and the third support portion 2125 may be located on one side of the second connection portion 2124 in the second direction X, that is, the second connection portion 2124 is disposed clear of a facing space between the second support portion 2123 and the third support portion 2125, and the second support portion 2123, the second connection portion 2124, and the third support portion 2125 may be approximately "U"-shaped.

For example, materials of the first connection portion 2122 and the second connection portion 2124 are metal materials.

It may be understood that compared with that in a solution in which a plastic is formed on a metal frame through plastic injection as a whole, and a part of the metal frame and the plastic on the metal frame form the first connection portion 2122 and the second connection portion 2124, the first connection portion 2122 and the second connection portion 2124 in this implementation include only a metal frame, that is, do not include a plastic formed through plastic injection. In this case, the first connection portion 2122 and the second connection portion 2124 do not have a problem that the metal frame is pulled and deformed due to cooling and shrinking of the plastic. This further avoids a problem that dimension precision is reduced due to deformation of the guide bracket 212.

It may be understood that although the metal frame of the first connection portion 2122 and the second connection portion 2124 no longer include the plastic formed through plastic injection, the metal frame of the first support portion 2121, the second support portion 2123, and the third support portion 2125 may include the plastic formed through plastic injection. Because the lengths of the first support portion 2121, the second support portion 2123, and the third support portion 2125 are less than the lengths of the first connection portion 2122 and the second connection portion 2124, the metal frame of the first support portion 2121, the second support portion 2123, and the third support portion 2125 is not easily deformed due to cooling of the plastic.

The following specifically describes a structure of the guide bracket 212 with reference to related accompanying drawings.

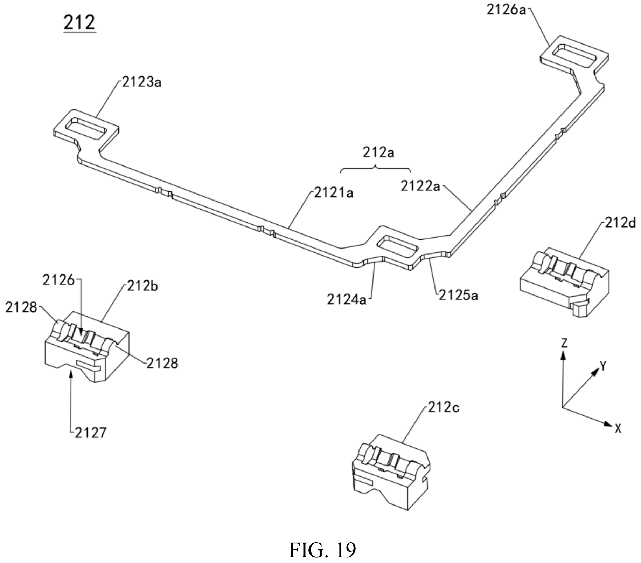

FIG. 19 is an exploded diagram of the guide bracket 212 shown in FIG. 17 in an implementation.

As shown in FIG. 19, in some embodiments, the guide bracket 212 includes a metal frame 212a, a first plastic block 212b, a second plastic block 212c, and a third plastic block 212d. For example, the metal frame 212a may be formed by bending or stamping the integrated metal piece 12, that is, the metal frame 212a is an integrated structure.

It may be understood that the metal frame 212a of the guide bracket 212 includes a first long strip segment 2121a and a second long strip segment 2122a.

A first end portion 2123a and a second end portion 2124a of the first long strip segment 2121a bends in the first direction Y relative to a middle portion of the first long strip segment 2121a. In other words, a first end portion 2123a and a second end portion 2124a of the first long strip segment 2121a may be located on a same side of a middle portion of the first long strip segment 2121a in the first direction Y. In this case, the first long strip segment 2121a is approximately "U"-shaped.

A first end portion 2125a and a second end portion 2126a of the second long strip segment 2122a bends in the second direction X relative to a middle portion of the second long strip segment 2122a. In other words, a first end portion 2125a and a second end portion 2126a of the second long strip segment 2122a may be located on a same side of a middle portion of the second long strip segment 2122a in the second direction X. In this case, the second long strip segment 2122a is approximately "U"-shaped.

The second end portion 2124a of the first long strip segment 2121a is connected to the first end portion 2125a of the second long strip segment 2122a. The metal frame 212a of the guide bracket 212 may be approximately L-shaped. For example, the first long strip segment 2121a and the second long strip segment 2122a may be disposed perpendicular to each other or approximately perpendicular to each other.

As shown in FIG. 19, the first plastic block 212b wraps the first end portion 2123a of the first long strip segment 2121a, the second plastic block 212c wraps the second end portion 2124a of the first long strip segment 2121a and the first end portion 2125a of the second long strip segment 2122a, and the third plastic block 212d wraps the second end portion 2126a of the second long strip segment 2122a. In other words, the first end portion 2123a of the first long strip segment 2121a is embedded in the first plastic block 212b, both the second end portion 2124a of the first long strip segment 2121a and the first end portion 2125a of the second long strip segment 2122a are embedded in the second plastic block 212c, and the second end portion 2126a of the second long strip segment 2122a is embedded in the third plastic block 212d.

For example, a hole is drilled on the first end portion 2123a of the first long strip segment 2121a, and the first plastic block 212b is embedded in the hole, so that the first plastic block 212b is connected to the first end portion 2123a of the first long strip segment 2121a more secure. It may be understood that for the second end portion 2124a of the first long strip segment 2121a, the first end portion 2125a of the second long strip segment 2122a, and the second end portion 2126a of the second long strip segment 2122a, refer to a manner of disposing the first end portion 2123a of the first long strip segment 2121a.

It may be understood that the first end portion 2123a of the first long strip segment 2121a of the metal frame 212a and the first plastic block 212b form the first support portion 2121 of the guide bracket 212 (refer to FIG. 17 and FIG. 18). The second end portion 2124a of the first long strip segment 2121a of the metal frame 212a, the first end portion 2125a of the second long strip segment 2122a, and the second plastic block 212c form the second support portion 2123 of the guide bracket 212 (refer to FIG. 17 and FIG. 18). The second end portion 2126a of the second long strip segment 2122a of the metal frame 212a and the third plastic block 212d form the third support portion 2125 of the guide bracket 212 (refer to FIG. 17 and FIG. 18). The middle portion of the first long strip segment 2121a of the metal frame 212a forms the first connection portion 2122 of the guide bracket 212 (refer to FIG. 17 and FIG. 18). The middle portion of the second long strip segment 2122a of the metal frame 212a forms the second connection portion 2124 of the guide bracket 212 (refer to FIG. 17 and FIG. 18).

It may be understood that the three second grooves 2126 in this implementation may be respectively disposed in the first plastic block 212b, the second plastic block 212c, and the third plastic block 212d. The three second stopper groups may also be respectively disposed on the first plastic block 212b, the second plastic block 212c, and the third plastic block 212d. The three first sliding slots 2127 may be respectively disposed in the first plastic block 212b, the second plastic block 212c, and the third plastic block 212d.

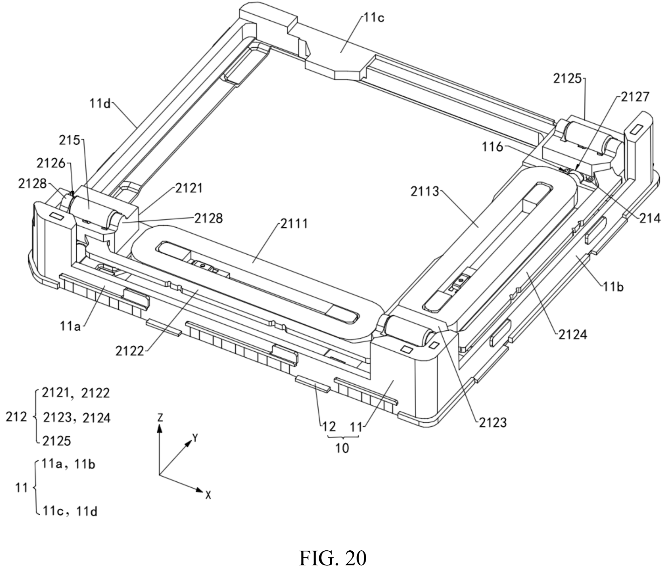

FIG. 20 is a diagram 2 of a partial structure of the voice coil motor 1 shown in FIG. 6 in an implementation.

Refer to FIG. 20. With reference to FIG. 18, in some embodiments, the guide bracket 212 is mounted in the base 10. The first support portion 2121 is disposed at the joint between the first side portion 11a and the fourth side portion 11d of the plastic piece 11, the second support portion 2123 is disposed at the joint between the first side portion 11a and the second side portion 11b, and the third support portion 2125 is disposed at the joint between the second side portion 11b and the third side portion 11c. The three first sliding slots 2127 of the guide bracket 212 are disposed in a one-to-one correspondence with the three first grooves 116 of the base 10. The first support piece 214 mounted in the first groove 116 is partially embedded in the first sliding slot 2127. In this case, the first support portion 2121, the second support portion 2123, and the third support portion 2125 of the guide bracket 212 are connected to the base 10 through the plurality of first support pieces 214. The guide bracket 212 is slidably connected to the base 10 via the plurality of first support pieces 214, and a direction of relative sliding between the guide bracket and the base is parallel to guiding directions of the first support pieces 214. When the first support piece 214 is of a sliding shaft structure, an axial direction of the sliding shaft is the guiding direction of the first support piece 214. When the first support piece 214 is of a ball structure, an arrangement direction of a plurality of balls is the guiding direction of the first support piece 214.

When the first support piece 214 is of the sliding shaft structure, the guide bracket 212 is in line contact with the first support piece 214 during relative movement. This can avoid a risk of a dent caused by excessively large impact pressure, and improve reliability. In some embodiments, the width of a contact position between the first support piece 214 and the guide bracket 212 may be increased to further improve reliability of structural fitting.

As shown in FIG. 20, for example, guiding directions of the plurality of first support pieces 214 are parallel to the first direction Y. Therefore, the guide bracket 212 may slide relative to the base 10 in the first direction Y. In some embodiments, the first support piece 214 may also limit positions of other mechanical parts in a direction perpendicular to the guiding direction of the first support piece. For example, the first support piece 214 is disposed, so that the guide bracket 212 and the base 10 limit positions of each other in the second direction X.

For example, the first connection portion 2122 is disposed corresponding to the first side portion 11a of the plastic piece 11, and the first connection portion 2122 may be located on a side that is of the first image stabilization coil 2111 and that is away from the third side portion 11c of the plastic piece 11. The second connection portion 2124 is disposed corresponding to the second side portion 11b of the plastic piece 11, and the second connection portion 2124 may be located on a side that is of the second image stabilization coil 2113 and that is away from the fourth side portion 11d of the plastic piece 11.

In some embodiments, fitting between the plurality of first support pieces 214 and the guide bracket 212 includes tight fitting and loose fitting, to reduce assembling difficulty. For example, as shown in FIG. 18, the plurality of first sliding slots 2127 of the guide bracket 212 include at least one "V"-shaped slot and at least one "U"-shaped slot or "L"-shaped slot. During fitting between the "V"-shaped slot and the first support piece 214, a side slot wall of the first sliding slot 2127 contacts the first support piece 214, to implement tight fitting. For example, the first sliding slots 2127 located in the first support portion 2121 and the second support portion 2123 are "V"-shaped slots. During fitting between the "U"-shaped slot or the "L"-shaped slot and the first support piece 214, a bottom slot wall of the first sliding slot 2127 contacts the first support piece 214, to implement loose fitting. For example, the first sliding slot 2127 located in the third support portion 2125 is a "U"-shaped slot. In some other embodiments, there may be other implementation solutions for tight fitting and loose fitting designs between the plurality of first support pieces 214 and the guide bracket 212. For example, loose fitting of two second support pieces and tight fitting of one second support piece may be combined, or arrangement positions of tight fitting and loose fitting change. This is not strictly limited in embodiments of this application.

Refer to FIG. 20. With reference to FIG. 17, in some embodiments, the plurality of second support pieces 215 may be mounted to the plurality of second grooves 2126 of the guide bracket 212 in a one-to-one correspondence. In this case, the three second support pieces 215 are mounted to the first support portion 2121, the second support portion 2123, and the third support portion 2125 of the guide bracket 212 respectively. A part of the outer surface of the second support piece 215 protrudes relative to a surface of a corresponding support portion of the guide bracket 212. The second support piece 215 is located between two corresponding second stoppers 2128, and the two second stoppers 2128 are configured to limit a position of the second support piece 215, so that relative positions between the second support piece 215 and the guide bracket 212 are more stable. This prevents the second support piece 215 from being detached. In some embodiments, the second support piece 215 may alternatively be fastened to the guide bracket 212 through adhesive dispensing, welding, or the like.

For example, the second support piece 215 may be of a sliding shaft structure, for example, a rectangular structure. When the second support piece 215 is mounted in the second groove 2126, an axial direction of the sliding shaft is parallel to the extension direction of the second groove 2126. Alternatively, the second support piece 215 may be of a ball structure. In this case, the second support piece 215 may include a plurality of balls. When the second support piece 215 is mounted in the second groove 2126, an arrangement direction of the plurality of balls is parallel to the extension direction of the second groove 2126. Alternatively, the plurality of second support pieces 215 are of a combined structure of a sliding shaft and a ball. For a sliding shaft structure and a ball structure, refer to the foregoing structures. Details are not described herein again. In this case, the plurality of second support pieces 215 may include at least one of a sliding shaft or a ball.

In some other embodiments, the plurality of second support pieces 215 may be integrated with the guide bracket 212 to form a mechanical part. Details are not described herein.

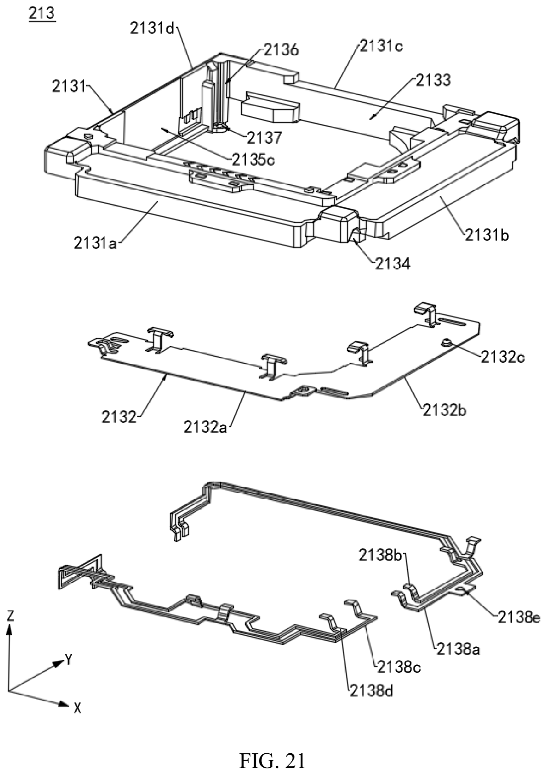

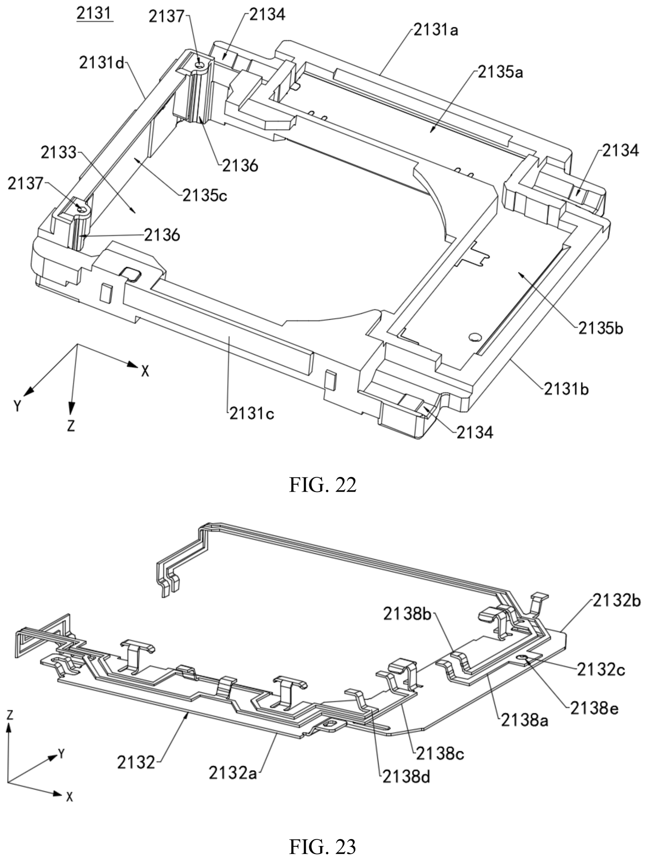

FIG. 21 is a partial exploded diagram of the image stabilization bracket 213 shown in FIG. 15 in an implementation. FIG. 22 is a diagram of a structure of the image stabilization bracket 213 shown in FIG. 15 at another angle.

As shown in FIG. 21 and FIG. 22, the image stabilization bracket 213 includes an insulation body 2131 and a metal insert 2132.

In an implementation, the insulation body 2131 may be approximately ring-shaped. For example, the insulation body 2131 may include a first side portion 2131a, a second side portion 2131b, a third side portion 2131c, and a fourth side portion 2131d. The first side portion 2131a of the image stabilization bracket 213 is disposed opposite to the third side portion 2131c. The second side portion 2131b of the image stabilization bracket 213 is disposed opposite to the fourth side portion 2131d. The second side portion 2131b and the fourth side portion 2131d of the image stabilization bracket 213 are connected between the first side portion 2131a and the third side portion 2131c of the image stabilization bracket 213.

For example, the image stabilization bracket 213 has a movable space 2133, and the movable space 2133 is located between the first side portion 2131a and the third side portion 2131c, and is located between the second side portion 2131b and the fourth side portion 2131d. That is, the first side portion 2131a, the second side portion 2131b, the third side portion 2131c, and the fourth side portion 2131d are disposed to surround the movable space 2133. The movable space 2133 penetrates the image stabilization bracket 213 in the third direction Z.

For example, the image stabilization bracket 213 may be provided with a plurality of second sliding slots 2134, and the plurality of second sliding slots 2134 are disposed facing a same side of the image stabilization bracket 213. There may be three second sliding slots 2134. The three second sliding slots 2134 are respectively located at a joint between the first side portion 2131a and the fourth side portion 2131d of the image stabilization bracket 213, a joint between the first side portion 2131a and the second side portion 2131b of the image stabilization bracket 213, and a joint between the second side portion 2131b and the third side portion 2131c of the image stabilization bracket 213. An extension direction of the second sliding slot 2134 may be parallel to the second direction X.

For example, the first side portion 2131a is provided with a first mounting slot 2135a, the first mounting slot 2135a is located between two second sliding slots 2134, the second side portion 2131b is provided with a second mounting slot 2135b, and the second mounting slot 2135b is located between two second sliding slots 2134. The second mounting slot 2135b and the first mounting slot 2135a are disposed facing a same side of the image stabilization bracket 213.

For example, the fourth side portion 2131d is provided with a third mounting slot 2135c. An opening of the third mounting slot 2135c faces the movable space 2133.

For example, the fourth side portion 2131d is further provided with a first sliding shaft slot 2136. There may be two first sliding shaft slots 2136. The two first sliding shaft slots 2136 are respectively located on the two sides of the third mounting slot 2135c. An extension direction of the first sliding shaft slot 2136 may be parallel to the third direction Z.

For example, the bottom wall of the first sliding shaft slot 2136 is further provided with a fastening hole 2137, that is, an opening of a fastening hole 2137 is located on the bottom wall of the first sliding shaft slot 2136.

As shown in FIG. 21, the metal insert 2132 includes a first metal piece 2132a and a second metal piece 2132b. The second metal piece 2132b is connected to one end of the first metal piece 2132a. For example, the first metal piece 2132a and the second metal piece 2132b may be disposed at an included angle. For example, the first metal piece 2132a and the second metal piece 2132b may be disposed perpendicular to each other or approximately perpendicular to each other.

It may be understood that the first metal piece 2132a and the second metal piece 2132b of the metal insert 2132 may be of an integrally formed structure. For example, the first metal piece 2132a and the second metal piece 2132b of the metal insert 2132 may be formed by bending or stamping the integrated metal piece 12. In this way, processing steps of the first metal piece 2132a and the second metal piece 2132b of the metal insert 2132 may be reduced, and processing costs are reduced. In another implementation, the first metal piece 2132a and the second metal piece 2132b of the metal insert 2132 may alternatively be connected as a whole through welding, bonding, fastening, or the like. This is not specifically limited in this application.

In this implementation, the metal insert 2132 embedded in the insulation body 2131 may be integrated with the insulation body 2131 through insert-molding (insert-molding) or the like to form a mechanical part. In this case, the metal insert 2132 is embedded in the insulation body 2131. In this way, the metal insert 2132 can be used to improve overall strength of the image stabilization bracket 213.

For example, the first metal piece 2132a of the metal insert 2132 may be embedded in the first side portion 2131a of the insulation body 2131. The second metal piece 2132b of the metal insert 2132 may be embedded in the second side portion 2131b of the insulation body 2131. In another implementation, at least a part of the first metal piece 2132a of the metal insert 2132 may also be fastened to the bottom wall of the first mounting slot 2135a through bonding or the like. At least a part of the second metal piece 2132b of the metal insert 2132 may also be fastened to the bottom wall of the second mounting slot 2135b in through bonding or the like.

As shown in FIG. 21, in some implementations, the image stabilization bracket 213 further includes a first conductive member 2138a, a second conductive member 2138b, a third conductive member 2138c, and a fourth conductive member 2138d that are spaced apart. The first conductive member 2138a may be used as a transmission channel of a negative electrode (namely, a ground cable) of a power supply. The second conductive member 2138b may be used as a transmission channel of a positive electrode of the power supply. The third conductive member 2138c may be used as an SDA (serial data, serial data) transmission channel of an I2C signal. The fourth conductive member 2138d may be used as an SCL (serial clock, serial clock) transmission channel of an I2C signal.

The first conductive member 2138a, the second conductive member 2138b, the third conductive member 2138c, and the fourth conductive member 2138d may be integrated with the insulation body 2131 through insert-molding (insert-molding) or the like to form a mechanical part. In this case, the first conductive member 2138a, the second conductive member 2138b, the third conductive member 2138c, and the fourth conductive member 2138d may be embedded in the insulation body 2131.

FIG. 23 is a diagram of a partial structure of the image stabilization bracket 213 shown in FIG. 15 in an implementation.

As shown in FIG. 23, the metal insert 2132 of the image stabilization bracket 213 is electrically connected to the first conductive member 2138a of the image stabilization bracket 213. It may be understood that the first conductive member 2138a of the image stabilization bracket 213 is the transmission channel of the negative electrode (namely, the ground cable) of the power supply. In this way, the metal insert 2132 of the image stabilization bracket 213 can be grounded via the first conductive member 2138a of the image stabilization bracket 213, that is, the metal insert 2132 is grounded. In this case, the metal insert 2132 does not easily cause interference to a radio frequency signal of the camera module 100.

For example, the second metal piece 2132b of the metal insert 2132 is electrically connected to the first conductive member 2138a of the image stabilization bracket 213. It may be understood that because the second metal piece 2132b and the first metal piece 2132a of the metal insert 2132 are of the integrally formed structure, when the second metal piece 2132b of the metal insert 2132 is electrically connected to the first conductive member 2138a of the image stabilization bracket 213, the first metal piece 2132a of the metal insert 2132 is also electrically connected to the first conductive member 2138a of the image stabilization bracket 213.

In another implementation, the first metal piece 2132a of the metal insert 2132 may alternatively be electrically connected to the first conductive member 2138a of the image stabilization bracket 213.

As shown in FIG. 21, in some implementations, a surface of the metal insert 2132 of the image stabilization bracket 213 is protrusively provided with a protrusion block 2132c. It may be understood that a quantity, positions, and shapes of the protrusion blocks 2132c are not specifically limited.

As shown in FIG. 21, in some implementations, the first conductive member 2138a of the image stabilization bracket 213 is provided with a recess region 2138e. It may be understood that a quantity, positions, and shapes of the recess regions 2138e may adapt to the quantity, the positions, and the shapes of the protrusion blocks 2132c.

As shown in FIG. 23, with reference to FIG. 21, the protrusion block 2132c is located in the recess region 2138e, and contacts a wall surface of the recess region 2138e. For example, the protrusion block 2132c may be riveted in the recess region 2138e. In this way, the first conductive member 2138a of the image stabilization bracket 213 and the metal insert 2132 of the image stabilization bracket 213 are connected more stably. In another implementation, the metal insert 2132 of the image stabilization bracket 213 may alternatively be electrically connected to the first conductive member 2138a of the image stabilization bracket 213 through welding, a conductive adhesive, or the like. This is not specifically limited in this application.

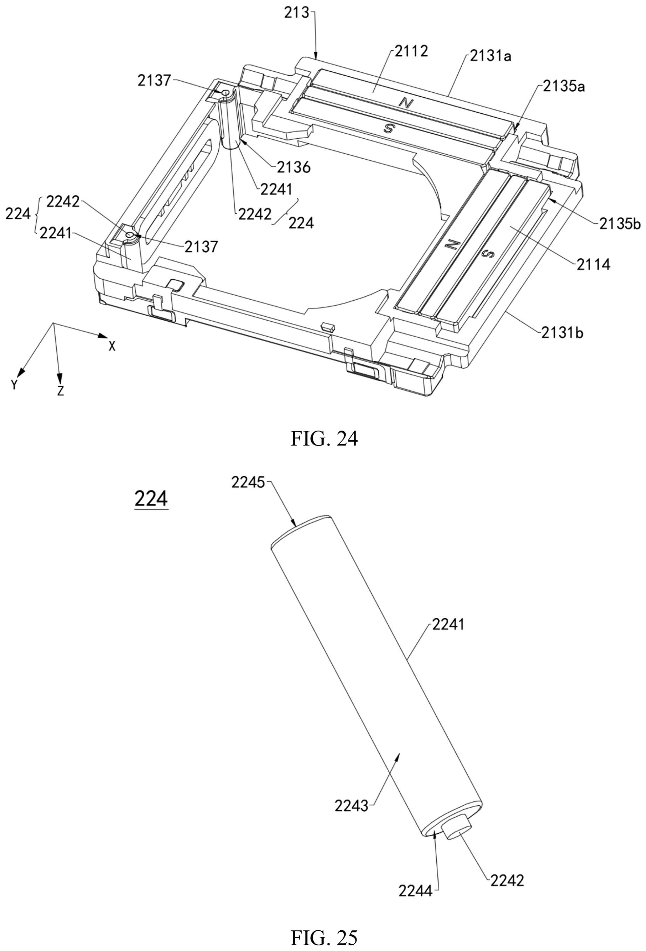

FIG. 24 is a diagram 3 of a partial structure of the voice coil motor 1 shown in FIG. 6 in an implementation.

Refer to FIG. 24. With reference to FIG. 22, the first image stabilization magnetic piece 2112 may be mounted in the first mounting slot 2135a, to be fastened to the image stabilization bracket 213. The first image stabilization magnetic piece 2112 may be a magnet or another magnetic component.

In addition, the second image stabilization magnetic piece 2114 may be mounted in the second mounting slot 2135b, to be fastened to the image stabilization bracket 213. The second image stabilization magnetic piece 2114 may be a magnet or another magnetic component.

With reference to FIG. 21, in an implementation, the metal insert 2132 of the image stabilization bracket 213 is made of a magnetic conductive material, for example, a silicon steel sheet and an alloy formed by various iron products and rare earth elements.

For example, the first metal piece 2132a of the metal insert 2132 is disposed opposite to the first image stabilization magnetic piece 2112. It may be understood that the first metal piece 2132a of the metal insert 2132 may be configured to increase magnetic field strength of the first image stabilization magnetic piece 2112. In addition, the first metal piece 2132a of the metal insert 2132 may attract the first image stabilization magnetic piece 2112, to prevent the first image stabilization magnetic piece 2112 from being detached from the image stabilization bracket 213.

For example, the second metal piece 2132b of the metal insert 2132 is disposed opposite to the second image stabilization magnetic piece 2114. It may be understood that the second metal piece 2132b of the metal insert 2132 may be configured to increase magnetic field strength of the second image stabilization magnetic piece 2114. In addition, the second metal piece 2132b of the metal insert 2132 may attract the second image stabilization magnetic piece 2114, to prevent the second image stabilization magnetic piece 2114 from being detached from the image stabilization bracket 213.

FIG. 25 is a diagram of a structure of the third support piece 224 shown in FIG. 15 at another angle.

As shown in FIG. 25, the third support piece 224 is of a sliding shaft structure.

For example, the third support piece 224 includes a shaft body 2241 and a protrusion 2242. The shaft body 2241 includes a circumferential side surface 2243 and a first end face 2244 and a second end face 2245 that are disposed back-to-back. The protrusion 2242 is protrusively disposed on the first end face 2244 of the shaft body 2241. In an implementation, both the shaft body 2241 and the protrusion 2242 are approximately rectangular.

As shown in FIG. 24 and FIG. 25, there are two third support pieces 224. The two third support pieces 224 are respectively fastened in the two first sliding shaft slots 2136 in a one-to-one correspondence.

For example, the circumferential side surface 2243 of the shaft body 2241 of the third support piece 224 is fastened to a slot side wall of the first sliding shaft slot 2136. In an implementation, the circumferential side surface 2243 of the shaft body 2241 of the third support piece 224 may be fastened to the slot side wall of the first sliding shaft slot 2136 through adhesive bonding.

For example, the protrusion 2242 of the third support piece 224 is inserted into the fastening hole 2137 of the image stabilization bracket 213. For example, the protrusion 2242 of the third support piece 224 may be tightly fitted with the fastening hole 2137 of the image stabilization bracket 213.

It may be understood that the protrusion 2242 of the third support piece 224 is inserted into the fastening hole 2137 of the image stabilization bracket 213, so that the third support piece 224 and the image stabilization bracket 213 are connected more stably, that is, the third support piece 224 is prevented, to a large extent, from tilting relative to the image stabilization bracket 213.

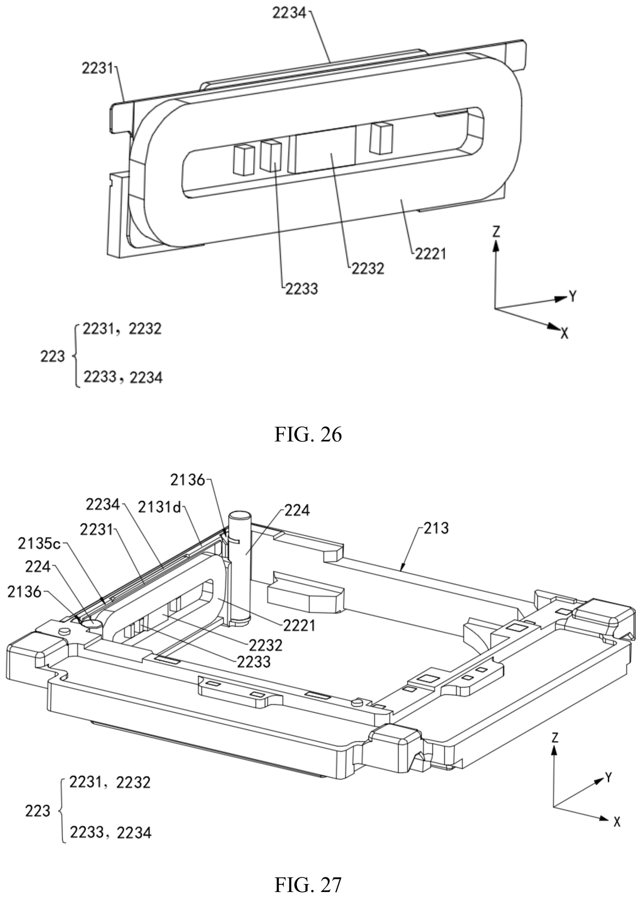

FIG. 26 is a diagram of an assembling structure of the circuit board assembly 223 and the focusing coil 2221 shown in FIG. 15.

As shown in FIG. 26, in some embodiments, both the focusing drive chip 2232 and the focusing sensor 2233 of the circuit board assembly 223 are fastened to the focusing circuit board 2231 and are electrically connected to the focusing circuit board 2231. The focusing coil 2221 is fastened to the focusing circuit board 2231 and is electrically connected to the focusing circuit board 2231. It may be understood that an input end and an output end of the focusing coil 2221 may form a current loop with the focusing drive chip 2232 via the focusing circuit board 2231. In this case, the focusing drive chip 2232 may control a current condition of the focusing coil 2221 (for example, whether a current is connected, or a current value during powered-on, or the like) via the focusing circuit board 2231. For example, the focusing coil 2221 may be disposed around the focusing drive chip 2232 and the focusing sensor 2233. In this way, the focusing drive chip 2232 and the focusing sensor 2233 can effectively use the inner space of the focusing coil 2221. This improves space utilization of the voice coil motor 1 to a large extent.

For example, the focusing magnetic attraction piece 2234 is fastened to a side, backing the focusing coil 2221, of the focusing circuit board 2231. The focusing magnetic attraction piece 2234 is made of a material that can generate a magnetic attraction force with a magnet or another magnetic component, for example, a ferromagnetic material. In addition, the focusing magnetic attraction piece 2234 may also be configured to increase structural strength of the circuit board assembly 223 and reduce a risk of deformation of the focusing circuit board 2231.

In another implementation, the circuit board assembly 223 may also include a reinforcement piece (not shown in the figure). The reinforcement piece is fastened to the side, backing the focusing coil 2221, of the focusing circuit board 2231, and is configured to increase structural strength of the circuit board assembly 223 and reduce a risk of deformation of the focusing circuit board 2231. It may be understood that a position, a size, and a shape of the reinforcement piece are not specifically limited in this implementation.

FIG. 27 is a diagram of a structure of a part of the voice coil motor 1 shown in FIG. 26 at another angle.

As shown in FIG. 25 and FIG. 26, for example, the circuit board assembly 223 is mounted in the third mounting slot 2135c of the image stabilization bracket 213, to be fastened to the image stabilization bracket 213. In this case, the focusing coil 2221 is fastened to the image stabilization bracket 213 via the focusing circuit board 2231. It may be understood that at least a part of the circuit board assembly 223 is located in the third mounting slot 2135c, so that structures of the circuit board assembly 223 and the image stabilization bracket 213 are arranged in a compact manner. This helps improve space utilization.

For example, both the focusing circuit board 2231 and the focusing magnetic attraction piece 2234 of the circuit board assembly 223 may be fastened in the third mounting slot 2135c through adhesive bonding.

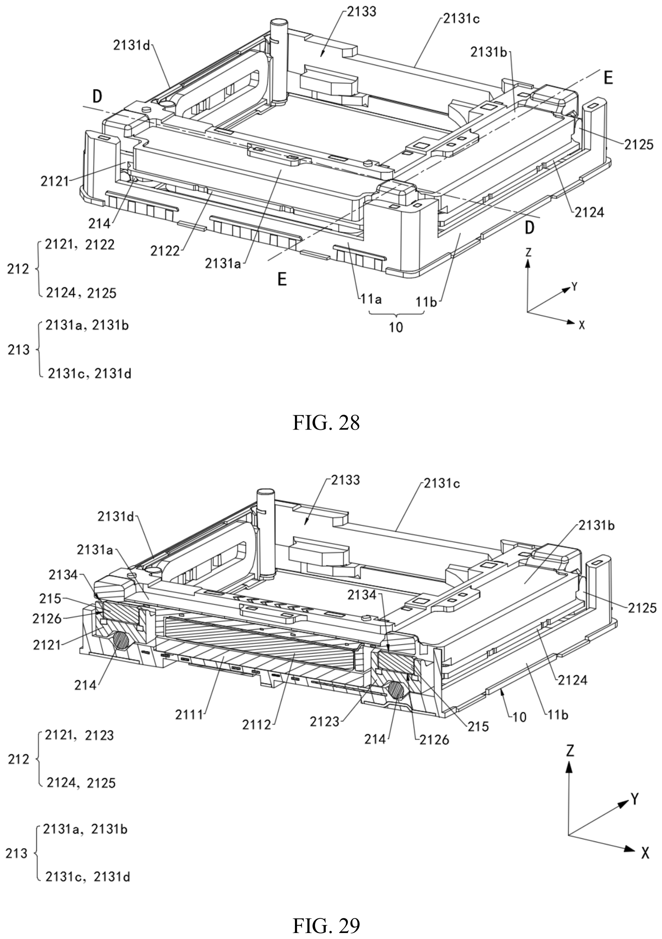

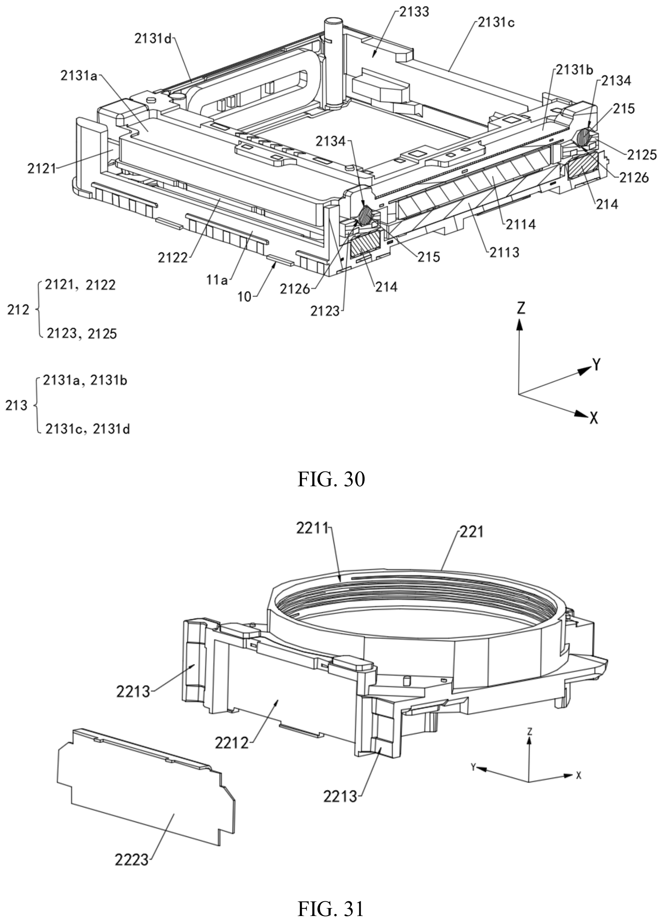

FIG. 28 is a diagram 4 of a partial structure of the voice coil motor 1 shown in FIG. 6 in an implementation. FIG. 29 is a partial sectional diagram of an embodiment of a part of the voice coil motor 1 shown in FIG. 28 at D-D. FIG. 30 is a partial sectional diagram of an embodiment of a part of the voice coil motor 1 shown in FIG. 28 at E-E.

As shown in FIG. 28 to FIG. 30, in some embodiments, the image stabilization bracket 213 is movably connected to the base 10, and the image stabilization bracket 213 is located on a side, backing the base 10, of the three support portions (namely, the first support portion 2121, the second support portion 2123, and the third support portion 2125) of the guide bracket 212. The first support portion 2121 of the guide bracket 212 is correspondingly disposed at the joint between the first side portion 2131a and the fourth side portion 2131d of the image stabilization bracket 213, the second support portion 2123 of the guide bracket 212 is correspondingly disposed at the joint between the first side portion 2131a and the second side portion 2131b of the image stabilization bracket 213, and the third support portion 2125 of the guide bracket 212 is correspondingly disposed at the joint between the second side portion 2131b and the third side portion 2131c of the image stabilization bracket 213. In this case, the three support portions (namely, the first support portion 2121, the second support portion 2123, and the third support portion 2125) of the guide bracket 212 are located between the image stabilization bracket 213 and the base 10.

The three second sliding slots 2134 of the image stabilization bracket 213 are disposed in a one-to-one correspondence with the three second grooves 2126 of the guide bracket 212. The second support piece 215 mounted in the second groove 2126 is partially embedded in the second sliding slot 2134. In this case, the first support portion 2121, the second support portion 2123, and the third support portion 2125 of the guide bracket 212 are connected to the image stabilization bracket 213 via the plurality of second support pieces 215. The image stabilization bracket 213 is slidably connected to the guide bracket 212 via the plurality of second support pieces 215, and relative sliding directions between the image stabilization bracket and the guide bracket are parallel to guiding directions of the second support pieces 215. When the second support piece 215 is of a sliding shaft structure, an axial direction of the sliding shaft is the guiding direction of the second support piece 215. When the second support piece 215 is of a ball structure, an arrangement direction of a plurality of balls is the guiding direction of the second support piece 215.

When the second support piece 215 is of the sliding shaft structure, the image stabilization bracket 213 is in line contact with the second support piece 215 during relative movement. This can avoid a risk of a dent caused by excessively large impact pressure, and improve reliability. In some embodiments, the width of a contact position between the second support piece 215 and the image stabilization bracket 213 may be increased to further improve reliability of structural fitting.

For example, as shown in FIG. 28 to FIG. 30, the guiding directions of the plurality of second support pieces 215 are parallel to the second direction X. Therefore, the image stabilization bracket 213 can slide relative to the guide bracket 212 in the second direction X. In some embodiments, the second support piece 215 may also limit positions of other mechanical parts in a direction perpendicular to the guiding direction of the second support piece. For example, the second support piece 215 is disposed, so that the image stabilization bracket 213 and the guide bracket 212 limit positions of each other in the first direction Y. In some other embodiments, another position-limiting structure may alternatively be disposed between the image stabilization bracket 213 and the guide bracket 212 to limit positions of the image stabilization bracket and the guide bracket in the first direction Y. This is not strictly limited in embodiments of this application.

In embodiments of this application, the guiding directions of the plurality of first support pieces 214 are different from the guiding directions of the plurality of second support pieces 215, so that a direction of relative movement between the image stabilization bracket 213 and the guide bracket 212 is different from a direction of relative movement between the guide bracket 212 and the base 10, and the image stabilization bracket 213 can move relative to the base 10 on the X-Y plane. The guiding directions of the plurality of first support pieces 214 and the guiding directions of the plurality of second support pieces 215 may be perpendicular to each other, or may intersect with but is not perpendicular to each other. This is not strictly limited in embodiments of this application.

In the foregoing embodiments, the guiding directions of the plurality of first support pieces 214 are parallel to the first direction Y, and the guiding directions of the plurality of second support pieces 215 are parallel to the second direction X, so that the image stabilization bracket 213 can move relative to the guide bracket 212 in the second direction X, and the image stabilization bracket 213 and the guide bracket 212 together can move relative to the base 10 in the first direction Y.

In some other embodiments, the guiding directions of the plurality of first support pieces 214 may alternatively be parallel to the second direction X, and the guiding directions of the plurality of second support pieces 215 may alternatively be parallel to the first direction Y, so that the image stabilization bracket 213 can move relative to the guide bracket 212 in the first direction Y, and the image stabilization bracket 213 and the guide bracket 212 together can move relative to the base 10 in the second direction X. In this case, extension directions of the plurality of first grooves 116 of the base 10 and directions of the plurality of first sliding slots 2127 of the guide bracket 212 change with the guiding directions of the plurality of first support pieces 214, to be specific, change to be parallel to the second direction X; and extension directions of the plurality of second grooves 2126 of the guide bracket 212 and directions of the plurality of second sliding slots 2134 of the image stabilization bracket 213 change with the guiding directions of the plurality of second support pieces 215, to be specific, change to be parallel to the first direction Y.

As shown in FIG. 28 and FIG. 30, in some embodiments, the first side portion 2131a of the image stabilization bracket 213 is disposed in correspondence with the first connection portion 2122 of the guide bracket 212, and is arranged corresponding to the first side portion 11a of the base 10. The second side portion 2131b of the image stabilization bracket 213 is disposed in correspondence with the second connection portion 2124 of the guide bracket 212, and is arranged corresponding to the second side portion 11b of the base 10. Therefore, the image stabilization bracket 213 and the guide bracket 212 are arranged tightly. This facilitates a miniaturized design of the voice coil motor 1.

As shown in FIG. 28 to FIG. 30, in some embodiments, the first connection portion 2122 of the guide bracket 212 is located on a side, backing the movable space 2133, of the first image stabilization magnetic piece 2112, and the second connection portion 2124 is located on a side, backing the movable space 2133, of the second image stabilization magnetic piece 2114. In this embodiment, the first connection portion 2122 and the second connection portion 2124 of the guide bracket 212 are arranged in an outward-circling manner, and are arranged in a staggered manner with the first image stabilization magnetic piece 2112 and the second image stabilization magnetic piece 2114 in the third direction Z, to help reduce the height of the voice coil motor 1 and implement miniaturization.

In this embodiment, compared with a guide bracket of a frame structure, the L-shaped guide bracket 212 has an obviously smaller volume, and can save spaces on both sides. This facilitates miniaturization of the voice coil motor 1 and the camera module 100. In addition, the three support portions (namely, the first support portion 2121, the second support portion 2123, and the third support portion 2125) of the guide bracket 212 are disposed corresponding to three corner portions of the image stabilization bracket 213, the first image stabilization magnetic piece 2112 and the first image stabilization coil 2111 are located between the first support portion 2121 and the second support portion 2123, and the second image stabilization magnetic piece 2114 and the second image stabilization coil 2113 are located between the second support portion 2123 and the third support portion 2125. Therefore, the guide bracket 212 can be used to ensure, when the volume is reduced, reliability of connecting the image stabilization bracket 213 to the base 10, and implement stable supporting and accurate guiding, to ensure stability of relative positions between the first image stabilization magnetic piece 2112 and the first image stabilization coil 2111 and stability of relative positions between the second image stabilization magnetic piece 2114 and the second image stabilization coil 2113. In this way, optical image stabilization movement of the voice coil motor 1 is stable and reliable.

In addition, a double-layer bracket design with the guide bracket 212 and the image stabilization bracket 213 is used for the voice coil motor 1. Each layer of bracket fits with a support piece and an adjacent mechanical part to implement guiding in one direction. No crosstalk occurs between guiding in two directions. This helps implement precise guiding for optical image stabilization. Based on a guiding function of the plurality of first support pieces 214, the guide bracket 212 and the image stabilization bracket 213 can move together relative to the base 10 in the first direction Y. Based on a guiding function of the plurality of second support pieces 215, the image stabilization bracket 213 can move relative to the guide bracket 212 in the second direction X. Therefore, the voice coil motor 1 in a fitting structure of the base 10, the first support pieces 214, the guide bracket 212, the second support pieces 215, and the image stabilization bracket 213 can implement precise guiding during optical image stabilization. This resolves a problem that the lens 2 greatly tilts (tilts) when a conventional voice coil motor 1 performs optical image stabilization.

Refer to FIG. 29. With reference to FIG. 20 and FIG. 24, in some embodiments, the first image stabilization magnetic piece 2112 is fastened to the image stabilization bracket 213, the first image stabilization coil 2111 is fastened to the base 10, the first image stabilization coil 2111 is disposed facing the first image stabilization magnetic piece 2112, configured to drive the image stabilization bracket 213 to move relative to the base 10 in the first direction Y, and the first image stabilization magnetic piece 2112 and the first image stabilization coil 2111 are arranged in the third direction Z. That the first image stabilization coil 2111 is disposed facing the first image stabilization magnetic piece 2112 means that a winding plane of the first image stabilization coil 2111 faces the first image stabilization magnetic piece 2112. For example, the winding plane of the first image stabilization coil 2111 may be disposed to be parallel to the X-Y plane.

For example, a first image stabilization sensor (not shown in the figure) may be fastened on the base 10, and the first image stabilization sensor is configured to detect a position change of the image stabilization bracket 213 in the first direction Y.

In this embodiment, in a process in which the image stabilization bracket 213 moves relative to the base 10 in the first direction Y, a movement direction of the image stabilization bracket 213 is perpendicular to a magnetic gap between the first image stabilization magnetic piece 2112 and the first image stabilization coil 2111, and the magnetic gap is not affected by a movement action of the image stabilization bracket 213. Therefore, a problem that a driving force rapidly decreases due to an increase in the magnetic gap can be avoided, to ensure that the voice coil motor 1 has a large and stable image stabilization driving force. This facilitates a large-stroke design for an optical image stabilization function of the voice coil motor 1.

The first image stabilization magnetic piece 2112 may have two opposite polarity directions (as indicated by arrows in the figure), and the polarity directions of the first image stabilization magnetic piece 2112 are disposed to be perpendicular to the winding plane of the first image stabilization coil 2111. Coils in two regions of the first image stabilization coil 2111 may be disposed corresponding to the two polarity directions of the first image stabilization magnetic piece 2112 respectively. Current flow directions in the coils in the two regions are opposite to each other. A side, facing the first image stabilization coil 2111, of the first image stabilization magnetic piece 2112 includes a north pole (N) and a south pole (S). A side, backing the first image stabilization coil 2111, of the first image stabilization magnetic piece 2112 includes a south pole (S) and a north pole (N) correspondingly.

For example, the first image stabilization magnetic piece 2112 may include one or more magnets, and the first image stabilization magnetic piece 2112 may be implemented in a plurality of structures. For example, the first image stabilization magnetic piece 2112 is a Halbach magnet array. For another example, the first image stabilization magnetic piece 2112 may be of a dual-magnet structure, for example, include two magnets. The two magnets are arranged in the first direction Y, and have opposite polarity directions. For another example, the first image stabilization magnetic piece 2112 may include at least three magnets. Among three adjacent magnets, polarity directions of two magnets located on sides are opposite to each other and are perpendicular to an arrangement direction of the three magnets, and a polarity direction of a magnet located in the middle is from one magnet to the other magnet. For another example, the first image stabilization magnetic piece 2112 may alternatively be of a single-magnet structure, for example, includes one magnet. The magnet includes two parts with opposite polarity directions, and the magnet may be made by using a bipolar magnetization technique.

In some embodiments, a first image stabilization magnetic attraction piece (not shown in the figure) is fastened on the base 10. The first image stabilization magnetic attraction piece is disposed facing the first image stabilization magnetic piece 2112, and a magnetic force between the first image stabilization magnetic attraction piece and the first image stabilization magnetic piece 2112 enables the image stabilization bracket 213 tend to approach the base 10.

Refer to FIG. 30. With reference to FIG. 20 and FIG. 24, in some embodiments, the second image stabilization magnetic piece 2114 is fastened to the image stabilization bracket 213, the second image stabilization coil 2113 is fastened to the base 10, the second image stabilization coil 2113 is disposed facing the second image stabilization magnetic piece 2114, configured to drive the image stabilization bracket 213 to move relative to the base 10 in the second direction X, and the second image stabilization magnetic piece 2114 and the second image stabilization coil 2113 are arranged in the third direction Z. That the second image stabilization coil 2113 is disposed facing the second image stabilization magnetic piece 2114 means that a winding plane of the second image stabilization coil 2113 faces the second image stabilization magnetic piece 2114. For example, the winding plane of the second image stabilization coil 2113 may be disposed to be parallel to the X-Y plane.

For example, a second image stabilization sensor (not shown in the figure) fastened to the base 10 may be configured to detect a position change of the image stabilization bracket 213 in the second direction X.

In this embodiment, in a process in which the image stabilization bracket 213 moves relative to the base 10 in the second direction X, a movement direction of the image stabilization bracket 213 is perpendicular to a magnetic gap between the second image stabilization magnetic piece 2114 and the second image stabilization coil 2113, and the magnetic gap is not affected by a movement action of the image stabilization bracket 213. Therefore, a problem that a driving force rapidly decreases due to an increase in the magnetic gap can be avoided, to ensure that the voice coil motor 1 has a large and stable image stabilization driving force. This facilitates a large-stroke design for an optical image stabilization function of the voice coil motor 1.

Driven by the first image stabilization magnetic piece 2112, the first image stabilization coil 2111, the second image stabilization magnetic piece 2114, and the second image stabilization coil 2113, the image stabilization bracket 213 can drive the focusing bracket 221 and the lens 2 to move relative to the base 10 in the second direction X and/or the first direction Y, to implement movement on the X-Y plane. In this case, the voice coil motor 1 can implement optical image stabilization for the camera module 100. Based on related designs such as arrangement positions of the first image stabilization magnetic piece 2112, the first image stabilization coil 2111, the second image stabilization magnetic piece 2114, and the second image stabilization coil 2113, the voice coil motor 1 can implement the large-stroke design for optical image stabilization, and obtain better photographing experience.

In this embodiment, a direction in which the first image stabilization coil 2111 and the first image stabilization magnetic piece 2112 drive the image stabilization bracket 213 to move is perpendicular to a direction in which the second image stabilization coil 2113 and the second image stabilization magnetic piece 2114 drive the image stabilization bracket 213 to move. In some other embodiments, a direction in which the first image stabilization coil 2111 and the first image stabilization magnetic piece 2112 drive the image stabilization bracket 213 to move may alternatively intersect with but is not perpendicular to a direction in which the second image stabilization coil 2113 and the second image stabilization magnetic piece 2114 drive the image stabilization bracket 213 to move.

For example, the second image stabilization magnetic piece 2114 may have two opposite polarity directions, and the polarity directions of the second image stabilization magnetic piece 2114 are disposed to be perpendicular to the winding plane of the second image stabilization coil 2113. Coils in two regions of the second image stabilization coil 2113 may be disposed corresponding to the two polarity directions of the second image stabilization magnetic piece 2114 respectively. Current flow directions in the coils in the two regions are opposite to each other. A side, facing the second image stabilization coil 2113, of the second image stabilization magnetic piece 2114 includes a north pole (N) and a south pole (S). A side, backing the second image stabilization coil 2113, of the second image stabilization magnetic piece 2114 includes a south pole (S) and a north pole (N) correspondingly.

For example, the second image stabilization magnetic piece 2114 may include one or more magnets, and the second image stabilization magnetic piece 2114 may be implemented in a plurality of structures. For example, the second image stabilization magnetic piece 2114 is a Halbach magnet array. For another example, the second image stabilization magnetic piece 2114 may be of a dual-magnet structure, for example, include two magnets. The two magnets are arranged in the second direction X, and have opposite polarity directions. For example, the second image stabilization magnetic piece 2114 may include at least three magnets. Among three adjacent magnets, polarity directions of two magnets located on sides are opposite to each other and are perpendicular to an arrangement direction of the three magnets, and a polarity direction of a magnet located in the middle is from one magnet to the other magnet. In some other embodiments, the second image stabilization magnetic piece 2114 may alternatively be of a single-magnet structure, for example, includes one magnet. The magnet includes two parts with opposite polarity directions, and the magnet may be made by using a bipolar magnetization technique.

In some embodiments, a second image stabilization magnetic attraction piece (not shown in the figure) is fastened on the base 10. The second image stabilization magnetic attraction piece is disposed facing the second image stabilization magnetic piece 2114, and a magnetic force between the second image stabilization magnetic attraction piece and the second image stabilization magnetic piece 2114 enables the image stabilization bracket 213 tend to approach a bottom plate of the base 10.

As shown in FIG. 29 and FIG. 30, all of the first image stabilization coil 2111, the first image stabilization magnetic piece 2112, the second image stabilization coil 2113, and the second image stabilization magnetic piece 2114 of the voice coil motor 1 may be approximately arranged on the X-Y plane, and a movement stroke of the image stabilization bracket 213 in the first direction Y and/or a movement stroke of the image stabilization bracket 213 in the second direction X may be increased by increasing the widths of magnetic pieces (namely, a size of the first image stabilization magnetic piece 2112 in the first direction Y and a size of the second image stabilization magnetic piece 2114 in the second direction X). This helps implement the large-stroke design for optical image stabilization without increasing the height of the voice coil motor 1. In addition, resistance to movement of the voice coil motor 1 during optical image stabilization is mainly sliding friction between a support piece and a fitted mechanical part, and is irrelevant to the movement stroke. Therefore, the resistance does not significantly increase during large-stroke optical image stabilization, so that the large-stroke design for optical image stabilization can be implemented without greatly increasing the driving force.

FIG. 31 is a diagram of structures of the focusing bracket 221 and the focusing magnetic conductive piece 2223 shown in FIG. 15 at another angle.

As shown in FIG. 31, in some embodiments, the focusing bracket 221 may be generally frame-shaped, and the focusing bracket 221 has a mounting space 2211. The focusing bracket 221 is provided with a fourth mounting slot 2212 and a second sliding shaft slot 2213. Openings of the fourth mounting slot 2212 and the second sliding shaft slot 2213 are disposed backward to the mounting space 2211.

For example, there are two second sliding shaft slots 2213, and the two second sliding shaft slots 2213 are located on two sides of the fourth mounting slot 2212. Extension directions of the two second sliding shaft slots 2213 may be parallel to the third direction Z.

It may be understood that the mounting space 2211 of the focusing bracket 221 is used to mount the lens 2. For example, a central axis of the focusing bracket 221 is parallel to an optical axis of the lens 2.

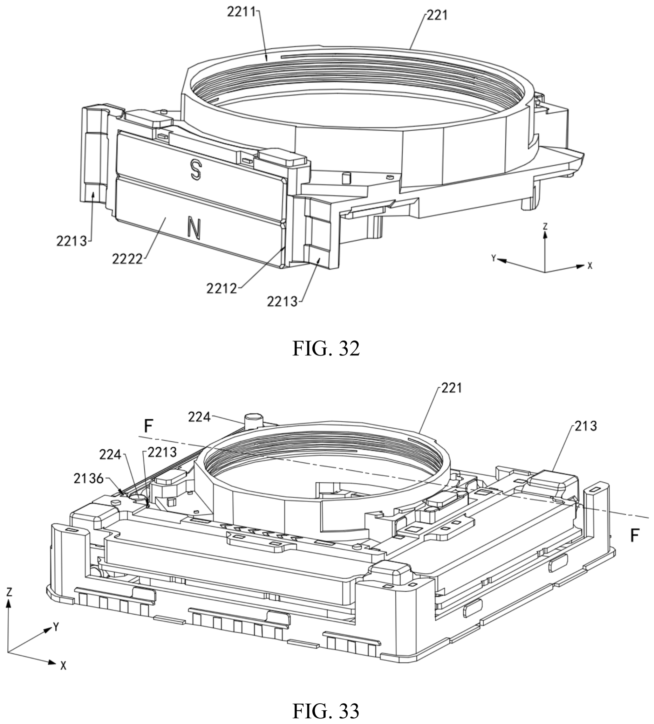

FIG. 32 is a diagram 5 of a partial structure of the voice coil motor 1 shown in FIG. 6 in an implementation.

As shown in FIG. 31 and FIG. 32, in some embodiments, the focusing magnetic piece 2222 may be mounted in the fourth mounting slot 2212 of the focusing bracket 221, to be fastened to the focusing bracket 221.

As shown in FIG. 31 and FIG. 32, in some embodiments, the focusing magnetic conductive piece 2223 is fastened to the focusing bracket 221, and is disposed opposite to the focusing magnetic piece 2222. For example, the focusing magnetic conductive piece 2223 may be integrated with the focusing bracket 221 through insert-molding (insert-molding) or the like to form a mechanical part. In this case, the focusing magnetic conductive piece 2223 is embedded in the focusing bracket 221. In another implementation, a main part of the focusing magnetic conductive piece 2223 may be located between the focusing magnetic piece 2222 and the bottom wall of the fourth mounting slot 2212. The focusing magnetic conductive piece 2223 may be fastened to the focusing bracket 221 in a manner like bonding, and the focusing magnetic piece 2222 may be fastened to the focusing magnetic conductive piece 2223 in a manner of bonding.

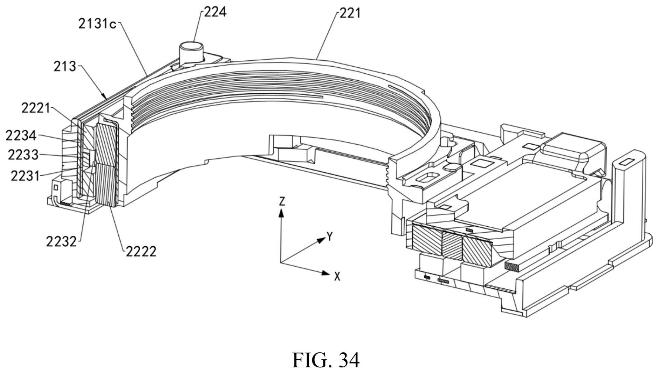

FIG. 33 is a diagram 6 of a partial structure of the voice coil motor 1 shown in FIG. 6 in an implementation. FIG. 34 is a partial sectional diagram of an embodiment of a part of the voice coil motor 1 shown in FIG. 33 at F-F.

As shown in FIG. 33 and FIG. 34, in some embodiments, the focusing bracket 221 is mounted in the inner side of the image stabilization bracket 213, and the focusing magnetic piece 2222 is disposed opposite to the focusing coil 2221. In addition, the two second sliding shaft slots 2213 of the focusing bracket 221 are disposed in a one-to-one correspondence with the two first sliding shaft slots 2136 of the image stabilization bracket 213. A part of one third support piece 224 is located in one second sliding shaft slot 2213, and a part of the other third support piece 224 is located in one second sliding shaft slot 2213. The slot wall of the second sliding shaft slot 2213 may slide relative to the third support piece 224.

It may be understood that the focusing bracket 221 is slidably connected to the image stabilization bracket 213 via the third support pieces 224, and relative sliding directions between the focusing bracket and the image stabilization bracket are parallel to guiding directions of the third support pieces 224, namely, the third direction Z. When the third support piece 224 is of a sliding shaft structure, an axial direction of the sliding shaft is the guiding direction of the third support piece 224. When the third support piece 224 is of a ball structure, an arrangement direction of a plurality of balls is the guiding direction of the third support piece 224.

As shown in FIG. 34, the focusing coil 2221 is fastened to the image stabilization bracket 213, the focusing magnetic piece 2222 is fastened to the focusing bracket 221, and the focusing coil 2221 is disposed facing the focusing magnetic piece 2222 and configured to drive the focusing bracket 221 to move relative to the image stabilization bracket 213 in the third direction Z. When the focusing bracket 221 moves relative to the image stabilization bracket 213 in the third direction Z, the focusing bracket 221 may drive the lens 2 mounted on the focusing bracket to move in the third direction Z. In this case, the voice coil motor 1 can implement autofocus for the camera module 100. That the focusing coil 2221 is disposed facing the focusing magnetic piece 2222 means that a winding plane of the focusing coil 2221 faces the focusing magnetic piece 2222. For example, the focusing sensor 2233 (refer to the figure) fastened to the focusing circuit board 2231 may be configured to detect a position change of the focusing bracket 221 in the third direction Z.

In this embodiment, in a process in which the focusing bracket 221 moves relative to the image stabilization bracket 213, a movement direction of the focusing bracket 221 is perpendicular to a magnetic gap between the focusing magnetic piece 2222 and the focusing coil 2221, and the magnetic gap is not affected by a movement action of the focusing bracket 221. Therefore, a problem that a driving force rapidly decreases due to an increase in the magnetic gap can be avoided, to ensure that the voice coil motor 1 has a large and stable focusing driving force. This facilitates a large-stroke design for a focusing function of the voice coil motor 1.

With reference to FIG. 32 and FIG. 34, the focusing magnetic piece 2222 may have two opposite polarity directions, and the polarity directions of the focusing magnetic piece 2222 are disposed to be perpendicular to the winding plane of the focusing coil 2221. Coils in two regions of the focusing coil 2221 may be disposed corresponding to the two polarity directions of the focusing magnetic piece 2222 respectively. Current flow directions in the coils in the two regions are opposite to each other. It may be understood that a polarity direction may be a direction from a north pole (N) to a south pole (S), or a direction from a south pole (S) to a north pole (N). In this case, a side, facing the focusing coil 2221, of the focusing magnetic piece 2222 includes a north pole (N) and a south pole (S); and a side, backing the focusing coil 2221, of the focusing magnetic piece 2222 includes a south pole (S) and a north pole (N) correspondingly.

For example, the focusing magnetic piece 2222 may include one or more magnets, and the focusing magnetic piece 2222 may be implemented in a plurality of structures. For example, in some embodiments, a dual-magnet solution may be used for the focusing magnetic piece 2222. For example, the focusing magnetic piece includes two magnets, and the two magnets are arranged in the third direction Z and have opposite polarity directions. In some other embodiments, the focusing magnetic piece 2222 is a Halbach magnet array. In some other embodiments, a single-magnet solution may be used for the focusing magnetic piece 2222. For example, the focusing magnetic piece includes one magnet. The magnet includes two parts with opposite polarity directions, and the magnet may be made by using a bipolar magnetization technique.

As shown in FIG. 34, in some embodiments, a magnetic attraction force is formed between the focusing magnetic piece 2222 and the focusing magnetic attraction piece 2234, so that the focusing bracket 221 tends to approach the third side portion 2131c of the image stabilization bracket 213. The focusing bracket 221, the third support piece 224, and the image stabilization bracket 213 keep in contact. The third support piece 224 can better guide the focusing bracket 221 to move relative to the image stabilization bracket 213 in the third direction Z.

As shown in FIG. 29, FIG. 30, and FIG. 34, both the focusing drive assembly 222 and the image stabilization driving assembly 211 of the voice coil motor 1 are of a moving-magnet design, and driving of the voice coil motor 1 in the first direction Y, the second direction X, and the third direction Z is separately controlled by a group of driving pieces (including a coil and a magnetic piece). In a process in which the focusing bracket 221 of the voice coil motor 1 moves relative to the image stabilization bracket 213 in the third direction Z to perform autofocus, relative positions between the image stabilization bracket 213 and the base 10 are not affected, and a magnetic gap width of the image stabilization driving assembly does not easily change. Similarly, in a process in which the image stabilization bracket 213 moves relative to the base 10 in the first direction Y and/or the second direction X to perform optical image stabilization, the focusing bracket 221 moves with the image stabilization bracket 213, relative positions between the focusing bracket and the image stabilization bracket are not affected, and a magnetic gap width of the focusing drive assembly 222 does not easily change. Therefore, the focusing drive assembly 222 of the voice coil motor 1 and the image stabilization driving assembly are decoupled, and do not interfere with each other in a movement process. This helps ensure driving precision of the voice coil motor 1.

In addition, because the focusing bracket 221 is located in the inner side of the image stabilization bracket 213, the focusing coil 2221 is fastened to the image stabilization bracket 213, and the focusing magnetic piece 2222 is fastened to the focusing bracket 221. Therefore, a rotor assembly for optical image stabilization of the voice coil motor 1 wraps a rotor assembly for focusing. It may be understood that when the focusing bracket 221 is located in the inner side of the image stabilization bracket 213, the image stabilization bracket 213 may be disposed around the focusing bracket 221. The being disposed around may be that the image stabilization bracket 213 is disposed surround the focusing bracket 221, or may be that a part of the image stabilization bracket 213 is disposed around the focusing bracket 221. In this implementation, the image stabilization bracket 213 is ring-shaped. In this case, the image stabilization bracket 213 is disposed surround the focusing bracket 221.

It may be understood that in some solutions, the image stabilization bracket 213 is located in the inner side of the focusing bracket 221. In this case, when the camera module 100 needs to focus, the focusing bracket 221 needs to drive the image stabilization bracket 213 and the lens 2 to move in the third direction. In this way, a rotor formed by the focusing bracket 221, the image stabilization bracket 213, and the lens 2 has a heavy weight. Consequently, the focusing drive assembly 222 needs to increase a driving force by increasing the volume. Therefore, such a setting is not conducive to a light-weight and miniaturized design of the voice coil motor 1. However, in this embodiment, the focusing bracket 221 is disposed in the inner side of the image stabilization bracket 213. In this case, when the camera module 100 needs to perform focusing, the focusing bracket 221 needs to drive the lens 2 to move in the third direction Z. In this way, in this implementation, the image stabilization bracket 213 can be omitted from a rotor in a focusing process, that is, a rotor formed by the focusing bracket 221 and the lens 2 has a light weight. This facilitates a miniaturized setting of the focusing drive assembly 222. The voice coil motor 1 in this implementation can implement a light-weight and miniaturized setting.

It may be understood that in the solution in which the image stabilization bracket 213 is located in the inner side of the focusing bracket 221, at least two image stabilization driving assemblies in the image stabilization bracket 213 need to be used to push the image stabilization bracket 213 to move on the X-Y plane. In this way, at least two sets of wires need to be arranged in the voice coil motor 1 to provide a signal and supply power for the image stabilization driving assemblies, and the at least two sets of wires need to pass through the focusing bracket 221. Therefore, a power-on configuration in this solution is complex, and difficulty in disposing the voice coil motor 1 is increased. However, in this embodiment, the focusing bracket 221 is disposed in the inner side of the image stabilization bracket 213. Because one set of focusing driving assemblies 222 needs to be used in the focusing bracket 221 to push the focusing bracket 221 to move in the third direction Z, one set of wires needs to be used in the voice coil motor 1 to provide a signal and supply power for the focusing drive assembly 222, that is, one set of wires needs to pass through the image stabilization bracket 213. Therefore, a power-on solution in the solution in this implementation is easy, and difficulty in disposing the voice coil motor 1 can be reduced to a large extent.

As shown in FIG. 34, a plane (namely, the winding plane) wound by a conducting wire of the focusing coil 2221 may be parallel to the third direction Z. In this case, the focusing coil 2221 is arranged vertically, so that the focusing coil 2221 can occupy a small area on the X-Y plane. This facilitates a miniaturized setting of the voice coil motor 1. The focusing magnetic piece 2222 may include two opposite polarity directions, and the two polarity directions are perpendicular to the third direction Z. In this case, the focusing magnetic piece 2222 may be arranged vertically, to reduce a space occupied by the focusing magnetic piece 2222 on the X-Y plane. This facilitates the miniaturized design of the voice coil motor 1.

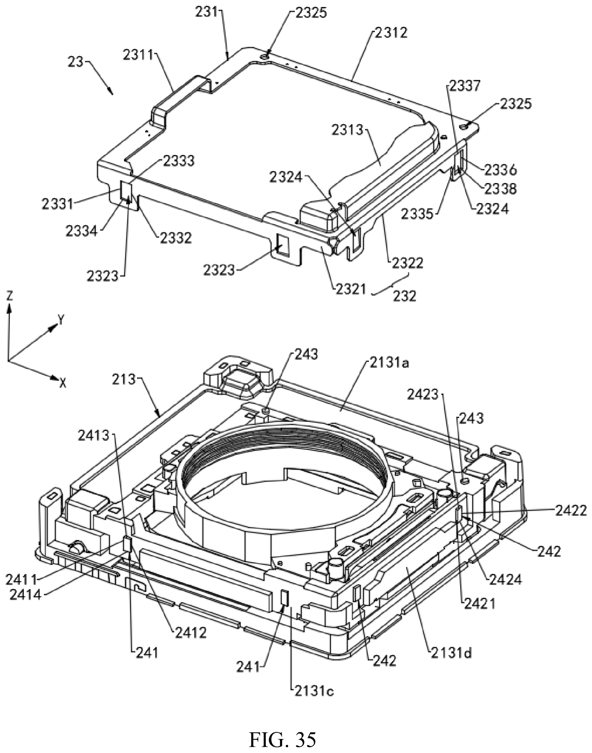

FIG. 35 is a partial exploded diagram of the voice coil motor 1 shown in FIG. 6 in an implementation.

As shown in FIG. 35, for example, the stopper bracket 23 includes a top plate member 231 and a side frame 232. The side frame 232 is connected to a periphery of the top plate member 231. In this implementation, the side frame 232 is connected to and integrated with the top plate member 231 to form a mechanical part. In another implementation, the side frame 232 may alternatively be connected to the periphery of the top plate member 231 by using another technique (for example, welding, bonding, or fastening).

For example, the top plate member 231 includes a first plate member 2311, a second plate member 2312, and a third plate member 2313 that are sequentially connected. In the top plate member 231, the first plate member 2311 is disposed opposite to the third plate member 2313. The top plate member 231 is approximately in a gantry shape.

For example, the side frame 232 includes a first side edge portion 2321 and a second side edge portion 2322. The first side edge portion 2321 may be connected between the first plate member 2311 and the third plate member 2313. The second side edge portion 2322 may be connected to a periphery of the third plate member 2313.

For example, the first side edge portion 2321 is provided with first mounting holes 2323. There are two first mounting holes 2323. The two first mounting holes 2323 are spaced apart on the two sides of the first side edge portion 2321. A shape of the first mounting hole 2323 is a rectangular hole. In another implementation, a quantity, shapes, and positions of the first mounting holes 2323 are not specifically limited.

For example, the first mounting hole 2323 includes a first hole wall 2331 and a second hole wall 2332 that are disposed opposite, and a third hole wall 2333 and a fourth hole wall 2334 that are disposed opposite. The third hole wall 2333 and the fourth hole wall 2334 of the first mounting hole 2323 are connected between the first hole wall 2331 and the second hole wall 2332 of the first mounting hole 2323.

For example, the second side edge portion 2322 is provided with second mounting holes 2324. There are two second mounting holes 2324. The two second mounting holes 2324 are spaced apart on the two sides of the second side edge portion 2322. A shape of the second mounting hole 2324 is a rectangular hole. In another implementation, a quantity, shapes, and positions of the second mounting holes 2324 are not specifically limited.

For example, the second mounting hole 2324 includes a first hole wall 2335 and a second hole wall 2336 that are disposed opposite, and a third hole wall 2337 and a fourth hole wall 2338 that are disposed opposite. The third hole wall 2337 and the fourth hole wall 2338 of the second mounting hole 2324 are connected between the first hole wall 2335 and the second hole wall 2336 of the second mounting hole 2324.

As shown in FIG. 35, for example, the image stabilization bracket 213 includes first mounting blocks 241. There are two first mounting blocks 241. The two first mounting blocks 241 are spaced apart on the two sides of a side surface of the third side portion 2131c of the image stabilization bracket 213. A shape of the first mounting block 241 is a rectangular block. In another implementation, a quantity, shapes, and positions of the first mounting blocks 241 are not specifically limited.

For example, the first mounting block 241 includes a first side surface 2411 and a second side surface 2412 that are disposed back-to-back, and a third side surface 2413 and a fourth side surface 2414 that are disposed opposite. The third side surface 2413 and the fourth side surface 2414 of the first mounting block 241 are connected between the first side surface 2411 and the second side surface 2412 of the first mounting block 241.

As shown in FIG. 35, for example, the image stabilization bracket 213 includes second mounting blocks 242. There are two second mounting blocks 242. The two second mounting blocks 242 are spaced apart on the two sides of a side surface of the fourth side portion 2131d of the image stabilization bracket 213. A shape of the second mounting block 242 is a rectangular block. In another implementation, a quantity, shapes, and positions of the second mounting blocks 242 are not specifically limited.

For example, the second mounting block 242 includes a first side surface 2421 and a second side surface 2422 that are disposed back-to-back, and a third side surface 2423 and a fourth side surface 2424 that are disposed opposite. The third side surface 2423 and the fourth side surface 2424 of the second mounting block 242 are connected between the first side surface 2421 and the second side surface 2422 of the second mounting block 242.

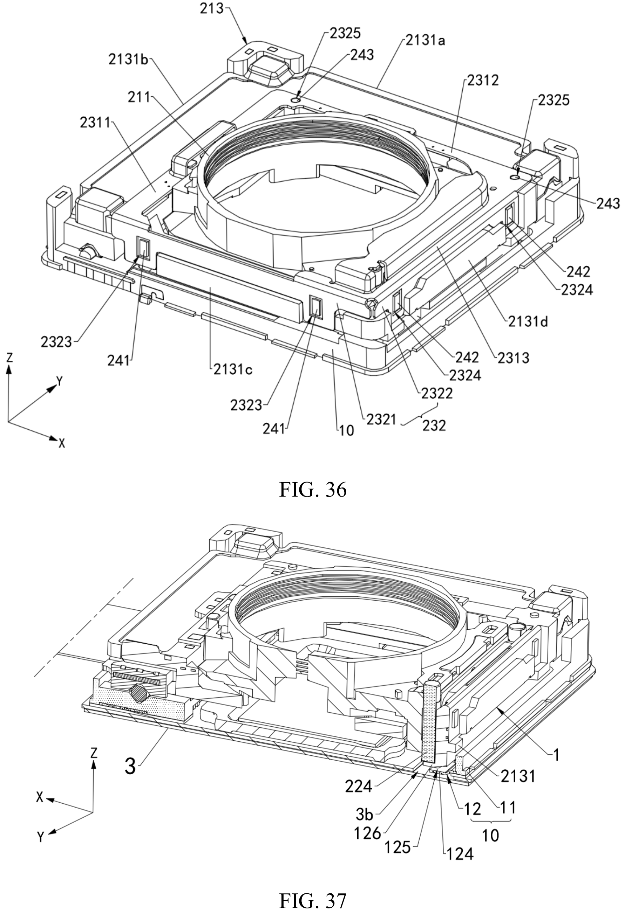

FIG. 36 is a diagram 7 of a partial structure of the voice coil motor 1 shown in FIG. 6 in an implementation.

As shown in FIG. 36, the stopper bracket 23 is fastened on a side, backing the base 10, of the image stabilization bracket 213. The stopper bracket 23 may fit with the image stabilization bracket 213, to limit a movement stroke of the focusing bracket 221 in the third direction Z. This prevents the focusing bracket 221 from detaching from the stopper bracket 23, and enables relative movement actions between the focusing bracket 221 and the stopper bracket 23 to be more reliable.

For example, the top plate member 231 is fastened to the top surface of the image stabilization bracket 213. The first side edge portion 2321 is fastened to the side surface of the third side portion 2131c of the image stabilization bracket 213. The second side edge portion 2322 is fastened to a side surface of the fourth side portion of the image stabilization bracket. In this way, the first side edge portion 2321 and the second side edge portion 2322 are respectively fastened to the side surfaces of two adjacent side portions of the image stabilization bracket 213.

For example, the stopper bracket 23 may be fastened to the insulation body 2131 (refer to FIG. 21) of the image stabilization bracket 213 through adhesive bonding. In addition, the stopper bracket 23 may alternatively be fastened to the metal insert 2132 (refer to FIG. 21) of the image stabilization bracket 213 through welding. In this way, the stopper bracket 23 is connected to the image stabilization bracket 213 more secure, to prevent the stopper bracket 23 from falling off from the image stabilization bracket 213.

For example, the stopper bracket 23 may also be fastened to the third support piece 224 (refer to FIG. 34) through welding. In this way, the third support piece 224 is connected to the image stabilization bracket 213 more secure, to prevent the third support piece 224 (refer to FIG. 34) from falling off or tilting relative to the image stabilization bracket 213.

For example, the first plate member 2311 of the top plate member 231 of the stopper bracket 23 is disposed corresponding to the second side portion 2131b of the image stabilization bracket 213. The second plate member 2312 of the top plate member 231 of the stopper bracket 23 is disposed corresponding to the first side portion 2131a of the image stabilization bracket 213. The third plate member 2313 of the top plate member 231 of the stopper bracket 23 is disposed corresponding to the fourth side portion 2131d of the image stabilization bracket 213.

Refer to FIG. 36. With reference to FIG. 35, the first mounting block 241 of the image stabilization bracket 213 is located in the first mounting hole 2323 of the stopper bracket 23. The second mounting block 242 of the image stabilization bracket 213 is located in the second mounting hole 2324 of the stopper bracket 23.

For example, the first side surface 2411 of the first mounting block 241 is disposed opposite to the first hole wall 2331 of the first mounting hole 2323. The second side surface 2412 of the first mounting block 241 is disposed opposite to the second hole wall 2332 of the first mounting hole 2323. A third side surface 2413 of the first mounting block 241 is disposed opposite to the third hole wall 2333 of the first mounting hole 2323. The fourth side surface 2414 of the first mounting block 241 is disposed opposite to the fourth hole wall 2334 of the first mounting hole 2323.

For example, the first side surface 2421 of the second mounting block 242 is disposed opposite to the first hole wall 2335 of the second mounting hole 2324. The second side surface 2422 of the second mounting block 242 is disposed opposite to the second hole wall 2336 of the second mounting hole 2324. The third side surface 2423 of the second mounting block 242 is disposed opposite to the third hole wall 2337 of the second mounting hole 2324. The fourth side surface 2424 of the second mounting block 242 is disposed opposite to the fourth hole wall 2338 of the second mounting hole 2324.

In an implementation, the first mounting block 241 of the image stabilization bracket 213 is disposed to tightly fit with the first mounting hole 2323 of the stopper bracket 23, and the second mounting block 242 of the image stabilization bracket 213 is disposed to tightly fit with the second mounting hole 2324 of the stopper bracket 23, so that the stopper bracket 23 is stably connected to the image stabilization bracket 213. It may be understood that in this implementation, in an assembling process of the stopper bracket 23 and the image stabilization bracket 213, to ensure that the first mounting block 241 of the image stabilization bracket 213 can be tightly fitted with the first mounting hole 2323 of the stopper bracket 23, and the second mounting block 242 of the image stabilization bracket 213 can be tightly fitted with the second mounting hole 2324 of the stopper bracket 23, the stopper bracket 23 needs to be assembled to the image stabilization bracket 213 from the top of the image stabilization bracket 213 in the third direction Z. In this case, in the assembling process, the first side edge portion 2321 of the stopper bracket 23 easily pushes against the first mounting block 241 of the image stabilization bracket 213, and the second side edge portion 2322 of the stopper bracket 23 easily pushes against the second mounting block 242 of the image stabilization bracket 213. In one aspect, difficulty in assembling the stopper bracket 23 and the image stabilization bracket 213 is increased, and in another aspect, the stopper bracket 23 is easily deformed due to extrusion, and there is a risk that the stopper bracket cannot be restored after being deformed. Even if the stopper bracket 23 is assembled on the image stabilization bracket 213, it is difficult to position the stopper bracket 23, and this is not conducive to a subsequent welding operation. Based on this problem, this application provides a structure of the stopper bracket 23 and the image stabilization bracket 213, so that the stopper bracket 23 is conveniently assembled on the image stabilization bracket 213, and the stopper bracket 23 is not easily deformed. Details are as follows.

As shown in FIG. 35, the top plate member 231 is provided with positioning holes 2325. For example, there are two positioning holes 2325. A shape of the positioning hole 2325 is a rectangular hole. The positioning hole 2325 is located in the second plate member 2312 of the top plate member 231. In another implementation, a quantity, shapes, and positions of the positioning holes 2325 are not specifically limited.

As shown in FIG. 35, the image stabilization bracket 213 includes positioning blocks 243. For example, there are two positioning blocks 243. The two positioning blocks 243 are separately spaced apart and protrusively disposed on the top surface of the first side portion 2131a of the image stabilization bracket 213. The top surface of the first side portion 2131a is a surface, backing the guide bracket 212, of the first side portion 2131a. The positioning block 243 is rectangular. In another implementation, a quantity, positions, and shapes of the positioning holes 2325 are not specifically limited. For example, the two positioning blocks 243 are separately spaced apart and protrusively disposed on the top surface of the second side portion 2131b of the image stabilization bracket 213.

As shown in FIG. 35, for example, in the second direction X, a distance between the first hole wall 2331 and the second hole wall 2332 of the first mounting hole 2323 is a first distance (namely, a size of the first mounting hole 2323 in the second direction X). A distance between the first side surface 2411 and the second side surface 2412 of the first mounting block 241 is a second distance (namely, a size of the first mounting block 241 in the second direction X). A height of the second mounting block 242 is a first height (namely, a size of the second mounting block 242 in the second direction X).

The first distance is greater than or equal to a sum of the second distance and the first height.

As shown in FIG. 35, for example, in the third direction Z, a distance between the third hole wall 2333 and the fourth hole wall 2334 of the first mounting hole 2323 is a third distance (namely, a size of the first mounting hole 2323 in the third direction Z). In the third direction Z, a distance between the third side surface 2413 and the fourth side surface 2414 of the first mounting block 241 is a fourth distance (namely, a size of the first mounting block 241 in the third direction Z). In the third direction Z, a height of the positioning block 243 is a second height (namely, a size of the positioning block 243 in the third direction Z).

The third distance is greater than or equal to a sum of the fourth distance and the second height.

As shown in FIG. 35, for example, in the third direction Z, a distance between the third hole wall 2337 and the fourth hole wall 2338 of the second mounting hole 2324 is a fifth distance (namely, a size of the second mounting hole 2324 in the third direction Z). A distance between the third side surface 2423 and the fourth side surface 2424 of the second mounting block 242 is a sixth distance (namely, a size of the second mounting block 242 in the third direction Z). The fifth distance is greater than or equal to a sum of the sixth distance and the second height.

It may be understood that in the assembling process of the stopper bracket 23 and the image stabilization bracket 213, the stopper bracket 23 may be first moved relative to the image stabilization bracket 213 in the second direction X, so that the first mounting block 241 is assembled into the first mounting hole 2323. Then, the stopper bracket 23 is moved relative to the image stabilization bracket 213 in the first direction Y, so that the second mounting block 242 is assembled into the second mounting hole 2324. Then, the stopper bracket 23 is moved relative to the image stabilization bracket 213 in the third direction Z, so that the positioning block 243 is inserted into the positioning hole 2325. Finally, the first mounting hole 2323 and the second mounting hole 2324 may be filled with adhesives, so that the first mounting block 241 is connected to the hole walls of the first mounting hole 2323 through adhesive bonding, and the second mounting block 242 is connected to the hole walls of the second mounting hole 2324 through adhesive bonding. Therefore, the stopper bracket 23 can be stably connected to the image stabilization bracket 213. It may be understood that in the assembling process of the stopper bracket 23 and the image stabilization bracket 213 in this implementation, the stopper bracket 23 is prevented from deforming due to extrusion.

It may be understood that in this implementation, the stopper bracket 23 can be stably connected to the image stabilization bracket 213 through fitting between the first mounting block 241 and the first mounting hole 2323, fitting between the second mounting block 242 and the second mounting hole 2324, and fitting between the positioning block 243 and the positioning hole 2325.

The foregoing specifically describes several implementations of the voice coil motor 1 with reference to related accompanying drawings. The following specifically describes several implementations of the voice coil motor 1 and the module circuit board 3 with reference to related accompanying drawings.

FIG. 37 is a partial sectional diagram of the camera module 100 shown in FIG. 3 in an implementation.

As shown in FIG. 37, for example, the module circuit board 3 is provided with a first avoidance space 3b, and an opening of the first avoidance space 3b is located on a surface, facing the base 10, of the module circuit board 3. The first avoidance space 3b may be of a slot structure or a hole structure.

The insulation body 2131 of the image stabilization bracket 213 includes a fastening portion 126. One end of the third support piece 224 is fastened to the fastening portion 126. In this implementation, the fastening hole 2137 inserted into the third support piece 224 is located on the fastening portion 126.

In addition, the metal piece 12 of the base 10 includes a sinking portion 124. The sinking portion 124 is disposed opposite to the fastening portion 126. The sinking portion 124 sinks towards the first avoidance space 3b and is located in the first avoidance space 3b, and the sinking portion 124 encloses a second avoidance space 125. The second avoidance space 125 is configured to accommodate at least a part of the fastening portion 126, that is, at least a part of the fastening portion 126 is located in the second avoidance space 125.

It may be understood that in this implementation, the module circuit board 3 is provided with the first avoidance space 3b, so that the sinking portion 124 can sink towards the first avoidance space 3b and is located in the first avoidance space 3b, and the sinking portion 124 can enclose the second avoidance space 125. In this case, the fastening portion 126 that is of the image stabilization bracket 213 and that is fastened to one end of the third support piece 224 is disposed in the second avoidance space 125, so that a space can be reserved between the module circuit board 3 and the third support piece 224. The reserved space can be used to increase a length of the third support piece 224. In this way, in this implementation, overall strength of the base 10 can be improved via the metal piece 12, and the length of the third support piece 224 can be increased to a large extent without occupying the space between the module circuit board 3 and the third support piece 224, so that stability of the focusing bracket 221 can be improved to a large extent via the third support piece 224 with a long length, that is, the focusing bracket 221 is not easily tipped over.

It may be understood that when the third support piece 224 tilts at a first angle in a specific direction by using the bottom as a fixed point, the top of the third support piece 224 with a longer length tilts in a shorter distance, and the top of the third support piece 224 with a shorter length tilts in a longer distance. Therefore, compared with the third support piece 224 with the shorter length, the third support piece 224 with the longer length has better guiding precision. However, the length of the third support piece 224 in this implementation is long. Therefore, the third support piece 224 in this implementation has better guiding precision.

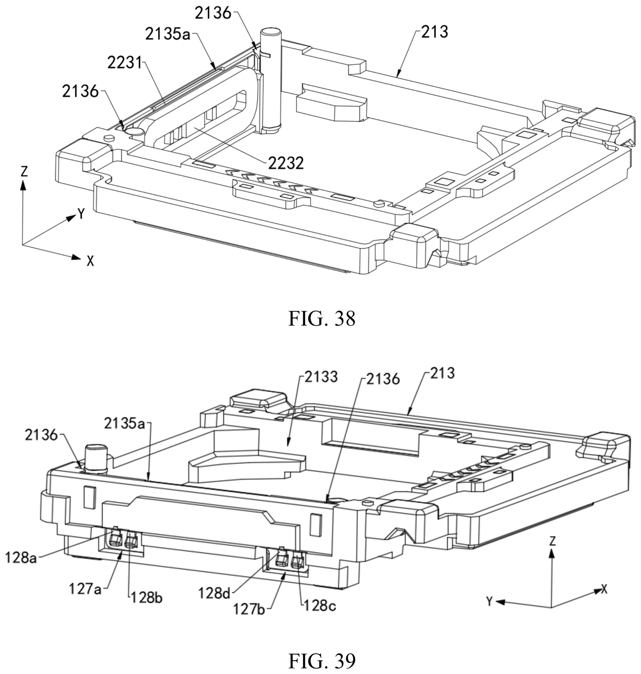

FIG. 38 is a diagram of a partial structure of the driving mechanism 20 shown in FIG. 6 in an implementation. FIG. 39 is a diagram of a partial structure of a part of the driving mechanism 20 shown in FIG. 38 at another angle.

As shown in FIG. 38 and FIG. 39, in some implementations, the fourth side portion 2131d of the image stabilization bracket 213 is further provided with a first communication hole 127a and a second communication hole 127b that are spaced apart. The first communication hole 127a and the second communication hole 127b penetrate the fourth side portion 2131d in the second direction X. In this case, both the first communication hole 127a and the second communication hole 127b enable the movable space 2133 to communicate with the exterior of the image stabilization bracket 213. The first communication hole 127a is located between one first sliding shaft slot 2136 and the first mounting slot 2135a. The second communication hole 127b is located between the other first sliding shaft slot 2136 and the third mounting slot 2135c.

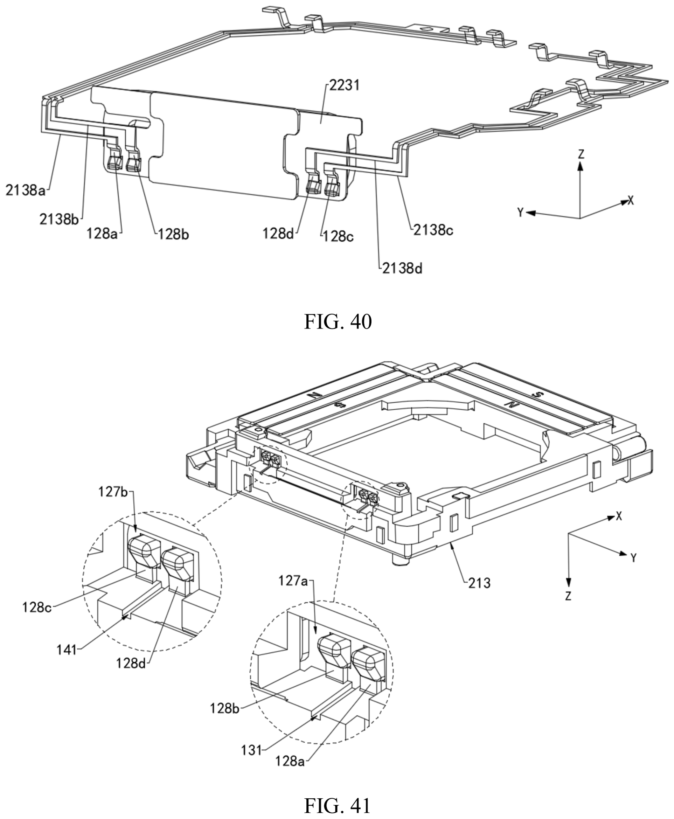

FIG. 40 is a diagram of a partial structure of the driving mechanism 20 shown in FIG. 39 in an implementation.

As shown in FIG. 39 and FIG. 40, for example, a first end portion 128a of the first conductive member 2138a and a first end portion 128b of the second conductive member 2138b extend into the first communication hole 127a. The first end portion 128c of the first conductive member 2138a and the first end portion 128d of the second conductive member 2138b may be spaced apart.

In addition, a first end portion 128c of the third conductive member 2138c and a first end portion 128d of the fourth conductive member 2138d extend into the second communication hole 127b. The first end portion 128c of the third conductive member 2138c and the first end portion 128d of the fourth conductive member 2138d may be spaced apart.

It may be understood that in this implementation, the image stabilization bracket 213 is provided with both the first communication hole 127a and the second communication hole 127b. In another implementation, the image stabilization bracket 213 may be provided with only the first communication hole 127a or the second communication hole 127b. In this case, the first end portion 128a of the first conductive member 2138a and the first end portion 128b of the second conductive member 2138b extend into the first communication hole 127a, or the first end portion 128c of the third conductive member 2138c and the first end portion 128d of the fourth conductive member 2138d extend into the second communication hole 127b.

As shown in FIG. 38 to FIG. 40, for example, the first end portion 128a of the first conductive member 2138a may be electrically connected to the negative electrode of the power supply of the focusing drive chip 2232 via the focusing circuit board 2231. The first end portion 128b of the second conductive member 2138b may be electrically connected to the positive electrode of the power supply of the focusing drive chip 2232 via the focusing circuit board 2231. The first end portion 128c of the third conductive member 2138c may be electrically connected to the SDA end of the I2C signal of the focusing drive chip 2232 via the focusing circuit board 2231. The first end portion 128d of the fourth conductive member 2138d may be electrically connected to the SCL end of the I2C signal of the focusing drive chip 2232 via the focusing circuit board 2231. In another implementation, the first conductive member 2138a, the second conductive member 2138b, the third conductive member 2138c, and the fourth conductive member 2138d may also be used as transmission channels of other functions. This is not specifically limited in this application.

FIG. 41 is a diagram of a partial structure of a part of the driving mechanism 20 shown in FIG. 38 at another angle.

Refer to FIG. 41. With reference to FIG. 40, for example, a hole wall of the first communication hole 127a is provided with a first isolation groove 131. The first isolation groove 131 is located between the first end portion 128a of the first conductive member 2138a and the first end portion 128b of the second conductive member 2138b.

It may be understood that the first isolation groove 131 may be used to avoid, when the image stabilization bracket 213 is carbonized at a high temperature, a micro short circuit occurred between the first end portion 128a of the first conductive member 2138a and the first end portion 128b of the second conductive member 2138b.

Refer to FIG. 41. With reference to FIG. 40, for example, a hole wall of the second communication hole 127b is provided with a second isolation groove 141. The second isolation groove 141 is located between the first end portion 128c of the third conductive member 2138c and the first end portion 128d of the fourth conductive member 2138d.

It may be understood that the second isolation groove 141 may be used to avoid, when the image stabilization bracket 213 is carbonized at a high temperature, a micro short circuit occurred between the first end portion 128c of the third conductive member 2138c and the first end portion 128d of the fourth conductive member 2138d.

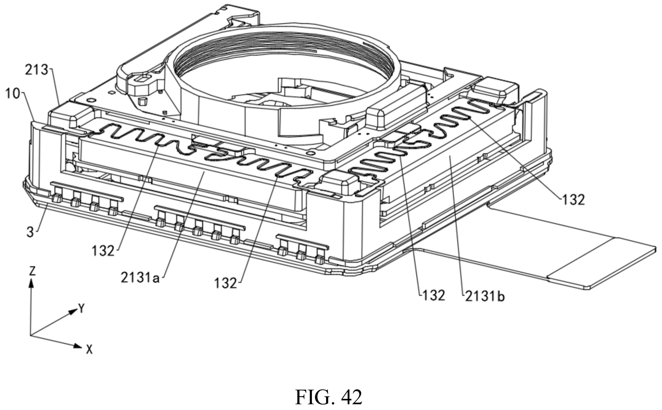

FIG. 42 is a diagram of a partial structure of the camera module 100 shown in FIG. 3 in some implementations.

As shown in FIG. 42, in some embodiments, the camera module 100 includes a plurality of second springs 132. In this implementation, it is shown that there are four second springs 132. In another implementation, a quantity of the second springs 132 is not specifically limited.

An arrangement plane of the plurality of second springs 132 may be perpendicular to the third direction Z, and is located on a side, backing the module circuit board 3, of the image stabilization bracket 213. To be specific, the plurality of second springs 132 may be arranged on the X-Y plane. Some second springs 132 connect the first side portion 2131a of the image stabilization bracket 213 to the base 10, and the other second springs 132 connect the second side portion 2131b of the image stabilization bracket 213 to the base 10. The plurality of second springs 132 may be arranged in spaces above the first side portion 2131a and the second side portion 2131b of the image stabilization bracket 213, to improve space utilization of the camera module 100. The plurality of second springs 132 may be configured to provide, when the image stabilization bracket 213 moves relative to the base 10 and leaves a balanced position, an elastic force to enable the image stabilization bracket 213 move back to the balanced position. In some embodiments, the second spring 132 may be made of a conductive material, to provide a signal transmission function.

In addition, with reference to FIG. 38 and FIG. 40, the first conductive member 2138a, the second conductive member 2138b, the third conductive member 2138c, and the fourth conductive member 2138d of the image stabilization bracket 213 may be electrically connected to the plurality of second springs 132 in a one-to-one correspondence, and are electrically connected to the module circuit board 3 via the plurality of second springs 132 and conductive members of the base 10. In this way, the focusing drive chip 2232 may be electrically connected to the module circuit board 3 via the focusing circuit board 2231, the first conductive member 2138a of the image stabilization bracket 213, the second conductive member 2138b of the image stabilization bracket 213, the third conductive member 2138c of the image stabilization bracket 213, the fourth conductive member 2138d of the image stabilization bracket 213, the plurality of second springs 132, and the conductive members of the base 10.

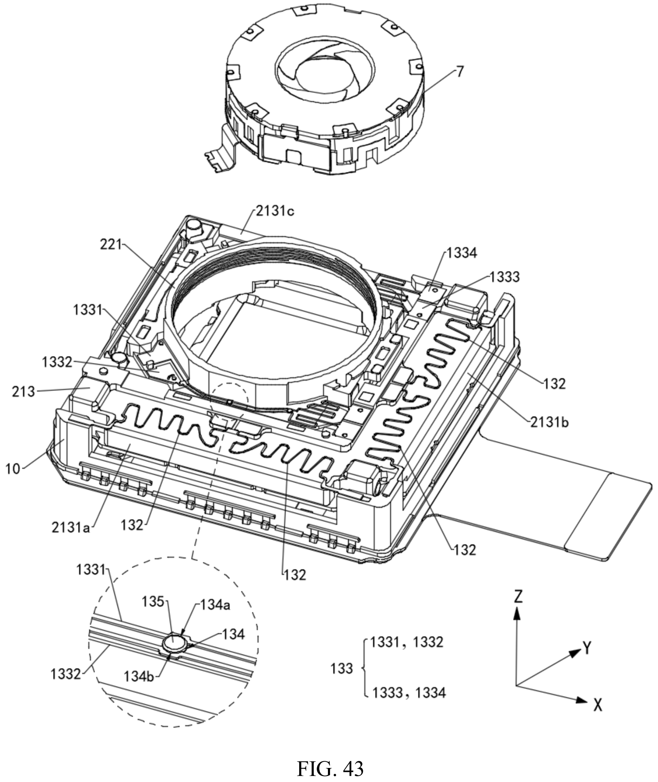

FIG. 43 is a diagram of a partial structure of the camera module 100 shown in FIG. 3 in some implementations.

As shown in FIG. 43, in some embodiments, the camera module 100 includes a plurality of first springs 133. An arrangement plane of the plurality of first springs 133 may be perpendicular to the third direction Z, and is located on a side, backing the module circuit board 3, of the focusing bracket 221. To be specific, the plurality of first springs 133 may be arranged on the X-Y plane. The plurality of first springs 133 connect the image stabilization bracket 213 to the focusing bracket 221. The plurality of first springs 133 are configured to provide, when the focusing bracket 221 moves relative to the image stabilization bracket 213 and leaves a balanced position, an elastic force to enable the focusing bracket 221 move back to the balanced position. In some embodiments, the first spring 133 may be made of a conductive material, to provide a signal transmission function.

For example, the plurality of first springs 133 include a first sub-spring 1331, a second sub-spring 1332, a third sub-spring 1333, and a fourth sub-spring 1334 that are spaced apart.

For example, the first sub-spring 1331 may be used as a transmission channel of a negative electrode of a power supply of a drive chip of the variable aperture 7. The second sub-spring 1332 may be used as a transmission channel of a positive electrode of the power supply of the drive chip of the variable aperture 7. The third sub-spring 1333 may be used as a transmission channel of an SDA signal of the drive chip of the variable aperture 7. The fourth sub-spring 1334 may be used as a transmission channel of an SCL signal of the drive chip of the variable aperture 7.

With reference to FIG. 38 and FIG. 40, for example, the first sub-spring 1331, the second sub-spring 1332, the third sub-spring 1333, and the fourth sub-spring 1334 may be electrically connected to the first conductive member 2138a, the second conductive member 2138b, the third conductive member 2138c, and the fourth conductive member 2138d of the image stabilization bracket 213 in a one-to-one correspondence, and are electrically connected to the module circuit board 3 via the plurality of second springs 132 and the conductive members of the base 10.

As shown in FIG. 43, the first sub-spring 1331 and the second sub-spring 1332 are adjacently disposed. FIG. 43 shows that the first sub-spring 1331 and the second sub-spring 1332 are located on a same side of the focusing bracket 221, and are disposed close to the first side portion 2131a of the image stabilization bracket 213.

A part of the first sub-spring 1331 is recessed in a direction away from the second sub-spring 1332, to form a first recess region 134a. A part of the second sub-spring 1332 is recessed in a direction away from the first sub-spring 1331, to form a second recess region 134b. The first recess region 134a and the second recess region 134b enclose a first adhesive dispensing space 134. The first adhesive dispensing space 134 is provided with a first adhesive material 135. In this case, the first adhesive material 135 is connected to the first sub-spring 1331 and the second sub-spring 1332.

It may be understood that the first sub-spring 1331 and the second sub-spring 1332 are connected via the first adhesive material 135, so that the first sub-spring 1331 and the second sub-spring 1332 do not easily shake. This improves stability of connecting the first sub-spring 1331 to the second sub-spring 1332. In addition, compared with the adhesive dispensing space enclosed by the first sub-spring 1331 and the second sub-spring 1332 in parallel, the adhesive dispensing space in this implementation has a larger volume. In this way, in an adhesive dispensing process, an adhesive does not easily overflow to a side, away from the second sub-spring 1332, of the first sub-spring 1331. In this case, in a focusing process of the focusing bracket 221, the first adhesive material 135 is not prone to delamination due to impact with the focusing bracket 221. In this implementation, stability and reliability of connecting the first sub-spring 1331 and the second sub-spring 1332 are better. Certainly, in the adhesive dispensing process, the adhesive does not easily overflow to a side, away from the first sub-spring 1331, of the second sub-spring 1332. In this case, in an image stabilization process of the image stabilization bracket 213, the first adhesive material 135 is not prone to delamination due to impact with the image stabilization bracket 213. In this implementation, stability and reliability of connecting the first sub-spring 1331 and the second sub-spring 1332 are better.

As shown in FIG. 43, the third sub-spring 1333 and the fourth sub-spring 1334 are adjacently disposed. FIG. 43 shows that the third sub-spring 1333 and the fourth sub-spring 1334 are located on a same side of the focusing bracket 221, and are disposed close to the third side portion 2131c of the image stabilization bracket 213. It may be understood that for a manner of connecting the third sub-spring 1333 and the fourth sub-spring 1334, refer to a manner of connecting the first sub-spring 1331 and the second sub-spring 1332. Details are not described herein.

It should be noted that embodiments in this application and features in embodiments may be combined with each other without a conflict, and any combination of features in different embodiments also falls within the protection scope of this application. In other words, the foregoing described plurality of embodiments may be further combined based on an actual requirement.

It should be noted that all the foregoing accompanying drawings are example figures of this application, and do not represent actual sizes of products. In addition, a size proportional relationship between components in the accompanying drawings is not intended to limit an actual product in this application.

The foregoing descriptions are merely some embodiments and implementations of this application, but are not intended to limit the protection scope of this application. Any variation or replacement readily figured out by a person skilled in the art within the technical scope disclosed in this application shall fall within the protection scope of this application. Therefore, the protection scope of this application should be subject to the protection scope of the claims.

## Claims

1. A camera module (100), comprising a voice coil motor (1), a lens (2), a module circuit board (3), and an image sensor (4), wherein
the voice coil motor (1) comprises a base (10), a driving mechanism (20), and a housing (30), the lens (2) is mounted in the driving mechanism (20), the driving mechanism (20) is connected to the base (10), both the base (10) and the image sensor (4) are disposed on the module circuit board (3), the image sensor (4) is located on a light exit side of the lens (2), and the housing (30) is fastened to the base (10) and covers at least a part of the driving mechanism (20);
the base (10) comprises a plastic piece (11) and a metal piece (12), and the metal piece (12) is fastened to the plastic piece (11); and
the housing (30) comprises a metal portion (36), the metal portion (36) is fastened to the metal piece (12), and the metal piece (12) is electrically connected to a ground pin (3a) of the module circuit board (3).

2. The camera module (100) according to claim 1, wherein the metal portion (36) is fastened to the metal piece (12) through laser welding.

3. The camera module (100) according to claim 2, wherein the housing (30) comprises a top plate (31) and a side frame (32), and the side frame (32) is connected to a periphery of the top plate (31); and
a surface, away from the top plate (31), of the side frame (32) is protrusively provided with a bump (35), and the bump (35) forms at least a part of the metal portion (36).

4. The camera module (100) according to claim 3, wherein the metal piece (12) comprises a fastening region (121) and a first connection region (122), and the first connection region (122) is connected to a periphery of the fastening region (121); and
the fastening region (121) is fastened to the plastic piece (11), the first connection region (122) extends out relative to a side surface (111) of the plastic piece (11), and the first connection region (122) is fastened to the bump (35) through laser welding.

5. The camera module (100) according to claim 4, wherein the metal piece (12) further comprises a second connection region (123), the second connection region (123) is connected to the periphery of the fastening region (121) and is spaced apart from the first connection region (122), and the second connection region (123) is exposed relative to the side surface (111) of the plastic piece (11); and
the second connection region (123) is fastened to the ground pin (3a) of the module circuit board (3) through tin soldering.

6. The camera module (100) according to claim 5, wherein the second connection region (123) bends in a direction away from the module circuit board (3), and is fastened to the side surface (111) of the plastic piece (11).

7. The camera module (100) according to any one of claims 1 to 6, wherein the voice coil motor (1) further comprises a damper (34), and a material of the damper (34) is an insulation material; and
the damper (34) is connected to an inner surface of the housing (30), and the damper (34) is disposed opposite to the driving mechanism (20).

8. The camera module (100) according to claim 7, wherein the damper (34) and the housing (30) form an integrated structure by using an injection molding technique.

9. The camera module (100) according to any one of claims 1 to 8, wherein the camera module (100) comprises an electronic component (5), and the electronic component (5) is fastened to the module circuit board (3) and is electrically connected to the module circuit board (3); and
at least a part of the metal piece (12) is exposed relative to a bottom surface (113) of the plastic piece (11) and is fastened to the module circuit board (3), and a part of the metal piece (12) surrounds the electronic component (5).

10. The camera module (100) according to claim 9, wherein the electronic component (5) comprises a drive chip (5a), the drive chip (5a) is electrically connected to the voice coil motor (1) via the module circuit board (3), and the drive chip (5a) is configured to perform an operation on image stabilization data, and/or focusing data of the voice coil motor (1), and/or control a current condition.

11. The camera module (100) according to any one of claims 1 to 10, wherein the driving mechanism (20) comprises an image stabilization bracket (213), a first image stabilization coil (2111), a first image stabilization magnetic piece (2112), a second image stabilization coil (2113), and a second image stabilization magnetic piece (2114);
the first image stabilization magnetic piece (2112) and the second image stabilization magnetic piece (2114) are spaced apart and fastened to the image stabilization bracket (213);
the image stabilization bracket (213) is movably connected to the plastic piece (11), the first image stabilization coil (2111) and the second image stabilization coil (2113) are spaced apart and fastened to the plastic piece (11), the first image stabilization coil (2111) is disposed facing the first image stabilization magnetic piece (2112) and configured to drive the image stabilization bracket (213) to move relative to the base (10) in a first direction, the second image stabilization coil (2113) is disposed facing the second image stabilization magnetic piece (2114) and configured to drive the image stabilization bracket (213) to move relative to the base (10) in a second direction, and the second direction intersects the first direction; and
the driving mechanism (20) further comprises a focusing bracket (21), a focusing magnetic piece (222), and a focusing coil (221), the focusing bracket (21) is located in an inner side of the image stabilization bracket (213), the focusing magnetic piece (222) is fastened to the focusing bracket (21), the focusing coil (221) is fastened to the image stabilization bracket (213), is disposed facing the focusing magnetic piece (222), and is configured to drive the focusing bracket (21) to move relative to the image stabilization bracket (213) in the third direction, and the third direction intersects both the second direction and the first direction.

12. The camera module (100) according to claim 11, wherein the driving mechanism (20) further comprises a guide bracket (212), and the guide bracket (212) is L-shaped;
the guide bracket (212) comprises a first support portion (2121), a first connection portion (2122), a second support portion (2123), a second connection portion (2124), and a third support portion (2125) that are sequentially connected, the first support portion (2121), the second support portion (2123), and the third support portion (2125) are connected to the plastic piece (11) via a plurality of first support pieces (214) and are connected to the image stabilization bracket (213) via a plurality of second support pieces (215), so that a direction of relative movement between the image stabilization bracket (213) and the guide bracket (212) is different from a direction of relative movement between the guide bracket (212) and the base (10); and
materials of the first connection portion (2122) and the second connection portion (2124) are metal materials.

13. The camera module (100) according to claim 12, wherein the guide bracket (212) comprises a metal frame (212a), a first plastic block (212b), a second plastic block (212c), and a third plastic block (212d);
the metal frame (212a) is L-shaped, the metal frame (212a) comprises a first long strip segment (2121a) and a second long strip segment (2122a), and a second end portion (2124a) of the first long strip segment (2121a) is connected to a first end portion (2125a) of the second long strip segment (2122a);
the first plastic block (212b) wraps a first end portion (2123a) of the first long strip segment (2121a), the second plastic block (212c) wraps the second end portion (2124a) of the first long strip segment (2121a) and the first end portion (2125a) of the second long strip segment (2122a), and the third plastic block (212d) wraps a second end portion (2126a) of the second long strip segment (2122a); and
the first end portion (2123a) of the first long strip segment (2121a) of the metal frame (212a) and the first plastic block (212b) form the first support portion (2121) of the guide bracket (212), the second end portion (2124a) of the first long strip segment (2121a) and the first end portion (2125a) of the second long strip segment (2122a) of the metal frame (212a), and the second plastic block (212c) form the second support portion (2123) of the guide bracket (212), the second end portion (2126a) of the second long strip segment (2122a) of the metal frame (212a) and the third plastic block (212d) form the third support portion (2125) of the guide bracket (212), a middle portion of the first long strip segment (2121a) of the metal frame (212a) forms the first connection portion (2122) of the guide bracket (212), and a middle portion of the second long strip segment (2122a) of the metal frame (212a) forms the second connection portion (2124) of the guide bracket (212).

14. The camera module (100) according to any one of claims 11 to 13, wherein the image stabilization bracket (213) comprises an insulation body (2131) and a metal insert (2132), and the metal insert (2132) is embedded in the insulation body (2131); and
the metal insert (2132) is grounded.

15. The camera module (100) according to claim 14, wherein the driving mechanism (20) comprises a focusing circuit board (2231) and a focusing drive chip (2232), the focusing coil (2221) and the focusing drive chip (2232) are fastened to the focusing circuit board (2231), and the focusing circuit board (2231) is fastened to the image stabilization bracket (213);
the image stabilization bracket (213) comprises a first conductive member (2138a), the first conductive member (2138a) is embedded in the insulation body (2131), and the first conductive member (2138a) is electrically connected to a negative electrode of a power supply of the focusing drive chip (2232) via the focusing circuit board (2231); and
the metal insert 2132 is electrically connected to the first conductive member (2138a).

16. The camera module (100) according to claim 15, wherein a surface of the metal insert (2132) is protrusively provided with a protrusion block (2132c), the first conductive member (2138a) is provided with a recess region (2138e), and the protrusion block (2132c) is located in the recess region (2138e) and contacts a wall surface of the recess region (2138e).

17. The camera module (100) according to claim 15 or 16, wherein the image stabilization bracket (213) further comprises a second conductive member (2138b), the second conductive member (2138b) is embedded in the insulation body (2131), and the second conductive member (2138b) is electrically connected to a positive electrode of the power supply of the focusing drive chip (2232) via the focusing circuit board (2231);
the image stabilization bracket (213) is provided with a first communication hole (127a), the first communication hole (127a) communicates with an interior and an exterior of the image stabilization bracket (213), and a first end portion (128a) of the first conductive member (2138a) and a first end portion (128b) of the second conductive member (2138b) extend into the first communication hole (127a); and
a hole wall of the first communication hole (127a) is provided with a first isolation groove (131), and the first isolation groove (131) is located between the first end portion (128a) of the first conductive member (2138a) and the first end portion (128b) of the second conductive member (2138b).

18. The camera module (100) according to any one of claims 14 to 17, wherein the metal insert (2132) is made of a magnetic conductive material, and both the first image stabilization magnetic piece (2112) and the second image stabilization magnetic piece (2114) are disposed opposite to the metal insert (2132).

19. The camera module (100) according to any one of claims 11 to 18, wherein the image stabilization bracket (213) is connected to the focusing bracket (21) via a plurality of third support pieces (224); and
the third support piece (224) comprises a shaft body (2241) and a protrusion (2242), the protrusion (2242) is protrusively disposed on a first end face (2244) of the shaft body (2241), a part of a circumferential side surface of the shaft body (2241) is fastened to the image stabilization bracket (213), and the protrusion 2242 is inserted into a fastening hole (2137) of the image stabilization bracket (213).

20. The camera module (100) according to claim 19, wherein the module circuit board (3) is provided with a first avoidance space (3b), and an opening of the first avoidance space (3b) is located on a surface, facing the base (10), of the module circuit board (3);
the image stabilization bracket (213) comprises a fastening portion (126), and the fastening hole (2137) is located in the fastening portion (126); and
the metal piece (12) comprises a sinking portion (124), the sinking portion (124) is disposed opposite to the fastening portion (126), the sinking portion (124) sinks towards the first avoidance space (3b) and is located in the first avoidance space (3b), the sinking portion (124) encloses a second avoidance space (125), and at least a part of the fastening portion (126) is located in the second avoidance space (125).

21. The camera module (100) according to any one of claims 11 to 20, wherein the camera module (100) comprises a first sub-spring (1331) and a second sub-spring (1332), and both the first sub-spring (1331) and the second sub-spring (1332) connect the image stabilization bracket (213) to the focusing bracket (221);
the first sub-spring (1331) and the second sub-spring (1332) are located on a same side of the focusing bracket (221) and are disposed adjacently; and
a part of the first sub-spring (1331) is recessed in a direction away from the second sub-spring (1332), to form a first recess region (134a), a part of the second sub-spring (1332) is recessed in a direction away from the first sub-spring (1331), to form a second recess region (134b), and the first recess region (134a) and the second recess region (134b) enclose a first adhesive dispensing space (134), and the first adhesive dispensing space (134) is provided with a first adhesive material (135).

22. The camera module (100) according to any one of claims 11 to 21, wherein the voice coil motor (1) further comprises a stopper bracket (23), the stopper bracket (23) comprises a top plate member (231) and a side frame (232), the side frame (232) is connected to a periphery of the top plate member (231), the top plate member (231) is fastened to a top surface of the image stabilization bracket (213), the side frame (232) is fastened to a side surface of the image stabilization bracket (213), and the image stabilization bracket (213) fits with the top plate member (231) of the stopper bracket (23), to limit a movement stroke of the focusing bracket (21) in the third direction;
the side frame (232) comprises a first side edge portion (2321) and a second side edge portion (2322), the second side edge portion (2322) is connected to the first side edge portion (2321), and the first side edge portion (2321) and the second side edge portion (2322) are respectively fastened on side surfaces of two adjacent side portions of the image stabilization bracket (213);
the top plate member (231) is provided with a positioning hole (2325), the first side edge portion (2321) is provided with a first mounting hole (2323), and the second side edge portion (2322) is provided with a second mounting hole (2324);
the side surfaces of the two adjacent side portions of the image stabilization bracket (213) are respectively protrusively provided with a first mounting block (241) and a second mounting block (242), the top surface of the image stabilization bracket (213) is protrusively provided with a positioning block (243), the first mounting block (241) is located in the first mounting hole (2323), the second mounting block (242) is located in the second mounting hole (2324), and the positioning block (243) is inserted into the positioning hole (2325);
in the second direction, a size of the first mounting hole (2323) is greater than a size of the first mounting block (241) and a size of the second mounting block (242), and in the third direction, a size of the first mounting hole (2323) is greater than a size of the first mounting block (241) and a size of the positioning block (243); and
in the third direction, a size of the second mounting hole (2324) is greater than a size of the second mounting block (242) and a size of the positioning block (243).

23. An electronic device (1000), comprising a device housing (200) and the camera module (100) according to any one of claims 1 to 22, wherein the camera module (100) is disposed in the device housing (200).
